# EUROPEAN PATENT APPLICATION

(11) **EP 2 597 869 A1**
(43) Date of publication of application: **29.05.2013**
(21) Application number: 11809620.5
(22) Date of filing: 15.07.2011
(51) Int. Cl.: H04N 7/173, G06F 13/00, H04L 12/56

(54) **CONTENT DISTRIBUTION DEVICE, CONTENT PLAYBACK DEVICE, CONTENT DISTRIBUTION SYSTEM, METHOD FOR CONTROLLING A CONTENT DISTRIBUTION DEVICE, CONTROL PROGRAM, AND RECORDING MEDIUM**

(30) Priority: 10.03.2011 JP 2011053614; 20.07.2010 JP 2010163367
(71) Applicant: Sharp Kabushiki Kaisha, Osaka-shi, Osaka 545-8522 (JP)
(72) Inventor: KANEKO, Takashi, Osaka 545-8522 (JP); TAKAHASHI, Maki, Osaka 545-8522 (JP); ITOH, Norio, Osaka 545-8522 (JP); OGISAWA, Yoshiaki, Osaka 545-8522 (JP); TOKUMO, Yasuaki, Osaka 545-8522 (JP); WATANABE, Shuhichi, Osaka 545-8522 (JP)
(74) Representative: Müller - Hoffmann & Partner
(86) International application number: PCT/JP2011/066279
(87) International publication number: WO 2012/011450

(57) **Abstract**

A content distributing device in the present invention receives a request message to request to transmit content. Then, in a case where a device transmitted the request message is a relaying device for receiving the content thus requested and possessing and transferring the content to another device, the content distributing device transmits the content thus requested to the relaying device, or, in a case where a device transmitted the request message is a content playing device for playing the content thus requested, the content distributing device transmits, to the content playing device, an instruction to acquire the content from a relaying device which has transmitted before the content thus requested.

## Description

### Technical Field

The present invention relates to a content distribution service in which a server distributes content to the client in response to a request from a client for playing the content.

### Background Art

There has been conventionally and widely used techniques for providing content, such as moving images, via communication networks. Examples of the techniques encompass a video on demand (VOD) service in which a request is transmitted from a client which plays content and, in response to the request, the content is distributed to the client from a server which manages the content. In the content distribution services such as the VOD, content is provided to clients by means of a streaming method, a download method, or a progressive download method.

The following Patent Literature 1 discloses an example where a content distribution service is provided by means of the progressive download method. The Patent Literature 1 discloses a content distribution service system in which a request for content is transmitted to a server from a client with use of HTTP and the client plays the content in response to the request.

### Citation List

### Patent Literature

Patent Literature 1: Japanese Patent Application Publication, Tokukai, No. 2005-110244 A(Publication Date: April 21, 2005)

### Summary of Invention

### Technical Problem

Whatever method (the streaming method, the download method, or the progressive download method) is used, it is necessary to continuously transfer a great amount of data to a client from a server in a case where a content distribution service is provided, specifically, different kinds of content are distributed to a plurality of clients. When the number of clients increases and a load of a network, which is used to transmit the data from the server, and a load of the server exceed their limits, the data transfer is, for example, delayed. This decreases quality of the content distribution service.

The present invention has been made in view of the aforementioned problem, and an object of the present invention is to achieve (A) a content distributing device, (B) a content playing device, (C) a content distributing system, (D) a method for controlling the content distributing device, (E) a controlling program, and (F) a recording medium, each of which, reduces, in a content distributing system in which content is distributed to a client from a server, reduces an increase in load of the server and a network and for data transmission from the server.

### Solution to Problem

In order to achieve aforementioned object, a content distributing device for transmitting, in response to a request, a content to a source which is a sender of the request, in accordance with the present invention, includes: determining means for determining whether the source is (A) a relaying device for receiving the content thus requested and possessing and transferring the content to a content playing device or (B) the content playing device for playing the content thus requested; content transmitting means for transmitting, in response to the request, the content thus requested to the relaying device in a case where the determining means determines that the source is a relaying device; content-storage-location information generating means for generating content-storage-location information by associating (A) the content transmitted by the content transmitting means with (B) an address of the relaying device, which is a destination to which the content is to be transmitted, or an address of the content playing device, to which the content is to be transferred from the relaying device; and content-acquiring-location instructing means for transmitting, in response to the request, an instruction to the content playing device which is the source in a case where the determining means determines that the source is a content playing device, which instruction is to acquire the content from (i) a relaying device indicated by an address that the content-storage-location information associates with the content thus requested or (ii) a content playing device indicated by an address that the content-storage-location information associates with the content thus requested.

In order to achieve aforementioned object, a method for controlling content distributing device for transmitting, in response to a request, a content to a source which is a sender of the request, the method in accordance with the present invention includes: a determining step of determining whether the source is (A) a relaying device for receiving the content thus requested and possessing and transferring the content to a content playing device or (B) the content playing device for playing the content thus requested; a content transmitting step of transmitting, in response to the request, the content thus requested to the relaying device in a case where it is determined that, in the determining step, the source is a relaying device; a content-storage-location information generating step of generating content-storage-location information by associating (A) the content transmitted in the content transmitting step with (B) an address of the relaying device, which is a destination to which the content is to be transmitted, or an address of the content playing device, to which the content is to be transferred from the relaying device; and a content-acquiring-location instructing step of transmitting, in response to the request, an instruction to the content playing device which is the source in a case where it is determined that, in the content-storage-location information generating step, the source is the content playing device, which instruction is to acquire the content from (i) a relaying device indicated by an address associated, in the content-storage-location information, with the content thus requested or (ii) a content playing device indicated by an address associated, in the content-storage-location information, with the content thus requested.

According to the arrangement, upon receipt of the request from the relaying device, the content transmitting means transmits the content thus requested to the relaying device which is the source, and the content-storage-location information generating means generates the content-storage-location information by associating (A) the content transmitted from the content transmitting means with (B) the address of the relaying device, which is the destination of the content, or the address of the content playing device, to which the content is transferred from the relaying device. Further, upon receipt of the request from the content playing device, the content-acquiring-location instructing means transmits, to the content playing device which is the source, the instruction to acquire the content from (I) the relaying device indicated by an address associated, in the content-storage-location information, with the content thus requested or (II) the content playing device indicated by an address associated, in the content-storage-location information, with the content thus requested. Here, the relaying device and the content playing device possess the content thus acquired, and the content-storage-location information is information indicating which relaying device or content playing device possesses a content.

That is, the content distributing device associates (A) a content which has been transmitted before with (B) a relaying device or a content playing device which possesses the content, and, upon receipt of a request from a certain content playing device, the content distributing device does not directly transmit the content to the content playing device which is the source, but transmits, to the content playing device which is the source, an instruction to acquire the content from a relaying device or a content playing device which possesses the content thus requested. The content playing device, which is the source, acquires the content thus requested from a designated relaying device or a designated content playing device. Therefore, if the designated relaying device or the designated content playing device possesses the content, it is possible to complete transmission and reception of the content with use of only (A) the content playing device which is the source and (B) the designated relaying device or the designated content playing device. That is, the content playing device, which is the source, can acquire content, without carrying out a process for transmitting the content.

This makes it possible to reduce (A) a load of a network, which is used to transmit data from the content distributing device, and (B) a load of the content distributing device. Among processes carried out by the content distributing device, the relaying device, and the content playing device, a process for transmitting and receiving the content is a process which applies the heaviest load, and the process applies the heaviest load of the network among the content distributing device, the relaying device, and the content playing device. However, even if, for example, the number of content playing devices is increased and the number of requests to the content distributing devices is therefore increased, it is possible to reduce (A) an increase in load of the network which is used to transmit data from the content distributing device and (B) an increase in load of the content distributing device. Therefore, a large number of content playing devices can acquire contents, without increasing throughput of the content distributing device or capacity of the network.

### Advantageous Effects of Invention

As described above, a content distributing device for transmitting, in response to a request, a content to a source which is a sender of the request, in accordance with the present invention, includes: determining means for determining whether the source is (A) a relaying device for receiving the content thus requested and possessing and transferring the content to a content playing device or (B) the content playing device for playing the content thus requested; content transmitting means for transmitting, in response to the request, the content thus requested to the relaying device in a case where the determining means determines that the source is a relaying device; content-storage-location information generating means for generating content-storage-location information by associating (A) the content transmitted by the content transmitting means with (B) an address of the relaying device, which is a destination to which the content is to be transmitted, or an address of the content playing device, to which the content is to be transferred from the relaying device; and content-acquiring-location instructing means for transmitting, in response to the request, an instruction to the content playing device which is the source in a case where the determining means determines that the source is a content playing device, which instruction is to acquire the content from (i) a relaying device indicated by an address that the content-storage-location information associates with the content thus requested or (ii) a content playing device indicated by an address that the content-storage-location information associates with the content thus requested.

A method for controlling content distributing device for transmitting, in response to a request, a content to a source which is a sender of the request, the method in accordance with the present invention includes: a determining step of determining whether the source is (A) a relaying device for receiving the content thus requested and possessing and transferring the content to a content playing device or (B) the content playing device for playing the content thus requested; a content transmitting step of transmitting, in response to the request, the content thus requested to the relaying device in a case where it is determined that, in the determining step, the source is a relaying device; a content-storage-location information generating step of generating content-storage-location information by associating (A) the content transmitted in the content transmitting step with (B) an address of the relaying device, which is a destination to which the content is to be transmitted, or an address of the content playing device, to which the content is to be transferred from the relaying device; and a content-acquiring-location instructing step of transmitting, in response to the request, an instruction to the content playing device which is the source in a case where it is determined that, in the content-storage-location information generating step, the source is the content playing device, which instruction is to acquire the content from (i) a relaying device indicated by an address associated, in the content-storage-location information, with the content thus requested or (ii) a content playing device indicated by an address associated, in the content-storage-location information, with the content thus requested.

This makes it possible to reduce (A) a load of the network, which is used to transmit data from the content distributing device and (B) a load of the content distributing device.

Additional objects, features, and strengths of the present invention will be made clear by the description below. Further, the advantages of the present invention will be evident from the following explanation in reference to the drawings.

### Brief Description of Drawings

Fig. 1

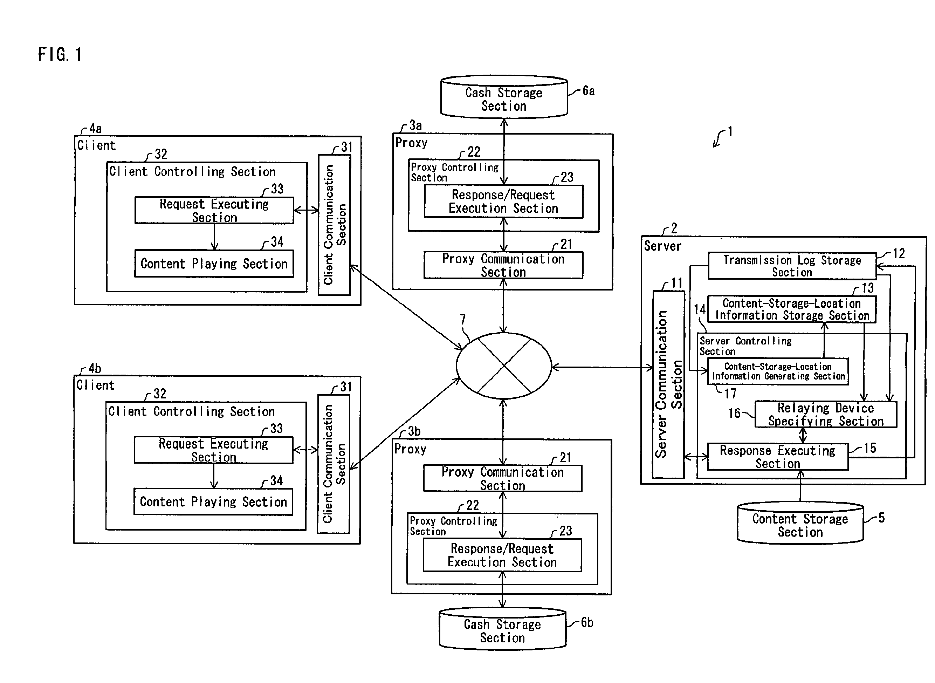

   Fig. 1 is a view illustrating Embodiment 1 of the present invention, and illustrates a schematic configuration of a content distributing system in accordance with Embodiment 1 and main configurations of devices constituting the content distributing system.
Fig. 2

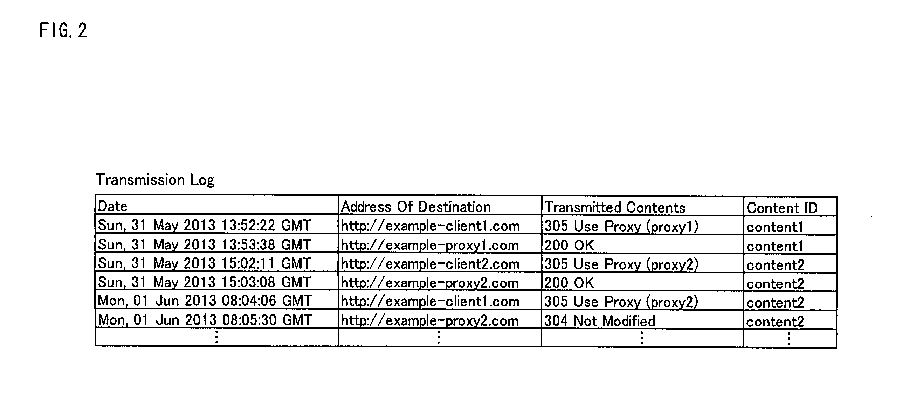

   Fig. 2 is a view showing an exemplary transmission log stored in a transmission log storage section included in the content distributing system.
Fig. 3

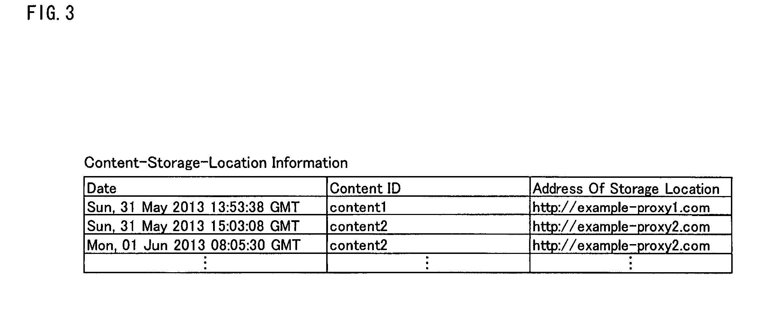

   Fig. 3 is a view illustrating exemplary content-storage-location information stored in a content-storage-location information storage section included in the content distributing system.
Fig. 4

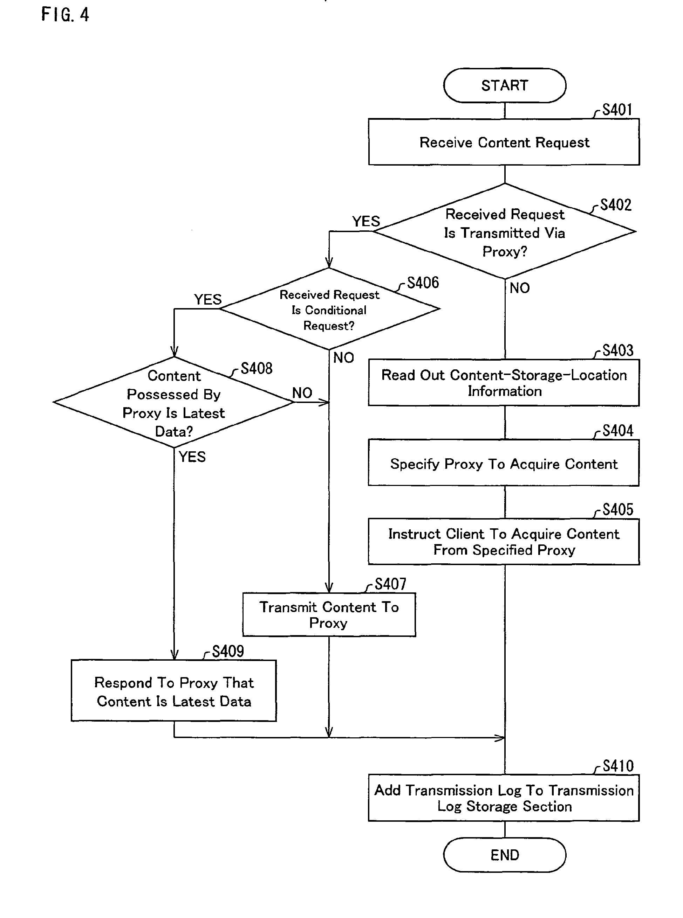

   Fig. 4 is a flowchart showing an exemplary process which is carried out by a server constituting the content distributing system.
Fig. 5

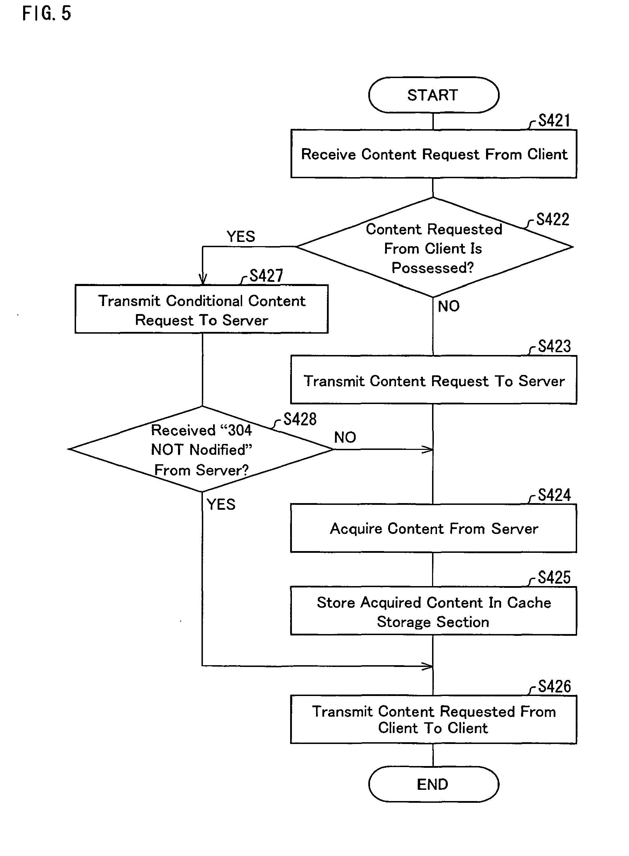

   Fig. 5 is a flowchart showing an exemplary process which is carried out by a proxy constituting the content distributing system.
Fig. 6

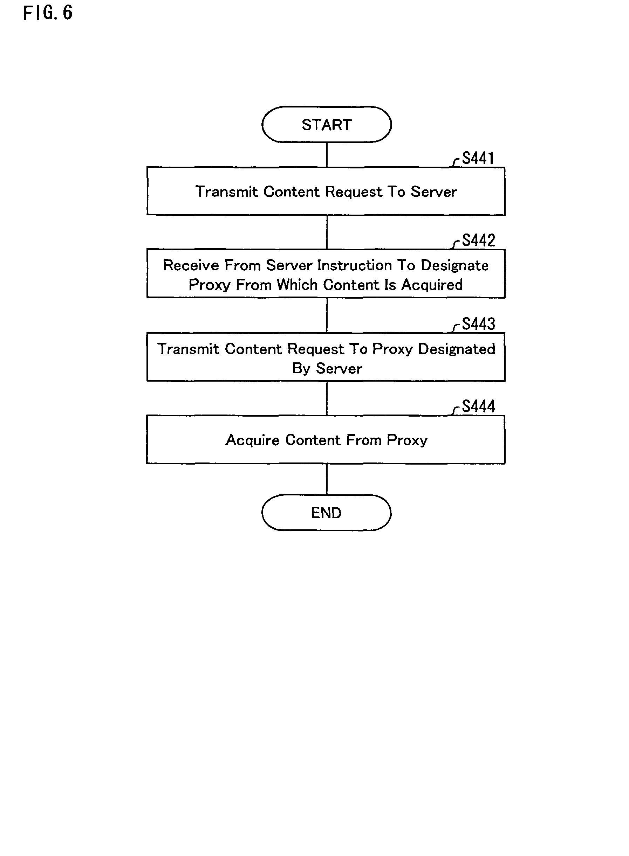

   Fig. 6 is a flowchart showing an exemplary process which is carried out by a client constituting the content distributing system.
Fig. 7

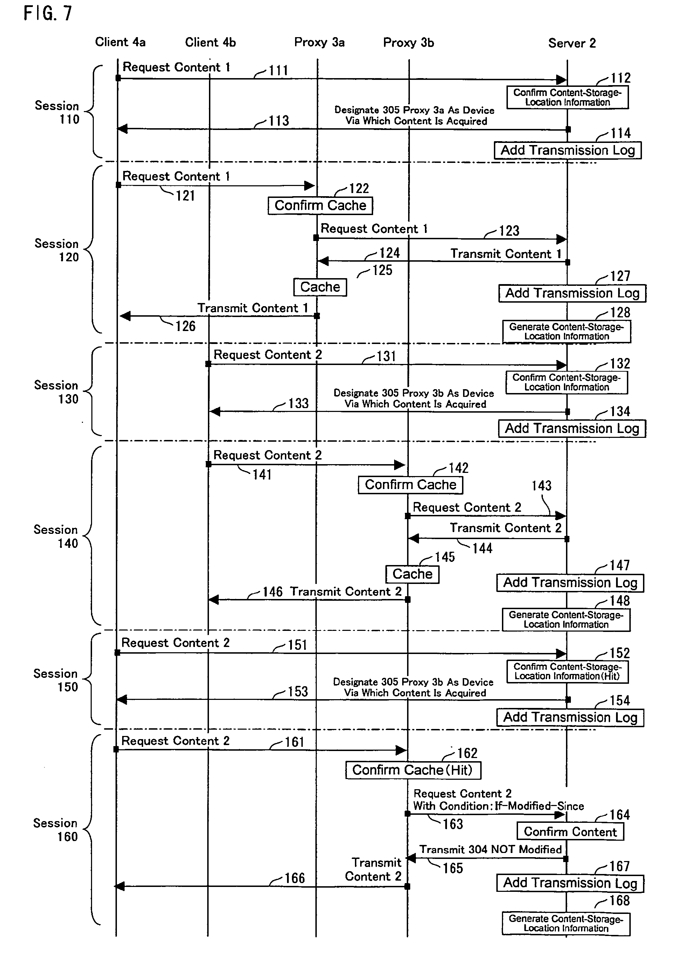

   Fig. 7 is a view illustrating an exemplary operation sequence of a content distributing system in Example of Embodiment 1.
Fig. 8

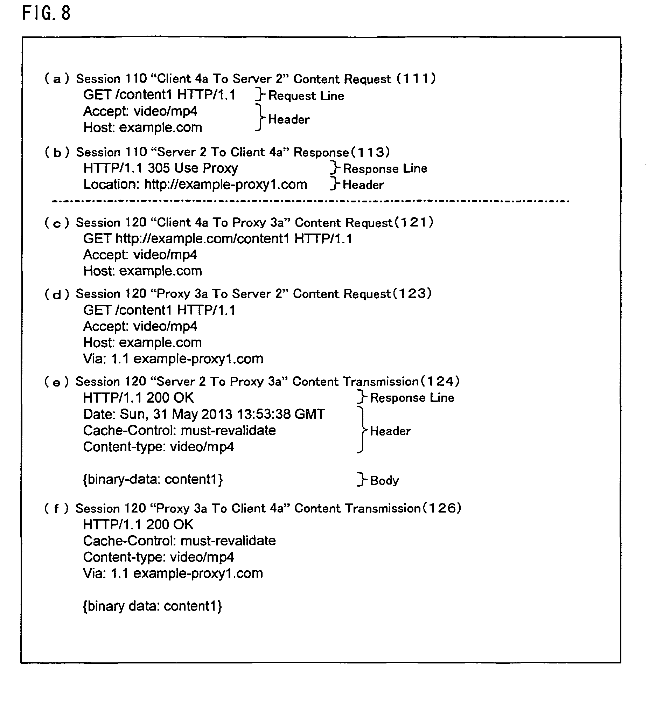

   Fig. 8 is a view illustrating exemplary HTTP messages which are transmitted/received as a request or a response. (a), (c), and (d) of Fig. 8 show HTTP messages of respective requests illustrated in Fig. 7, and (b), (e), and (f) of Fig. 8 show HTTP messages of respective responses illustrated in Fig. 7.
Fig. 9

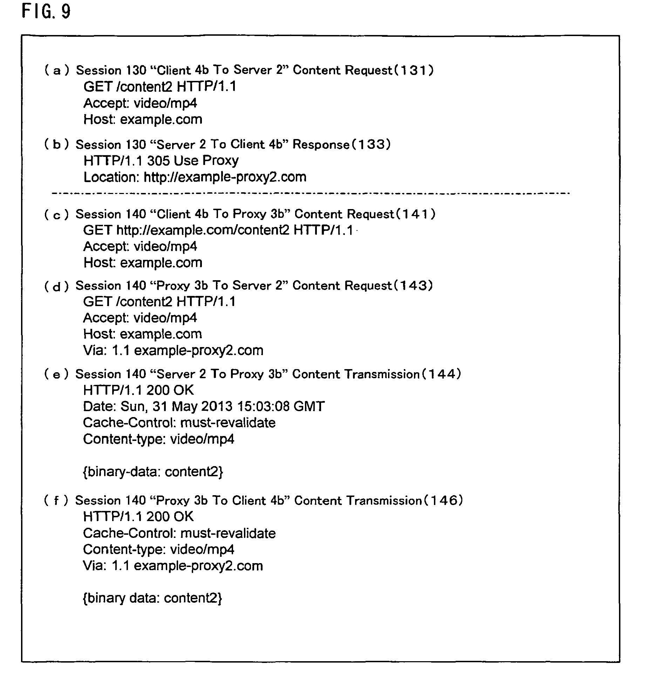

   Fig. 9 is a view illustrating exemplary HTTP messages which are transmitted/received as a request or a response. (a), (c), and (d) of Fig. 9 show HTTP messages of respective requests illustrated in Fig. 7, and (b), (e), and (f) of Fig. 9 show HTTP messages of respective responses illustrated in Fig. 7.
Fig. 10

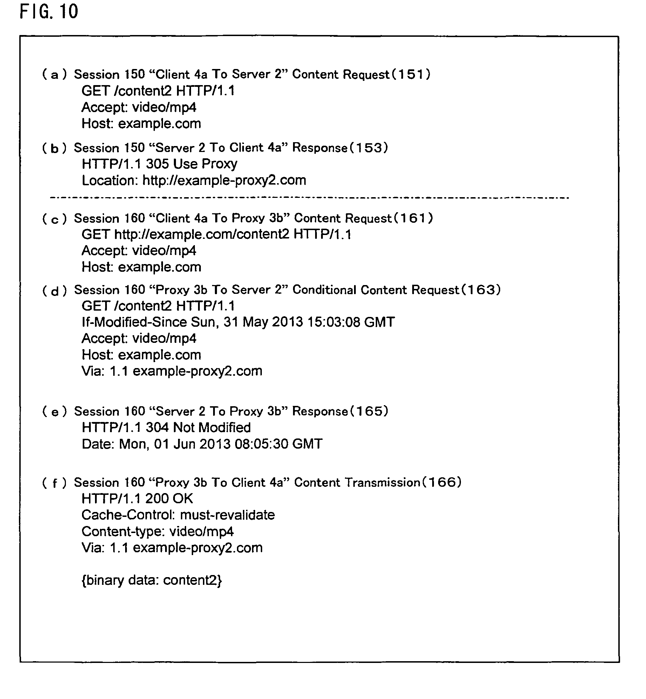

   Fig. 10 is a view illustrating exemplary HTTP messages which are transmitted/received as a request or a response. (a), (c), and (d) of Fig. 10 show HTTP messages of respective requests illustrated in Fig. 7, and (b), (e), and (f) of Fig. 10 show HTTP messages of respective responses illustrated in Fig. 7.
Fig. 11

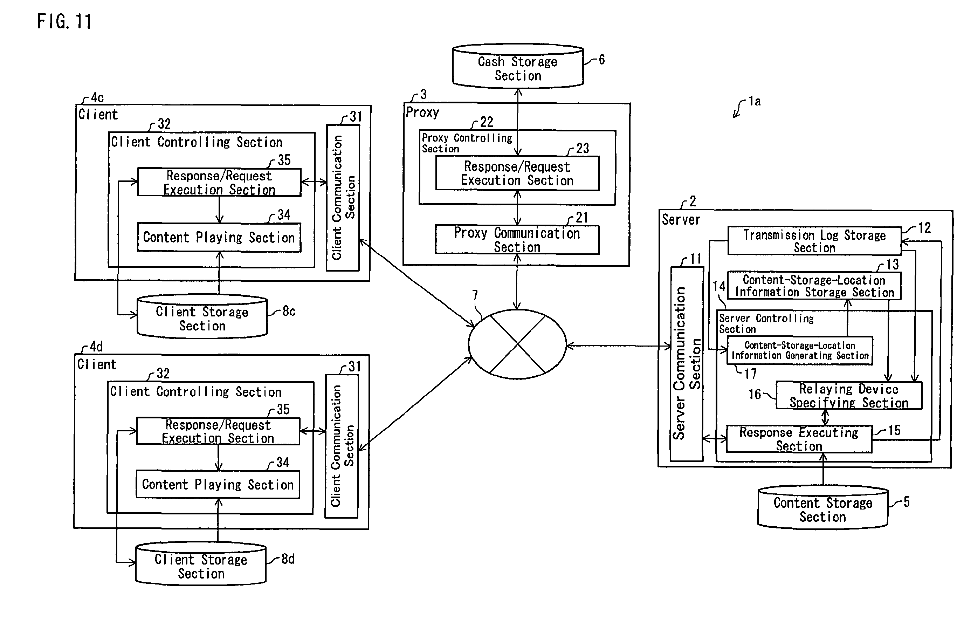

   Fig. 11 is a view illustrating Embodiment 2 of the present invention, and illustrates a schematic configuration of a content distributing system in accordance with Embodiment 2 and main configurations of devices constituting the content distributing system.
Fig. 12

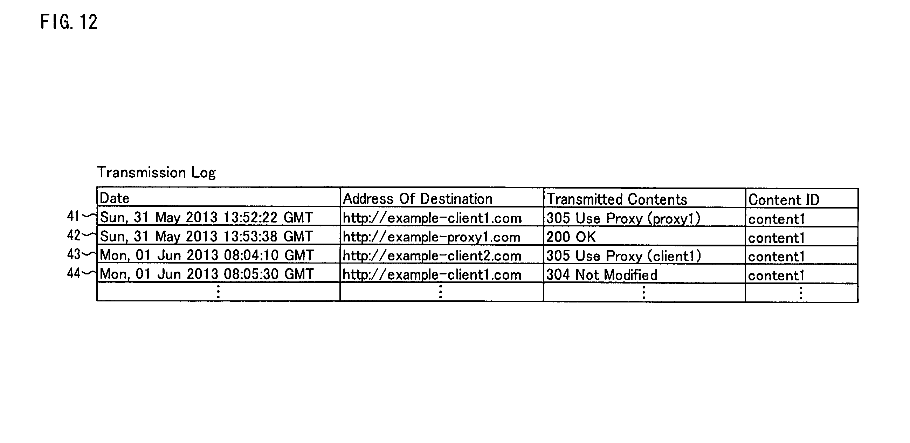

   Fig. 12 is a view showing an exemplary transmission log stored in a transmission log storage section included in the content distributing system.
Fig. 13

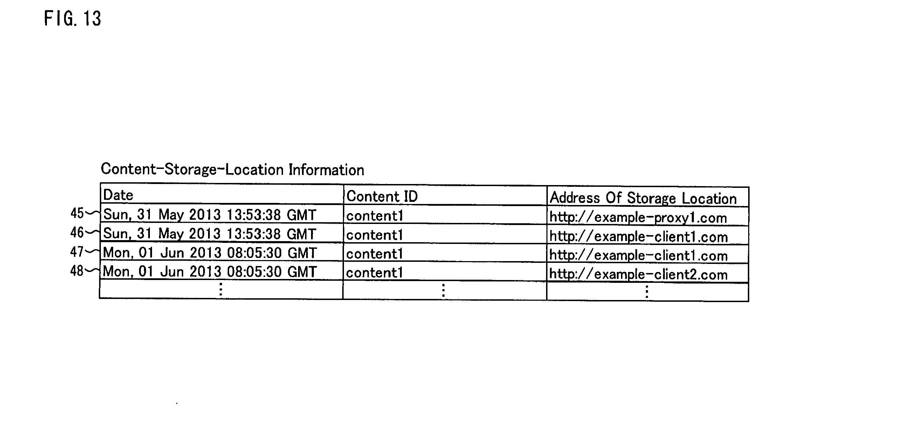

   Fig. 13 is a view illustrating exemplary content-storage-location information stored in a content-storage-location information storage section included in the content distributing system.
Fig. 14

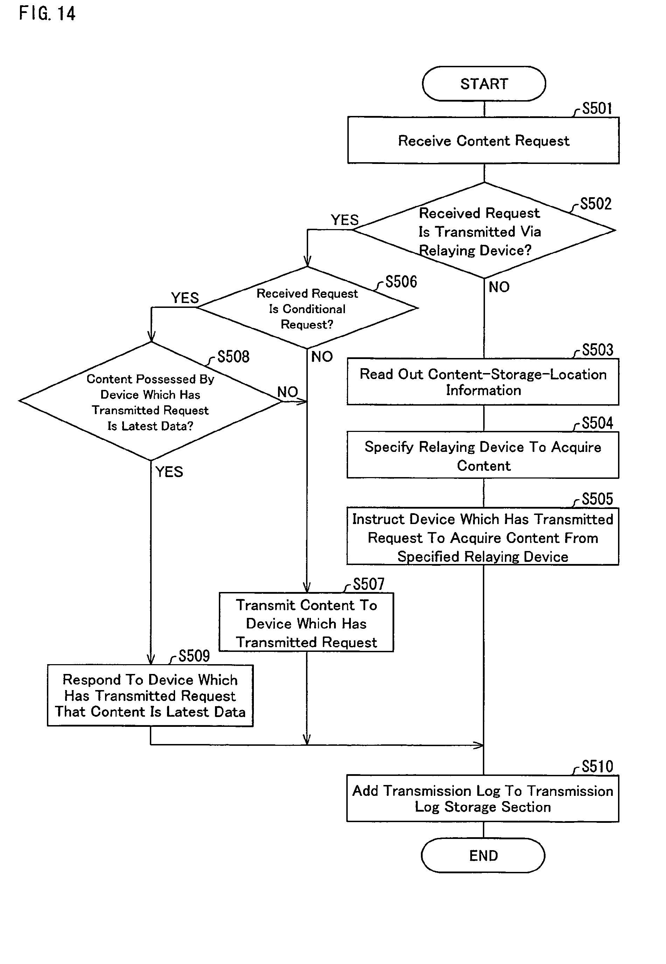

   Fig. 14 is a flowchart showing an exemplary process which is carried out by a server constituting the content distributing system.
Fig. 15

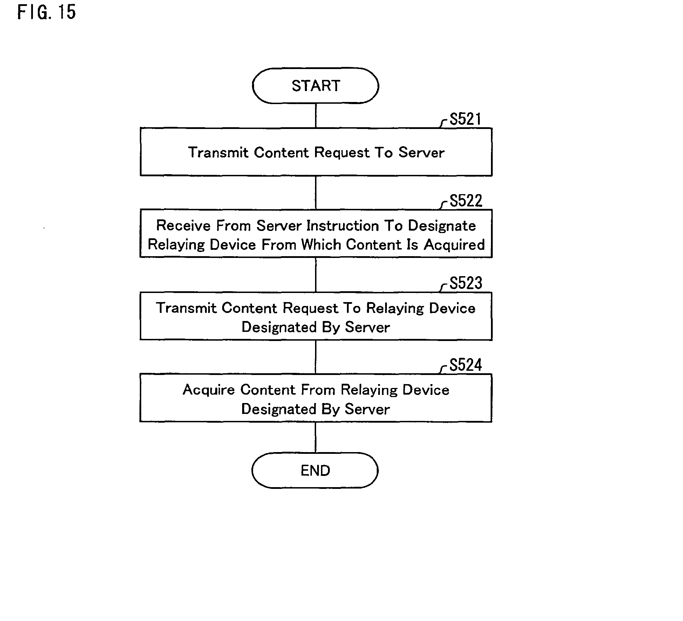

   Fig. 15 is a flowchart showing an exemplary process which is carried out by a client which serves as a content playing device and constitutes the content distributing system.
Fig. 16

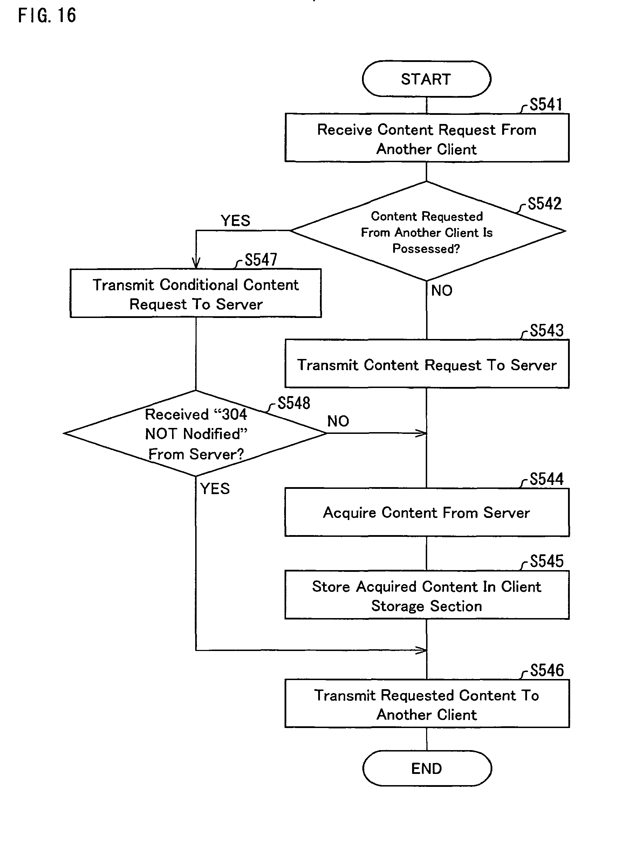

   Fig. 16 is a flowchart showing an exemplary process which is carried out by a client which serves as a relaying device and constitutes the content distributing system.
Fig. 17

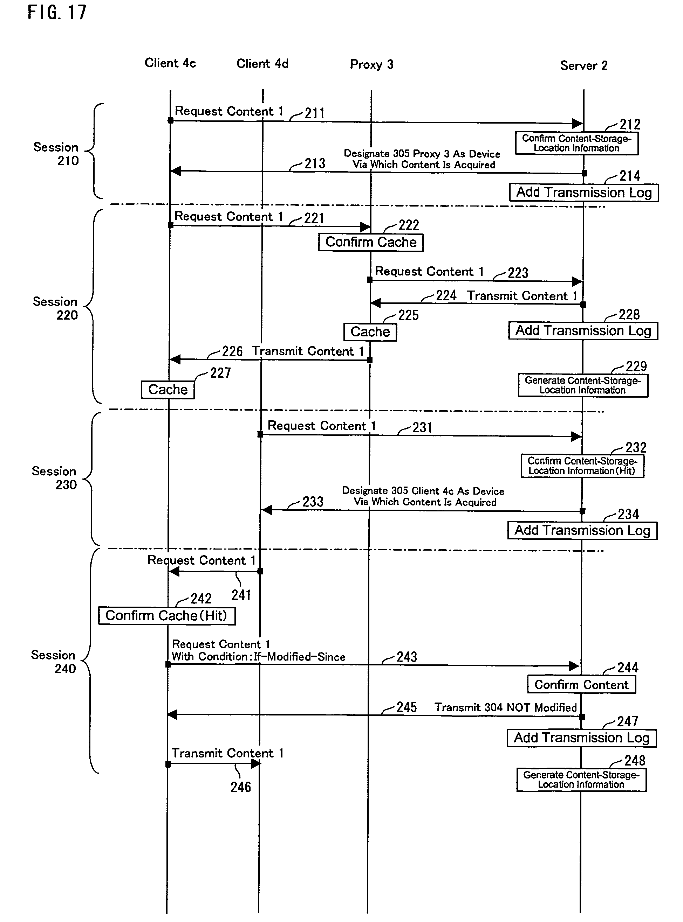

   Fig. 17 is a view illustrating an exemplary operation sequence of a content distributing system in Example of Embodiment 2.
Fig. 18

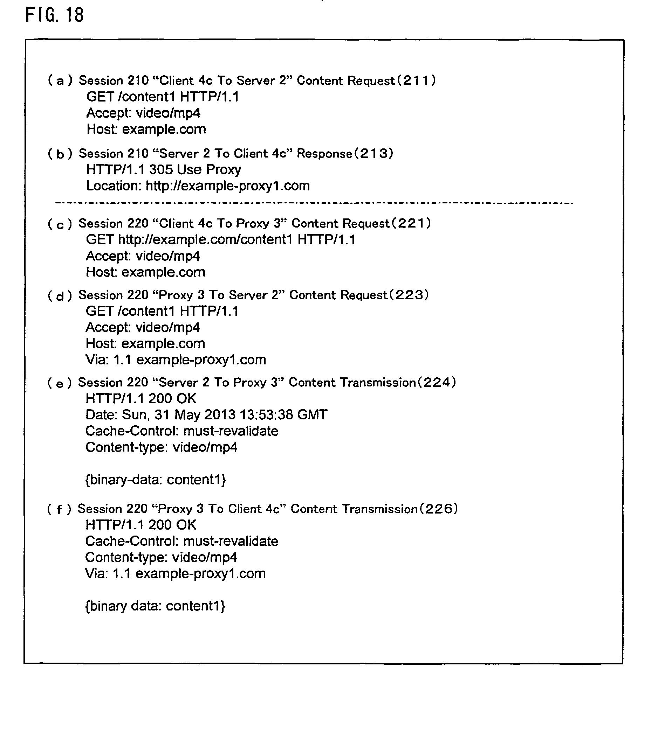

   Fig. 18 is a view illustrating example HTTP messages which are transmitted/received as a request or a response. (a), (c), and (d) of Fig. 18 show HTTP messages of respective requests illustrated in Fig. 17, and (b), (e), and (f) of Fig. 18 show HTTP messages of respective responses illustrated in Fig. 17.
Fig. 19

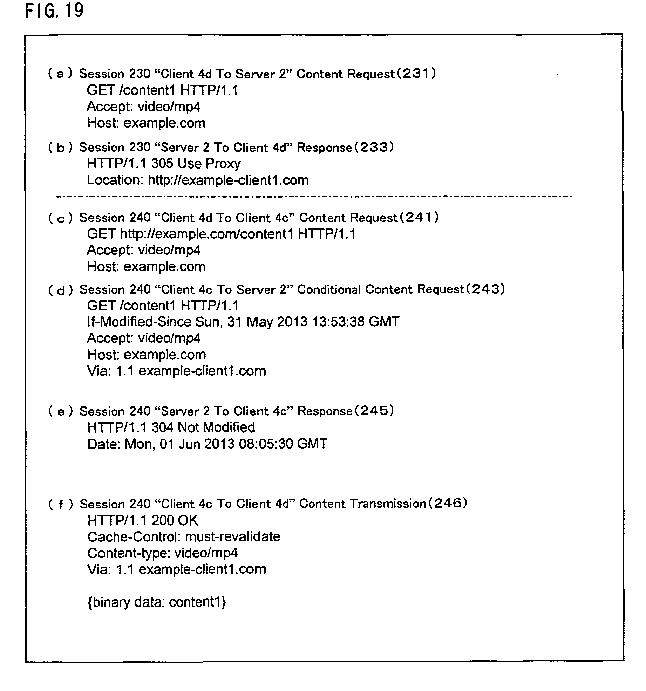

   Fig. 19 is a view illustrating example HTTP messages which are transmitted/received as a request or a response. (a), (c), and (d) of Fig. 19 show HTTP messages of respective requests illustrated in Fig. 17, and (b), (e), and (f) of Fig. 19 show HTTP messages of respective responses illustrated in Fig. 17.
Fig. 20

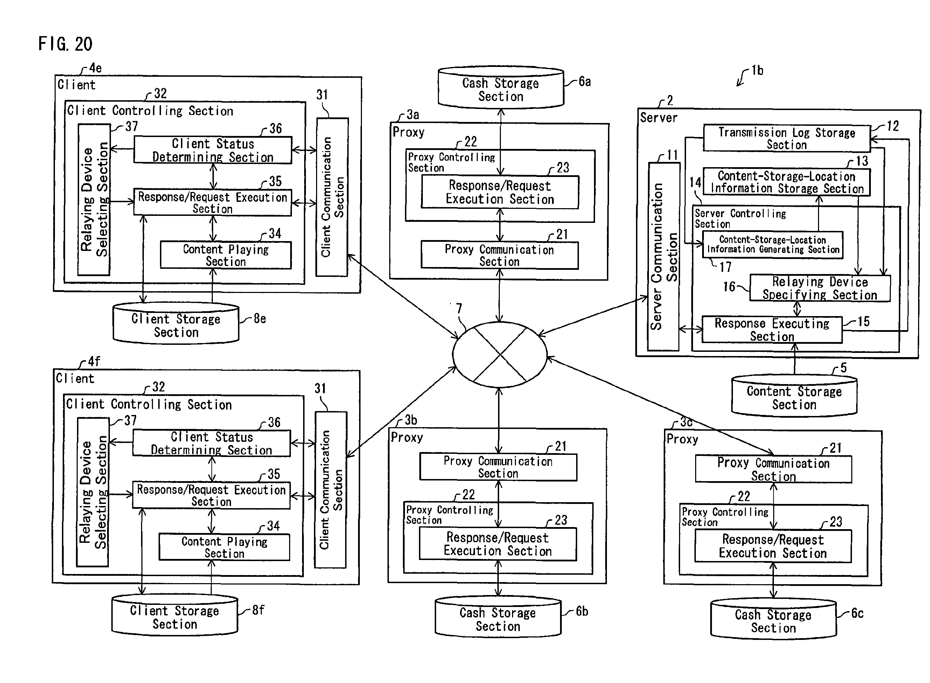

   Fig. 20 is a view illustrating Embodiment 3 of the present invention, and illustrates a schematic configuration of a content distributing system in accordance with Embodiment 3 and main configurations of devices constituting the content distributing system.
Fig. 21

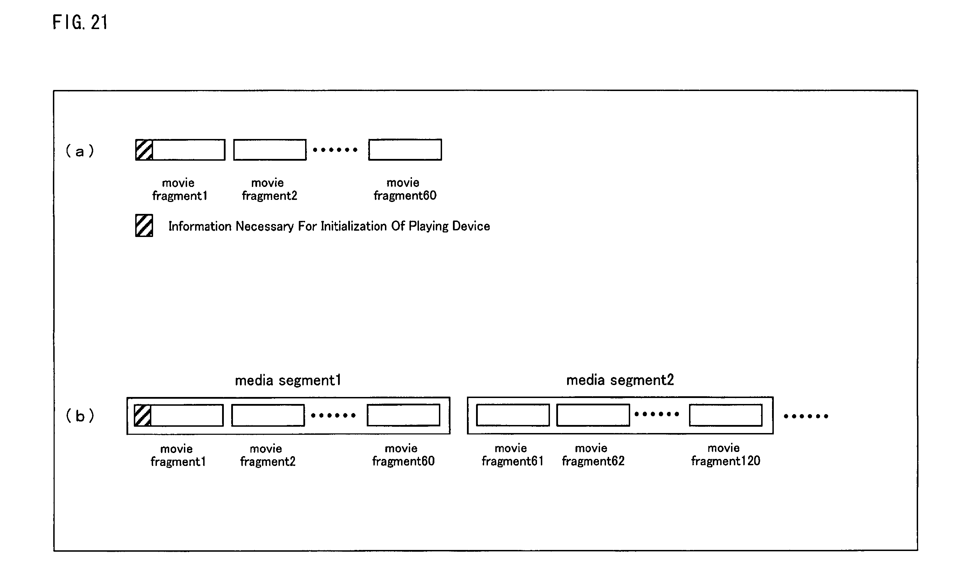

   Fig. 21 is a format of content dealt by the content distributing system.
Fig. 22

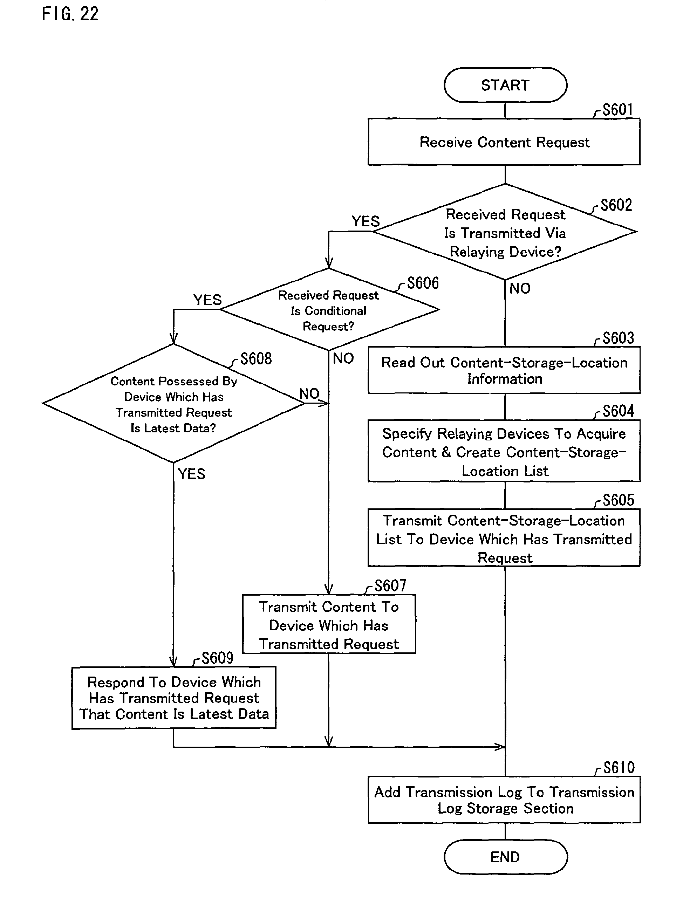

   Fig. 22 is a flowchart showing an exemplary process which is carried out by a server constituting the content distributing system.
Fig. 23

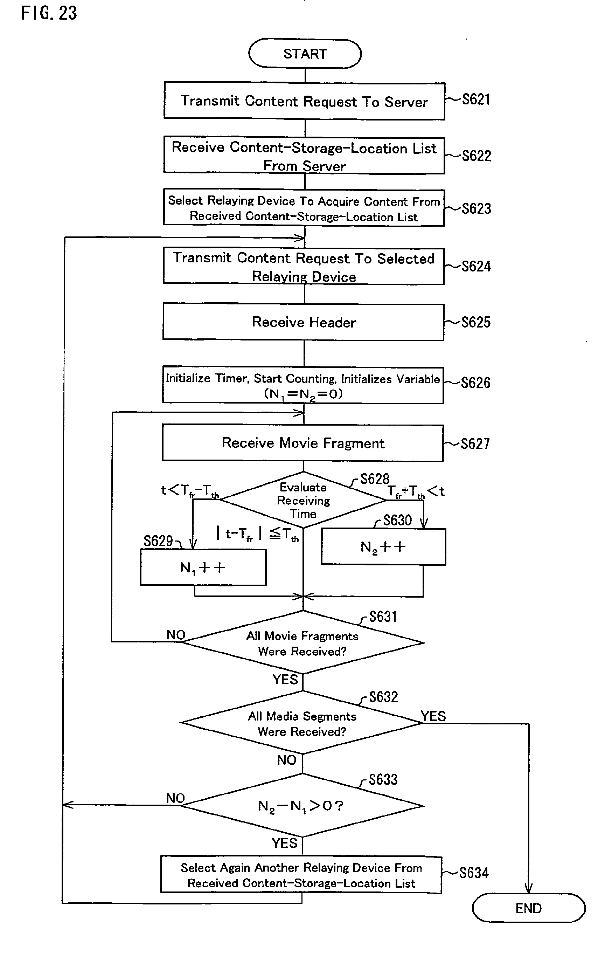

   Fig. 23 is a flowchart showing an exemplary process which is carried out by a client which serves as a content playing device and constitutes the content distributing system.
Fig. 24

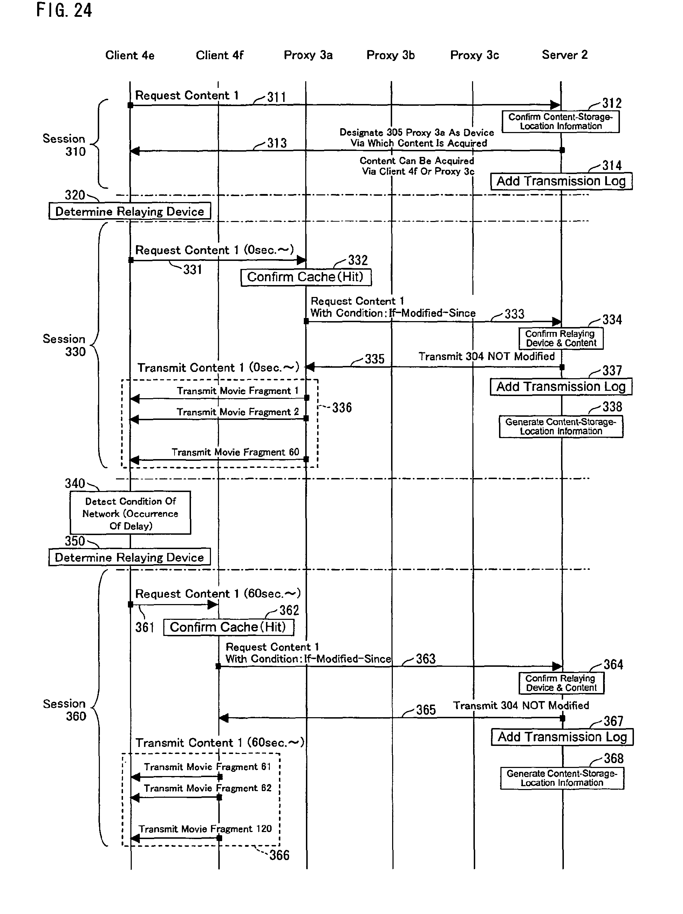

   Fig. 24 is a view illustrating an exemplary operation sequence of a content distributing system in Example of Embodiment 3.
Fig. 25

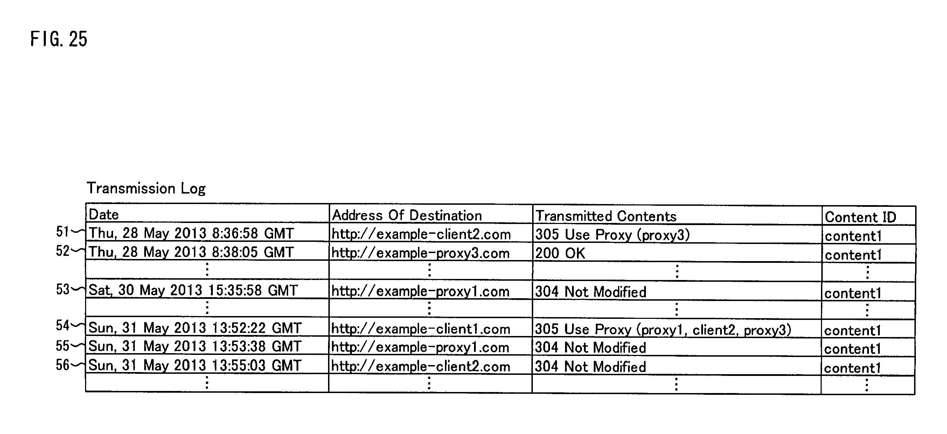

   Fig. 25 is a view showing an exemplary transmission log stored in a transmission log storage section included in the content distributing system.
Fig. 26

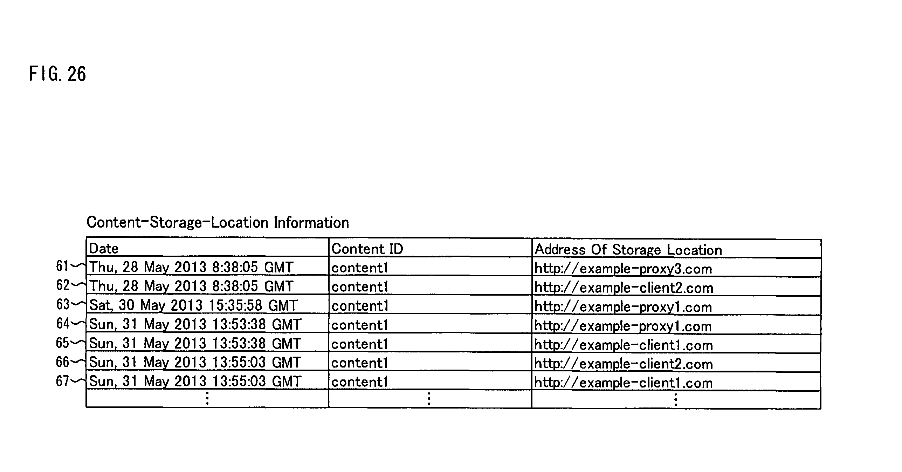

   Fig. 26 is a view illustrating exemplary content-storage-location information stored in a content-storage-location information storage section included in the content distributing system.
Fig. 27

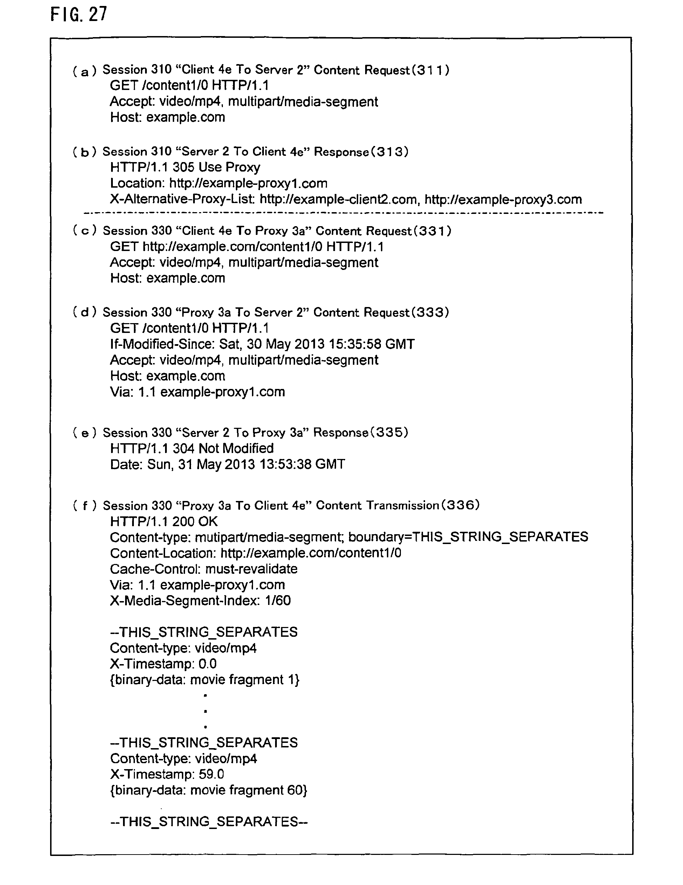

   Fig. 27 is a view illustrating exemplary HTTP messages which are transmitted/received as a request or a response. (a), (c), and (d) of Fig. 27 show HTTP messages of respective requests illustrated in Fig. 24, and (b), (e), and (f) of Fig. 27 show HTTP messages of respective responses illustrated in Fig. 24.
Fig. 28

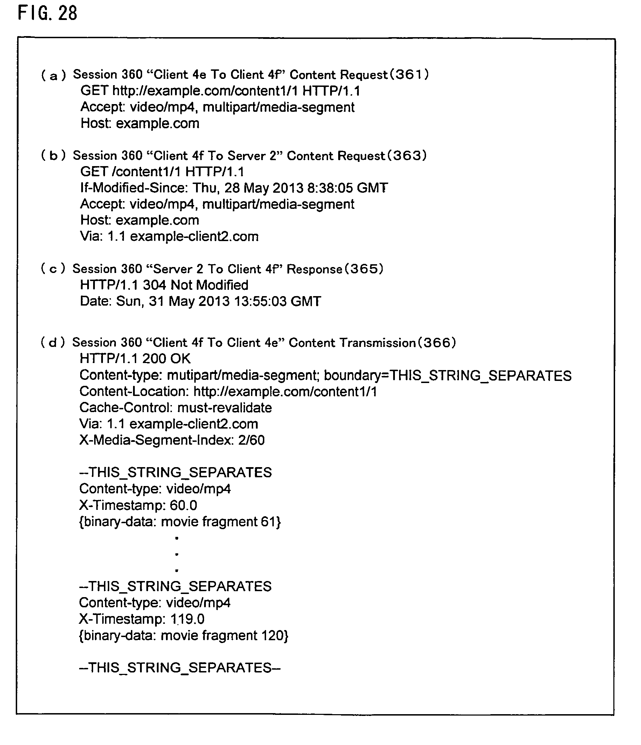

   Fig. 28 is a view illustrating exemplary HTTP messages which are transmitted/received as a request or a response. (a) and (b) of Fig. 28 show HTTP messages of respective requests illustrated in Fig. 24, and (c) and (d) of Fig. 28 show HTTP messages of respective responses illustrated in Fig. 24.
Fig. 29

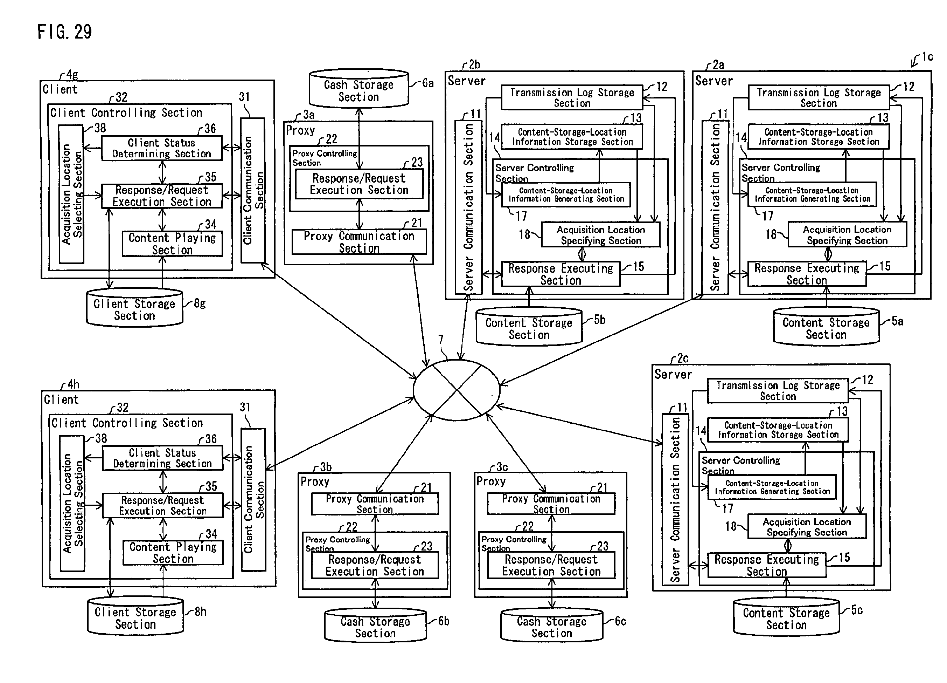

   Fig. 29 is a view illustrating Embodiment 4 of the present invention, and illustrates a schematic configuration of a content distributing system in accordance with Embodiment 4 and main configurations of devices constituting the content distributing system.
Fig. 30

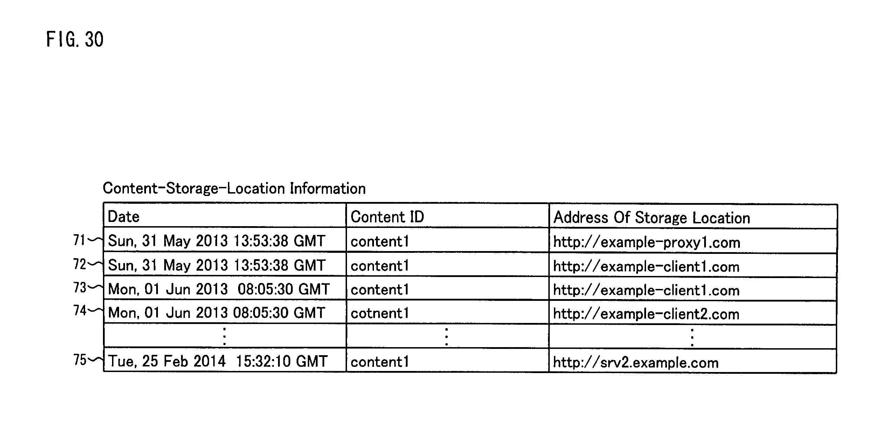

   Fig. 30 is a view illustrating exemplary content-storage-location information stored in a content-storage-location information storage section included in the content distributing system.
Fig. 31

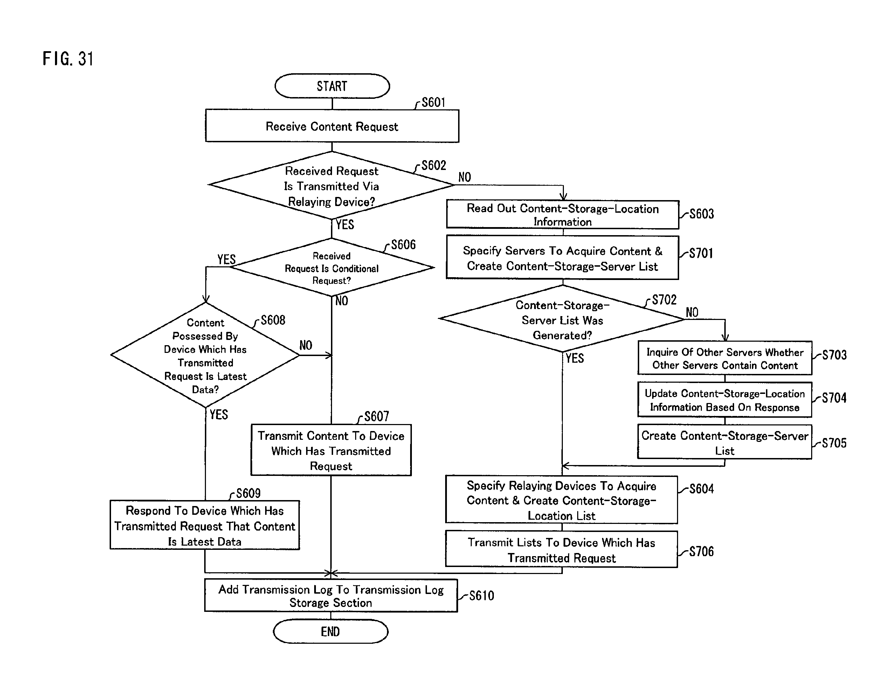

   Fig. 31 is a flowchart showing an exemplary process which is carried out by a server constituting the content distributing system.
Fig. 32

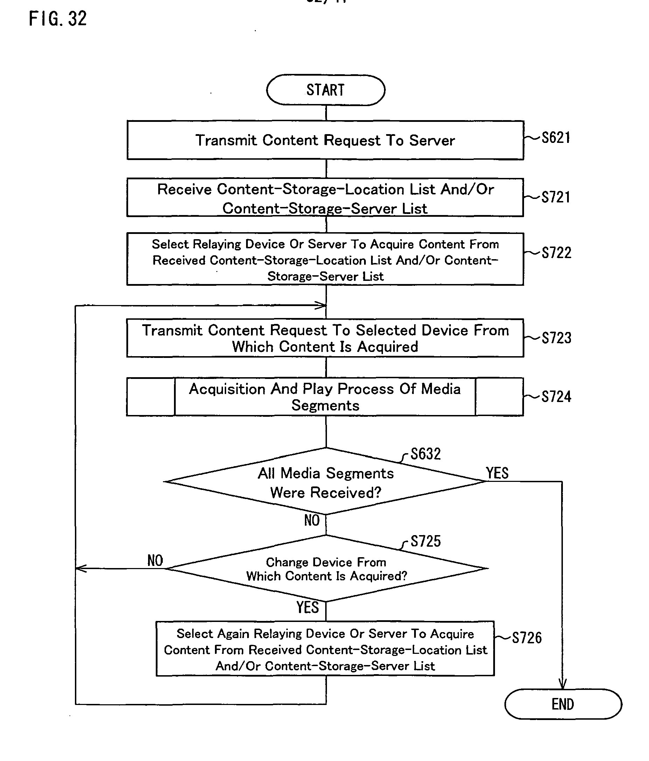

   Fig. 32 is a flowchart showing an exemplary process which is carried out by a client which serves as a content playing device and constitutes the content distributing system.
Fig. 33

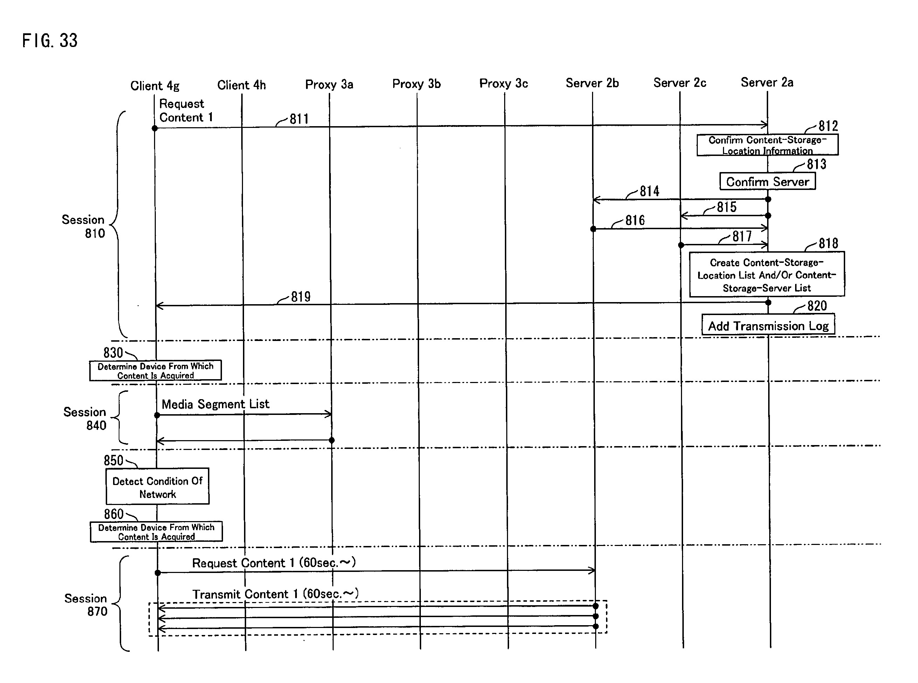

   Fig. 33 is a view illustrating an exemplary operation sequence of a content distributing system in Example of Embodiment 4.
Fig. 34

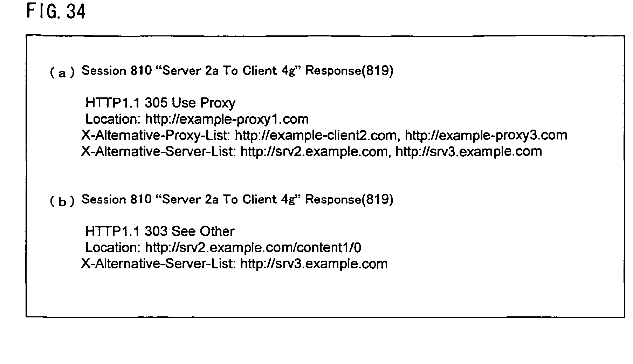

   Fig. 34 is a view illustrating an exemplary HTTP message which is transmitted and received as a response.
Fig. 35

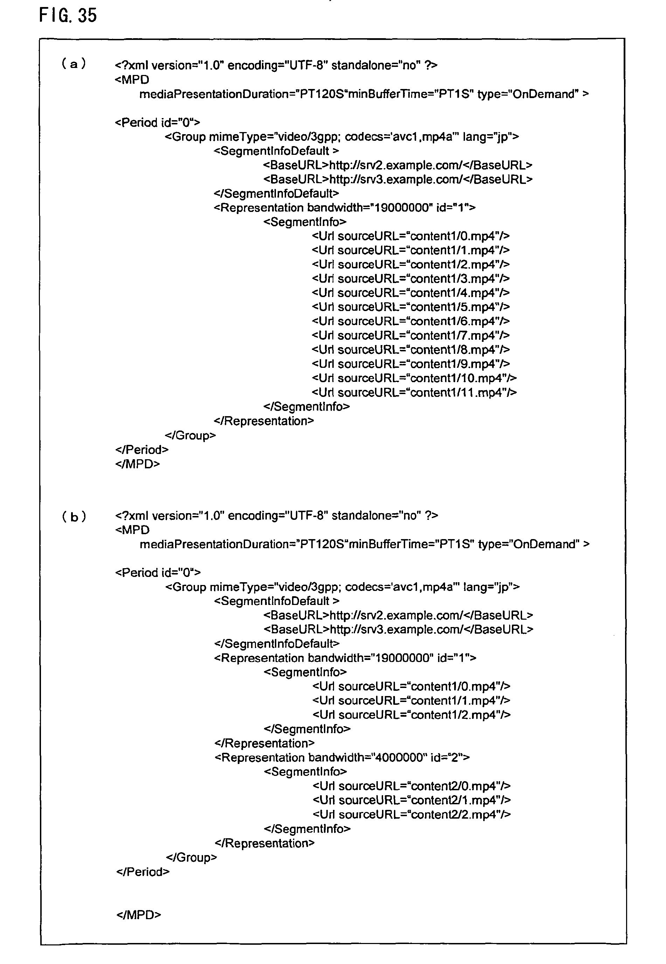

   Fig. 35 is a view illustrating exemplary MPD data which is meta data of content dealt by a content distributing system in accordance with Embodiment 5 of the present invention.
Fig. 36

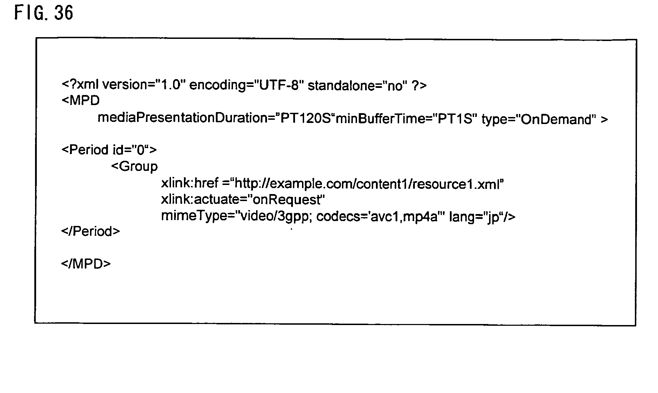

   Fig. 36 is a view illustrating exemplary MPD data which is dealt by the content distributing system.
Fig. 37

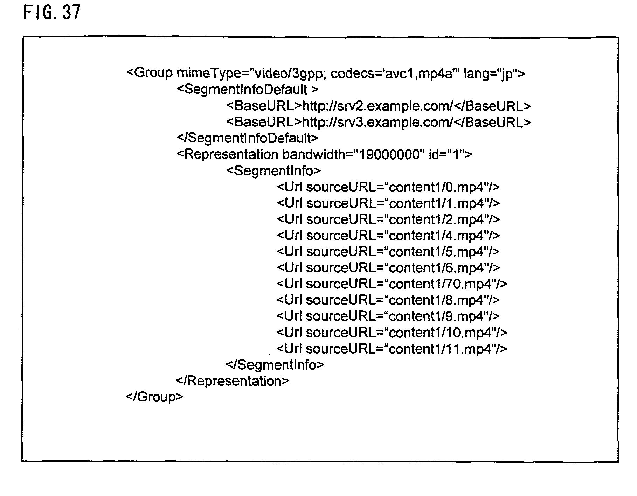

   Fig. 37 is a view illustrating an exemplary external resource which is dealt by the content distributing system.
Fig. 38

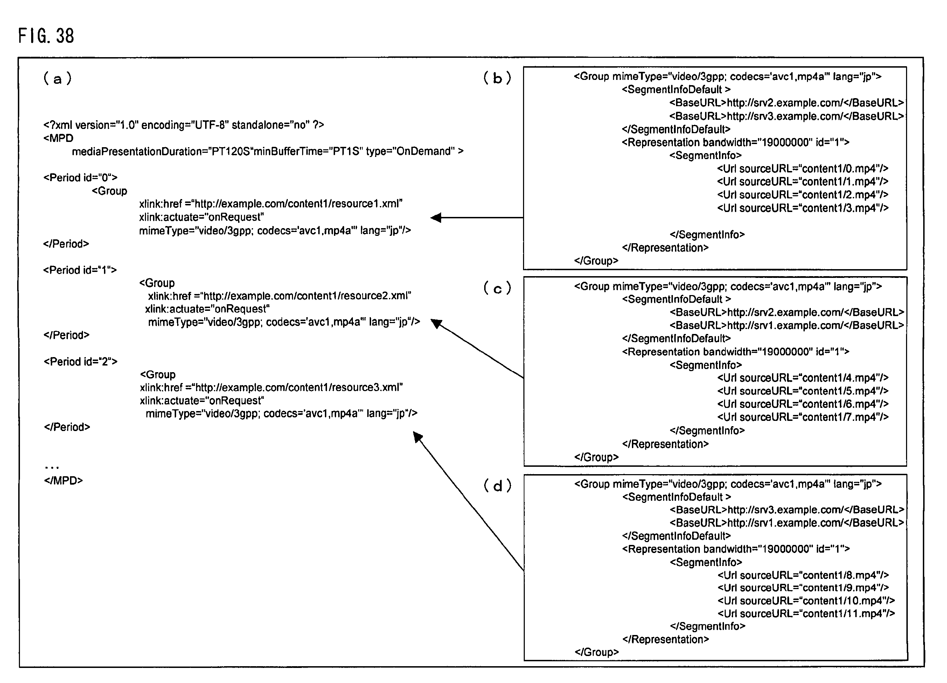

   Fig. 38 is a view illustrating exemplary MPD data and an example external resource which are dealt by the content distributing system.
Fig. 39

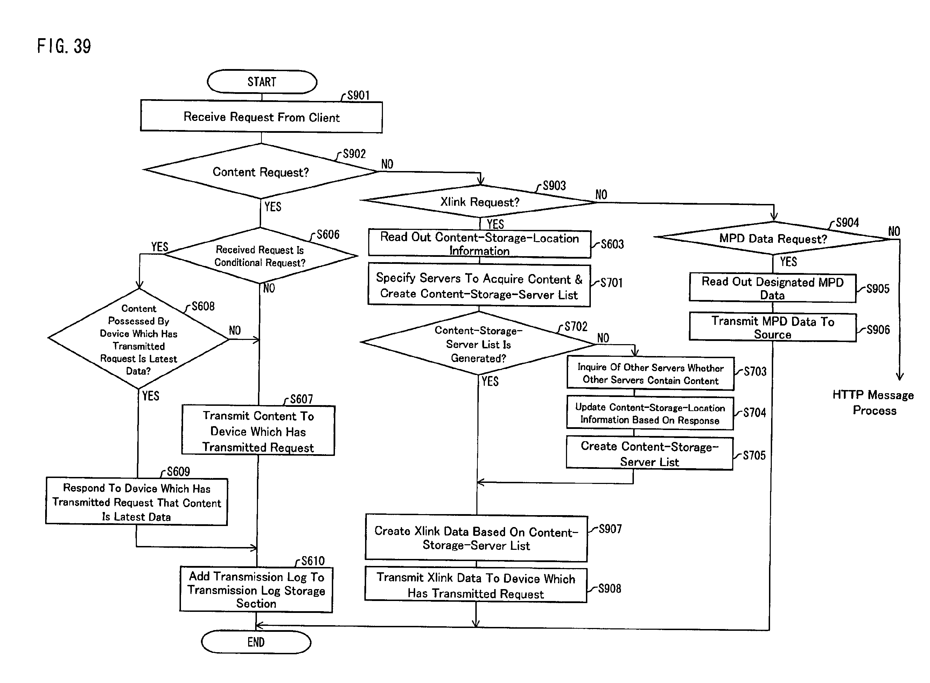

   Fig. 39 is a flowchart showing an exemplary process which is carried out by a server constituting the content distributing system.
Fig. 40

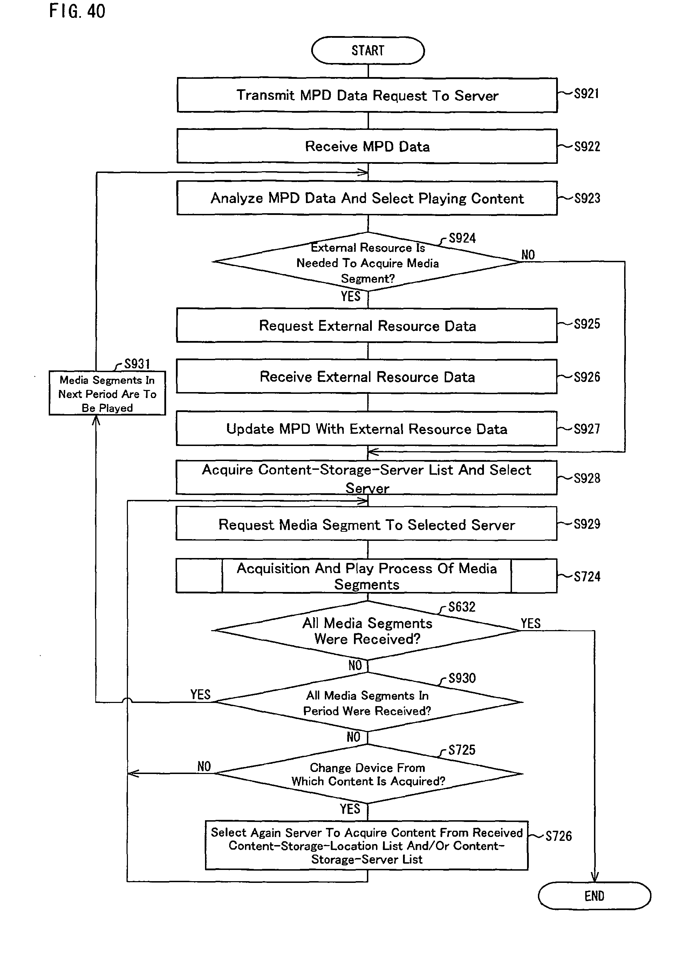

   Fig. 40 is a flowchart showing an exemplary process which is carried out by a client which serves as a content playing device and constitutes the content distributing system.
Fig. 41

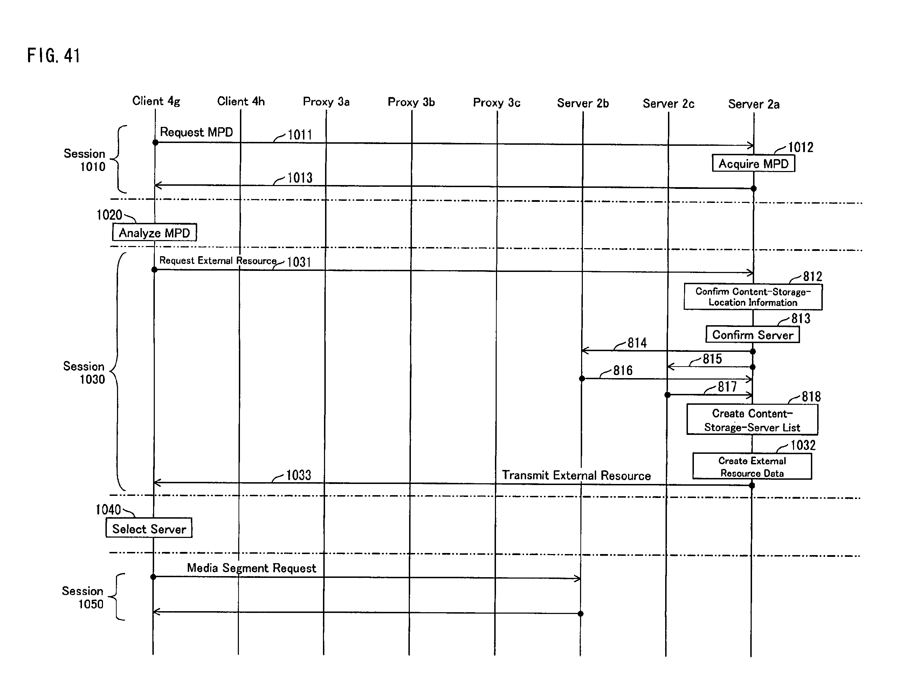

   Fig. 41 is a view illustrating an exemplary operation sequence of a content distributing system in Example of Embodiment 5.

### Description of Embodiments

### <Embodiment 1>

The description will discuss Embodiment 1 of the present invention with reference to Fig. 1 to Fig. 10. First, an outline of a content distributing system 1 of Embodiment 1 will be described with reference to Fig. 1.

### [Outline of content distributing system 1]

Fig. 1 illustrates a schematic configuration of the content distributing system 1 in accordance with Embodiment 1 and main configurations of devices constituting the content distributing system 1. As illustrated in Fig. 1, the content distributing system 1 includes a server (content distributing device) 2, proxies (relaying devices, content acquiring devices) 3a and 3b, and clients (content playing devices, content acquiring devices) 4a and 4b. The content distributing system 1 also includes: a content storage section 5 connected to the server 2; and cache storage sections 6a and 6b connected to the respective proxies 3a and 3b.

As illustrated in Fig. 1, the server 2, the proxies 3a and 3b, and the client 4a and 4b are connected to one another via a network 7. Note that the network 7 is not particularly limited, provided that the aforementioned devices can be communicated with one another. Accordingly, the network 7 may be a wired communication network or a wireless communication network.

Note that, in the following description, the proxies 3a and 3b will be called generally as a proxy 3; the cache storage sections 6a and 6b, a cache storage section 6; and the client 4a and 4b, a client 4.

Further, the present invention is not limited to the example illustrated in Fig. 1, in which the content distributing system 1 includes two proxies 3 and two clients 4. The content distributing system 1 may include one proxy or three or more proxies, and may include three or more clients 4. That is, the content distributing system 1 only needs to include at least one proxy 3 and a plurality of clients 4.

In Embodiment 1, a content distributed by the server 2 is assumed to be a video content for a VOD service, and a format of the content is assumed to be a MP4 file format. Further, a transfer protocol on the network 7 in the content distributing system 1 is assumed to use the HTTP, which is widely used as a general file transferring protocol. Note that, in Embodiment 1, the content distributed by the server 2 and the transfer protocol on the network 7 in the content distributing system 1 are not limited to this configuration.

### [Server 2]

The server 2 is a content distributing device which receives a request message (request) to request to transmit a content from the proxy 3 and the client 4 (content acquiring device) and transmits a response message (response) in response to the request message thus received. As described above, the server 2 is connected to the content storage section 5 which stores contents such as moving images, and manages the contents stored in the content storage section 5. Note that the content storage section 5 may be provided inside the server 2.

Note that the server 2 may simultaneously distribute the same content to an unspecified number of devices, may distribute a content to a single device, or may simultaneously distribute the same content to a predetermined number of devices.

As illustrated in Fig. 1, the server 2 includes: a server controlling section 14 for collectively controlling operations of the server 2; a server communication section 11 which is provided so that the server 2 can communicate to an external device; a transmission log storage section 12 in which a response transmitted by the server 2 is stored; and a content-storage-location information storage section 13 for storing content-storage-location information (details will be described below). The server controlling section 14 includes: a response executing section (determining means, content transmitting means, content-acquiring-location instructing means, transmission record creating means) 15; a relaying device specifying section (content-acquiring-location instructing means, distance calculating means) 16; and a content-storage-location information generating section (content-storage-location information generating means) 17.

The response executing section 15 receives, via the server communication section 11, a request message to request to transmit a content, and then the response executing section 15 transmits, to a device (proxy 3 or client 4) which is the sender of the request message, a response message in response to the request message thus received.

Specifically, the response executing section 15 is ready to receive the request message to request to transmit the content, and, upon receiving, via the server communication section 11, the request message to request to transmit the content, the response executing section 15 checks a header of the request message in order to determine whether or not the request message thus received is transmitted via the proxy 3. For example, it may be so configured that in a case of receiving a request message which includes a "Via" header, the response executing section 15 determines that the request message thus received has been transmitted by the proxy 3 in response to a request message of the client 4, whereas, in a case of receiving a request message which does not include the "Via" header, the response executing section 15 may determine that the request message thus received has been transmitted directly from the client 4.

Upon receipt of the request message to request the content directly from the client 4, the response executing section 15 transmits, to the relaying device specifying section 16, an instruction to specify address information (e.g., URI of proxy 3 etc.) of the proxy 3 which (possibly) possesses the content that the client 4 requests. Then, the response executing section 15 receives, from the relaying device specifying section 16, the address information of the proxy 3 which possesses the content that the client 4 requests. After that, in response to the request message from the client 4, the response executing section 15 transmits, to the client 4, an instruction (i.e., a response message) to acquire such a requested content based on the address information specified by the relaying device specifying section 16. For example, by giving, to "Location field", with use of a "305 USE Proxy" serving as the response message, the address information specified by the relaying device specifying section 16, the response executing section 15 transmits, to the client 4, an instruction to transmit, to the proxy 3 which (possibly) possesses the content that the client 4 requests, the request message of the content.

When receiving, from the proxy 3, the request message to request the content, the response executing section 15 determines whether or not the request message thus received is a conditional request such as "If-Modified-Since". In a case where the request message thus received is not a conditional request, the response executing section 15 reads out a requested content from the content storage section 5 and transmits such a read-out content to the proxy 3 in response to the request message of the proxy 3.

Meanwhile, in a case where the request message thus received is a conditional request, the response executing section 15 then determines whether or not data held by the proxy 3 is latest. To put it another way, the response executing section 15 determines whether or not the data of the content held by the proxy 3 and data of the same content stored in the content storage section 5 are identical to each other.

In a case where the data of the content held by the proxy 3 is not latest, the response executing section 15 reads out a requested content from the content storage section 5, and, in response to the request message transmitted from the proxy 3, transmits the content thus read out to the proxy 3. Meanwhile, in a case where the data of the content held by the proxy 3 is latest, the response executing section 15 transmits, to the proxy 3, in response to the request message transmitted from the proxy 3, a response message that the data of the content held by the proxy 3 is latest. The response executing section 15 transmits, to the proxy 3, for example, "304 NOT modified" serving as the response message that the data of the content held by the proxy 3 is latest.

Further, the response executing section 15 creates a transmission log (response transmission record) based on the response message thus sent, and causes the transmission log storage section 12 to store the transmission log thus created. The transmission log created by the response executing section 15 will be described later in detail.

As for the content to be transmitted from the response executing section 15 to the proxy 3, for example, "Cache-Control: must-revalidate" or "Cache-Control: proxy-revalidate" may be added to a header of the content. Accordingly, when the proxy 3 which receives the content uses, i.e., transmits the content held by the cache storage section 6 in response to another request, it is possible to confirm the server 2 before the transmission of the content from the proxy 3, as to whether or not the content is the latest version.

In response to an instruction of the response executing section 15, the relaying device specifying section 16 specifies which proxy 3 (possibly) possesses the content that the client 4 requests.

Specifically, the relaying device specifying section 16 reads out content-storage-location information from the content-storage-location information storage section 13 in response to the instruction of the response executing section 15. With reference to the content-storage-location information thus read out, the relaying device specifying section 16 specifies, as address information of a device from which the content is acquired, the address information (e.g., URI) of the proxy 3 associated with the content that the client 4 requests. The relaying device specifying section 16 transmits the address information thus specified to the response executing section 15.

In a case where the content-storage-location information for the content that the client 4 requests is not stored in the content-storage-location information storage section 13, the relaying device specifying section 16 may specify, as address information of a device from which the content is acquired, predetermined (default) address information of the content that the client 4 requests. Alternatively, in a case where the content-storage-location information storage section 13 does not store the content-storage-location information for the content that the client 4 requests, the relaying device specifying section 16 may select, at random, from proxies 3 connected to the server 2 via the network 7, address information of a device from which the content is acquired.

In a case where the content-storage-location information storage section 13 contains a plurality of pieces of content-storage-location information containing a plurality of pieces of address information of proxies 3 associated with the content requested by the client 4, the relaying device specifying section 16 may specify a plurality of pieces of address information as address information of a device from which the content is acquired, and may make a content-storage-location list containing the plurality of pieces of address information thus specified. Alternatively, in a case where the relaying device specifying section 16 specifies the plurality of pieces of address information as address information of a device from which the content is acquired, the relaying device specifying section 16 may make a content-storage-location list by adding priorities to the plurality of pieces of address information.

In a case where the content-storage-location information storage section 13 contains the plurality of pieces of content-storage-location information containing the respective plurality of pieces of address information of the proxies 3 associated with the content that the client 4 requests, the relaying device specifying section 16 may specify address information of a proxy 3, which address information is contained in the latest content-storage-location information (which means that date and time contained in the content-storage-location information are the latest), as the address information of the device from which the content is acquired. In a case where a plurality of pieces of address information are specified as the address information of the device from which the content is acquired, the relaying device specifying section 16 may make a content-storage-location list by adding priorities to the pieces of address information in such a manner that, for example, later date and time contained in content-storage-location information are given a higher priority.

Further, in a case where the content-storage-location information storage section 13 contains the plurality of pieces of content-storage-location information containing the respective plurality of pieces of address information of proxies 3 associated with the content that the client 4 requests, the relaying device specifying section 16 may specify an address of a proxy 3 as an address of a device from which the content is acquired, which address of the proxy 3 has a shortest distance between the proxy 3 and the client 4 on the basis of a physical or network-structural distance and is contained in the content-storage-location information. Also in a case where the plurality of pieces of address information are specified as the address information of the device from which the content is acquired, the relaying device specifying section 16 may make a content-storage-location list on the basis of, for example, the distance between the proxy 3 and the client 4 on the physical or network structure. That is, the relaying device specifying section 16 may make the content-storage-location list by adding priorities to the plurality of pieces of address information in such a manner that address information with a shorter distance gets a higher priority. Specifically, the relaying device specifying section 16 may make a content-storage-location list in such a manner that (A) a plurality of physical or network-structural distances between proxies 3 indicated by the plurality of addresses and clients 4 transmitted the request are calculated on the basis of the plurality of addresses contained in respective plurality of pieces of content-storage-location information, (B) the plurality of addresses, which are contained in the plurality of pieces of content-storage-location information, respectively, are arranged so that an address with a shorter distance gets a higher priority, and (C) priorities are assigned to the plurality of addresses.

In a case where, for example, the server 2 already has (A) URIs of the clients 4 transmitted the request message and (B) URIs of the proxies 3 connected to the server 2 via the network 7, the relaying device specifying section 16 may make a content-storage-location list in such a manner that (I) domain names of the clients 4 transmitted the request message are found out on the basis of URIs of the clients 4, (II) proxies 3 are arranged so that, in each level of the domain names thus found out, the shorter physical or network-structural distance between a client 4 and a proxy 3 gets a higher priority, and (III) priorities are assigned to the plurality of pieces of address information.

Specifically, in a case where the URI of the client 4 is, for example, "http://client.co.jp", the relaying device specifying section 16 may make a content-storage-location list in view of a second level domain name. Specifically, the relaying device specifying section 16 may make the content-storage-location list by (i) selecting proxies 3 whose second level domain name is "co.jp" and (ii) arranging the proxies 3 thus selected in such a manner that the shorter physical or network-structural distance between the proxy 3 and the client 4 gets a higher priority. In a case where no proxy 3 has "co.jp" as the second level domain name, the relaying device specifying section 16 may make a content-storage-location list by (A) selecting proxies 3 whose first level domain name is "jp" and (B) arranging the proxies 3 in such a manner that the shorter physical or network-structural distance between the proxy 3 and the client 4 gets a higher priority.

In a case where the URI of the client 4 is not an organizational type JP domain name such as "co.jp", but is a geographical type JP domain name such as "kaisha.chiyoda.tokyo.jp" or "pref.fukuoka.jp" in which a prefecture label or a city (city, ward, town, village) label is contained, the relaying device specifying section 16 may make a content-storage-location list by selecting (I) labels (prefecture labels or city labels) to which proxies 3 are attached are same as those to which the clients 4 are attached or (II) labels to which proxies 3 are attached are resemble to those to which the clients 4 are attached.

Similarly, in a case where server 2 already contains information on an IP address of the client 4 which has transmitted the request message, an IP address of the proxy 3 connected to the server 2 via the network 7, and the like, the relaying device specifying section 16 may select, with reference to a network address section on a high-order-bit side of the IP address of the client 4 which has transmitted the request message, a proxy 3 having a short physical or network-structural distance between the proxy 3 and the client 4.

In addition, a connecting path between the server 2 and the client 4 and a network status are checked in advance with use of, for example, a general method such as a routing technology, a network monitoring, or traffic analysis, and, on the basis of the connecting path and the network status specified by the relaying device specifying section 16, a more appropriate proxy may be selected. For example, before the relaying device specifying section 16 transmits, to client 4, an instruction to designate a proxy 3 for acquiring the content, the connecting path between the server 2 and the client 4 is checked with use of a "traceroute" command or a "tracert" command, and, on the basis of a result of such check, the relaying device specifying section 16 may select a proxy 3 which is closer to the client 4.

Further, the relaying device specifying section 16 may specify, in view of load statuses of the proxies 3, a proxy 3 which (possibly) possesses the content that the client 4 requests and has a low load. More specifically, the relaying device specifying section 16 may specify, with reference to the transmission log stored in the transmission log storage section 12, address information of the device from which the content is acquired.

For example, the relaying device specifying section 16 may carry out the following processes: the relaying device specifying section 16 determines, with reference to the transmission log stored in the transmission log storage section 12, whether or not each proxy 3 has transmitted or received the content within a predetermined time period; and the relaying device specifying section 16 specifies, as the address information of the device from which the content is acquired, address information of a proxy 3 which (i) has transmitted or received no content within the predetermined time period and (ii), in the content-storage-location information thus read out, is associated with the content that the client 4 requests. Note that the predetermined time period may be set in accordance with the content associated with the proxy 3.

In a case where the content-storage-location information storage section 13 contains the plurality of pieces of content-storage-location information containing the respective plurality of pieces of address information of the proxies 3 associated with the content that the client 4 requests, the relaying device specifying section 16 may specify, as the address information of the device from which the content is acquired, address information of a proxy 3 which (A) has transmitted or received no content within a predetermined time period and (B) is contained in the latest content-storage-location information.

Further, the relaying device specifying section 16 may specify, in view of the number of accesses to the server 2 from the proxies 3, a proxy 3 which (possibly) possesses the content that the client 4 requests. For example, it can be considered that, if a proxy 3 has a large number of accesses to the server 2, the proxy 3 caches a large number of contents. Accordingly, the relaying device specifying section 16 may specify a proxy 3 whose number of accesses to the server 2 is a predetermined lower limit or more. Note that the relaying device specifying section 16 may specify the number of accesses to the server 2 with reference to the transmission log stored in the transmission log storage section 12. Specifically, the relaying device specifying section 16 may specify, as the address information of the device from which the content is acquired, an address of a proxy 3 whose number of accesses to the server 2 is a predetermined lower limit or more, which address of the proxy 3 is selected from the proxies 3 associated with the contents, which are requested by the clients 4, of the content-storage-location information.

Further, in a case where the plurality of pieces of address information are associated with the content that the client 4 requests, the relaying device specifying section 16 may specify, as the address information of the device from which the content is acquired, an address information of a proxy 3 having a largest number of accesses to the server 2.

Furthermore, in order not to concentrate accesses to a specific proxy 3, the relaying device specifying section 16 may specify a proxy 3 whose number of accesses to the server 2 is a predetermined upper limit or less.

The content-storage-location information generating section 17 generates, on the basis of the transmission log stored in the transmission log storage section 12, content-storage-location information for specifying address information of a proxy 3 which (possibly) possesses content, and causes the content-storage-location information storage section 13 to store the content-storage-location information.

Specifically, the content-storage-location information generating section 17 generates content-storage-location information by associating, with reference to a transmission log that the server 2 has transmitted the content to a proxy 3, (A) the content which has been transmitted by the server 2, (B) address information of the proxy 3 which is a destination of the content, and (C) date and time when the server 2 has transmitted the content. Alternatively, the content-storage-location information generating section 17 generates content-storage-location information by associating (A) the content which is confirmed, by the server 2, that the content is the latest version with reference to a transmission log indicating that the server 2 has transmitted a response message that the content held by the proxy 3 is the latest version, (B) address information of the proxy 3 which possesses the content, and (C) date and time when the server 2 has transmitted the response message.

Note that the content-storage-location information generating section 17 may generate content-storage-location information every time when a predetermined transmission log is added to the transmission log storage section 12, or may generate content-storage-location information by reading out the transmission log per predetermined time period.

The transmission log storage section 12 stores a transmission log in which (A) transmission date and time of a response message that the server 2 has transmitted to the proxy 3 or to the client 4, (B) address information of the device which receives the response message, (C) contents of the response message, and (D) a content requested by a request message in response to the response message are associated with one another. Examples of the transmission log stored in the transmission log storage section 12 encompass data illustrated in Fig. 2. Fig. 2 is a view showing an exemplary transmission log stored in the transmission log storage section 12.

As shown in Fig. 2, the transmission log associates (A) "Date" which is date and time when a response message is transmitted, (B) "destination address" which is address information of a device which receives the response message, (C) "transmitted contents" which indicates the contents of the response message, and (D) "content ID" which indicates the content requested by a request message in response to the response message.

"200 OK", "305 USE Proxy", or "304 Not Modified", which is the contents of the response message, is stored as the "transmitted contents". In a case where the "transmitted contents" is "305 USE Proxy", the "305 USE Proxy" contains, in parentheses, information indicative of a proxy 3 which is designated by the relaying device specifying section 16, i.e., "305 Use Proxy (proxy 1)" as shown in Fig. 2.

"200 OK" is contained in a response message transmitted when the content is transmitted in response to the request for the content. Thus, a transmission log of the response message "200 OK" is referred to as a content transmission log. "305 USE Proxy" is contained in a response message to provide a device with the content from a designated proxy. Thus, a transmission log of the response message "305 USE Proxy" is referred to as an acquiring instruction log. "304 Not Modified" is contained in a response message which notifies a device that the content is the latest version, the transmission log of the response message "304 Not Modified" is referred to as a version notification log.

The response executing section 15 creates a transmission log based on a transmitted response message, so that the content-storage-location information generating section 17 can make, on the basis of the transmission logs, content-storage-location information for specifying address information of a proxy 3 which (possibly) possesses a content (as described above). The relaying device specifying section 16 can refer to the transmission log in order to specify a proxy 3 which has transmitted or received no content within a predetermined time period.

With reference to a transmission log stored in the transmission log storage section 12, for example, the relaying device specifying section 16 specifies, as a proxy 3 which has transmitted or received a content within a predetermined time period, a proxy 3 which is associated with "200 OK" or "304 Not Modified" as the transmitted contents.

The content-storage-location information storage section 13 stores content-storage-location information in which (A) a content, (B) address information of a proxy 3 which (possibly) possesses the content, and (C) date and time when the proxy 3 acquires the content are associated with one another. Examples of the content-storage-location information stored in the content-storage-location information storage section 13 may encompass data shown in Fig. 3. Fig. 3 is a view showing exemplary content-storage-location information stored in the content-storage-location information storage section 13. To put it another way, the content-storage-location information is information in which the content and the address information indicative of a location where the content is stored are associated with each other.

As shown in Fig. 3, the content-storage-location information is information in which (A) "Date" which is date and time when the proxy 3 acquires a content, (B) "content ID" (content identification information) which identifies the content, and (C) "storage-location address" which is address information of the proxy 3 which possesses the content are associated with one another.

The content-storage-location information generating section 17 generates content-storage-location information based on a transmission log. Accordingly, as described above, the relaying device specifying section 16 can specify, with reference to the content-storage-location information, address information of a proxy 3 which (possibly) possesses the content.

Note that, like the content storage section 5, the transmission log storage section 12 and the content-storage-location information storage section 13 may be provided outside the server 2 and connected to the server 2, instead of being provided in the server 2.

### [Proxy 3]

The proxy 3 is a device for transmitting a requested content and also for requesting and acquiring a content. As described above, the proxy 3 is connected to the cache storage section 6 which stores, for example, a content received from the server 2. In a case where the cache storage section 6 includes a requested content, the proxy 3 reads out the requested content from the cache storage section 6 and then transmits the requested content to the client 4. Meanwhile, in a case where the cache storage section 6 does not include the requested content, the proxy 3 requests the content to the server 2. Note that the cache storage section 6 may be provided in the proxy 3.

As illustrated in Fig. 1, the proxy 3 includes: a proxy controlling section 22 for collectively controlling operations of the proxy 3; and a proxy communication section 21 with which the proxy 3 communicates to an external device. The proxy controlling section 22 includes a response/ request execution section 23.

The response/request execution section 23 is provided for transmitting, to the client 4, a content designated by a request message which has been received from the client 4 to request the content.

Specifically, the response/request execution section 23 is ready to receive, from the client 4, a request message to request to transmit a content, and, upon receipt of the request message from the client 4 via the proxy communication section 21, the response/request execution section 23 confirms whether or not a requested content is stored in the cache storage section 6.

In a case where the requested content is not stored in the cache storage section 6, the response/request execution section 23 confirms a "Host" field of the request message transmitted from the client 4, and transmits, to the server 2 indicated by a URI written in the "Host" field, the request message of the content that the client 4 requests. Then, the response/request execution section 23 acquires the content from the server 2, and causes the cache storage section 6 to store the content thus acquired. After that, the response/request execution section 23 transmits the requested content to the client 4.

Further, in a case where the requested content is stored in the cache storage section 6, the response/request execution section 23 acts such that, in order to confirm whether or not data of the content stored in the cache storage section 6 is the latest, the response/request execution section 23 makes a request message provided with a conditional request, such as "If-Modified-Since" in which time information indicative of time when the proxy 3 acquires the content is written, and transmits, to the server 2, the request message provided with the conditional request thus made.

In a case where the response/request execution section 23 receives, from the server 2, a response message "304 NOT Modified" in response to the request message provided with the conditional request, the response/request execution section 23 determines that the content stored in the cache storage section 6 is the latest data. Then the response/request execution section 23 reads out the content from the cache storage section 6, and transmit, to the client 4, the content thus read out.

Meanwhile, in a case where the content stored in the cache storage section 6 is not the latest data, the server 2 transmits the latest content in response to the request message provided with the conditional request, and the response/request execution section 23 acquires the content transmitted from the server 2. The response/request execution section 23 causes the cache storage section 6 to store the content thus acquired, and then transmits, to the client 4, the content thus required.

Note that the response/request execution section 23 may be configured to transmit the content to the client 4 while the content contains, in its header, "Cache-Control: must-revalidate" or "Cache-Control which has been added by the server 2. Accordingly, in a case where the content, which has been acquired by the client 4 serving as a destination of the content, is transmitted in response to another request, it is possible to cause the client 4 to always transmit, to the server 2, an inquiry as to whether or not the content is the latest version, before the client 4 transmits the content.

That is, in Embodiment 1, the proxy 3 is a device for transmitting a request of a content and acquiring the content, and is also a relaying device for possessing such a requested content and relaying the requested content to another device (e.g., client 4) to which the requested content is transmitted from the relaying device.

### [Client 4]

The client 4 is a device for requesting and acquiring a content, and playing the content thus acquired. Although not illustrated in Fig. 1, the client 4 includes an input section for accepting a user's operation, and requests a content on the basis of an input operation accepted by the input section.

As illustrated in Fig. 1, the client 4 includes: a client control section 32 for collectively controlling operations of the client 4; and a client communication section 31 with which the client 4 communicates to an external device. The client control section 32 includes: a request executing section 33 and a content playing section 34.

The request executing section 33 generates a request message to request to transmit a content, transmit the request message to the server 2 via the client communication section 31, and receives a response message in response to the request message. In the present invention, as described above, the request executing section 33 receives, from the server 2, the response message which is (A) information for specifying a proxy and (B) an instruction for transmitting, to the proxy, a request message to request the content. Upon receipt of the response message from the server 2, the request executing section 33 transmits, to such a designated proxy 3, the request message to request to transmit the content in response to the instruction from the server 2. Then, the request executing section 33 acquires the content from the proxy 3 designated by the server 2.

The content playing section 34 plays the content acquired by the request executing section 33. In a case where, for example, the acquired content is a moving image, the content playing section 34 decodes the acquired content. Then, the content playing section 34 causes an external display device (not shown) to output a moving image and audio thud obtained by decoding.

That is, in Embodiment 1, the client 4 is a device for transmitting a request for a content and acquiring the content, and also serves as a content playing device for acquiring and playing the requested content.

### [Processes carried out by each device]

The following description will discuss, with reference to Figs. 4 to 6, processes carried out by the server 2, the proxy 3, and the client 4. First, a process carried out by the server 2 will be described below with reference to Fig. 4.

### [Process carried out by server 2]

Fig. 4 is a flowchart showing an exemplary process which is carried out by the server 2. The response executing section 15 is ready to receive a request message to request to transmit a content. When the response executing section 15 receives, via the server communication section 11, the request message to request to transmit the content (S401), the response executing section 15 checks a header of the request message thus received, so as to determine whether or not the request message thus received is transmitted via a proxy 3 (S402).

In a case where the received request message is one transmitted from the client 4 (NO in S402), the response executing section 15 transmits, to the relaying device specifying section 16, an instruction to specify a proxy 3 from which the client 4 acquires the content. In response to the instruction from the response executing section 15, the relaying device specifying section 16 reads out content-storage-location information from the content-storage-location information storage section 13 (S403). With reference to the content-storage-location information thus read out, the relaying device specifying section 16 specifies, as address information of a device from which the content should be acquired, a URI of the proxy 3 associated with the content that the client 4 requests (S404). The relaying device specifying section 16 transmits such specified address information to the response executing section 15. The response executing section 15 transmits, to the client 4, from the proxy 3 indicated by an address contained in the address information which has been specified by the relaying device specifying section 16, a response message to instruct the client 4 to acquire a requested content (S405). The response executing section 15 creates a transmission log based on the response message which has been transmitted to the client 4, and adds the transmission log thus created to the transmission log storage section 12 (S410).

Meanwhile, in a case where the request message thus received is one transmitted by the proxy 3 (YES in S402), the response executing section 15 then determines whether or not the received request message is a conditional request such as "If-Modified-Since" (S406). In a case where the received request message is not a conditional request (NO in S406), the response executing section 15 reads out, from the content storage section 5, the content requested by the proxy 3, and, in response to the request message from the proxy 3, transmits the content thus read out to the proxy 3 (S407). After that, the response executing section 15 creates a transmission log based on the response message which has been transmitted to the proxy 3, and adds the transmission log thus created to the transmission log storage section 12 (S410).

In a case where the received request message is provided with a conditional request (YES in S406), the response executing section 15 determines whether or not data of the content held by the proxy 3 is the latest (S408). In a case where the data of the content kept by the proxy 3 is not the latest (NO in S408), the response executing section 15 reads out, from the content storage section 5, the content requested by the proxy 3, and, in response to the request message from the proxy 3, transmits to the proxy 3 the content thus read out (S407). Meanwhile, in a case where the data of the content held by the proxy 3 is the latest (YES in S408), the response executing section 15 transmits, to the proxy 3, a response message that the data of the content held by the proxy 3 is the latest, in response to the request message from the proxy 3 (S409). Then, the response executing section 15 adds, to the transmission log storage section 12, the response message which has been transmitted to the proxy 3 (S410).

Note that, in a case where the response executing section 15 transmits the content to the proxy 3 in S407, "Cache-Control: must-revalidate" or "Cache-Control: proxy-revalidate", for example, is added to the header of the content. Accordingly, in a case where the proxy 3 serving as a destination of a content transmits the content held by the cache storage section 6 in response to another request, it is possible to always cause the proxy 3 to transmit, to the server, an inquiry as to whether or not the content is the latest, before the proxy 3 transmits the content.

### [Process carried out by proxy 3]

The following description will discuss a process carried out by the proxy 3. Fig. 5 is a flowchart showing an exemplary process which is carried out by the proxy 3.

As shown in Fig. 5, the response/request execution section 23 is ready to receive a request message to request to transmit a content from the client 4. Upon receipt of the request message from the client 4 via the proxy communication section 21 (S421), the response/request execution section 23 confirms whether or not such a requested content is stored in the cache storage section 6 (S422).

In a case where the requested content is not stored in the cache storage section 6 (NO in S422), the response/request execution section 23 refers to a "Host" field of the request message which has been transmitted from the client 4, and transmits, to the server 2 indicated by a URI written in the "Host" field, the request message to request the content transmitted by the client 4 (S423). Then, the response/request execution section 23 acquires the content from the server 2 (S424), and causes the cache storage section 6 to store the content thus acquired (S425). After that, the response/request execution section 23 transmits, to the client 4, the content thus requested (S426).

In a case where the requested content is stored in the cache storage section 6 (YES in S422), the response/ request execution section 23 creates a request message provided with a conditional request, such as "If-Modified-Since" in which time information indicative of time when the content has been acquired is written, and transmits, to the server 2, the request message provided with the conditional request thus made (S427).

In a case where the response/request execution section 23 receives a response message "304 NOT Modified" from the server 2 in response to the request message provided with the conditional request (YES in S428), the response/ request execution section 23 reads out the content thus stored from the cache storage section 6, and transmits to the client 4 the content thus read out (S426).

Meanwhile, in a case where the content stored in the cache storage section 6 is not the latest data, the server 2 transmits the latest content in response to the request message provided with the conditional request, and the response/request execution section 23 acquires the latest content transmitted from the server 2 (S424). The response/request execution section 23 causes the cache storage section 6 to store the content thus acquired (S425), and then transmits the requested content to the client 4 (S426).

Note that, in S426, the response/request execution section 23 transmits the content to the client 4 while the content contains, in its header, "Cache-Control: must-revalidate" or "Cache-Control which has been added by the server 2. Accordingly, in a case where the content, which has been acquired by the client 4 serving as a destination of a content, is transmitted in response to another request, it is possible to keep such a state that the client 4 should always transmits, to the server 2, an inquiry as to whether or not the content is the latest version, before the client 4 transmits the content.

### [Process carried out by client 4]

The following description will discuss, with reference to Fig. 6, a process carried out by the client 4. Fig. 6 is a flowchart showing an exemplary process, which is carried out by the client 4.

As shown in Fig. 6, the request executing section 33 transmits, to the server 2, a request message to request to transmit a content (S441). In response to the request message, the request executing section 33 receives a response message to instruct the request executing section 33 to acquire a content from a designated proxy 3 (S442). In response to such an instruction from the server 2, the request executing section 33 transmits the request message to the proxy 3 designated by the server 2 (S443). Then, in response to the request message, the request executing section 33 acquires the content from the proxy 3 which has received the request message (S444).

### [Example 1]

Fig. 7 illustrates Example 1, and Embodiment 1 will be described in detail below. Example 1 shows an operation example of the content distributing system 1 that instructs the client 4 about from which proxy 3 the client 4 is to acquire the content. Fig. 7 is a view illustrating an example operation sequence of the content distributing system 1 in Example 1.

Note that Example 1 is based on the following presumption. A content 1 and a content 2 are stored in the content storage section 5, and both the cache storage sections 6a and 6b cash no content. Further, the server 2 is set so that the content 1 is acquired from the proxy 3a as its default and the content 2 is acquired from the proxy 3b as its default. Furthermore, when the process shown in Fig. 7 is started in Example 1, a transmission log and content-storage-location information are not stored in the transmission log storage section 12 and the content-storage-location information storage section 13, respectively. Still further, the response executing section 15 creates the transmission log of Fig. 2 every time when a response message is transmitted, and the content-storage-location information generating section 17 generates the content-storage-location information of Fig. 3 every time when a content transmission log or a version notification log (transmission log whose "transmitted contents" is "200 OK" or "304 Not Modified") is added to the transmission log storage section 12.

Further, one session is defined as a sequence starting from a time at which the client 4 transmits a request message and ending a time at which the client 4 receives a response message in response to the request message is regarded as one session.

As shown in Fig. 7, in a session 110, the client 4a transmits, to the server 2, a request message to request to transmit the content 1 (request 111). In the server 2 which has received the request 111, the response executing section 15 transmits, to the relaying device specifying section 16, an instruction to specify a proxy 3 to acquire the content 1. In response to the instruction, the relaying device specifying section 16 confirms whether or not the content-storage-location information is stored in the content-storage-location information storage section 13 (process 112). Here, the content-storage-location information storage section 13 does not contain the content-storage-location information indicative of the proxy 3 to acquire the content 1, the relaying device specifying section 16 specifies the default proxy 3a as the proxy 3 to acquire the content 1. The response executing section 15 transmits, to the client 4a, the response message to instruct the client 4a to acquire a requested content from the proxy 3 indicated by address information specified by the relaying device specifying section 16 (response 113). Then, the response executing section 15 creates a transmission log based on the response message thus transmitted, and adds the transmission log to the transmission log storage section 12 (process 114).

Then, in the session 120, the client 4a, which has received the response 113, transmits, to proxy 3a, the request message to request to transmit the content 1 (request 121). The proxy 3a, which received the request 121, confirms whether or not the content 1 is stored in the cache storage section 6a (process 122). Here, the content 1 is not stored in the cache storage section 6a, so that the proxy 3a transmits, to the server 2, the request message based on the request 121 (request 123). In the server 2 which has received the request 123 from the proxy 3a, the response executing section 15 transmits the content 1 to the proxy 3a (response 124). The proxy 3a received the response 124 stores the acquired content 1 in the cache storage section 6a and caches the content 1 (process 125). After that, the proxy 3a transmits, to the client 4a, the content 1 as a response to the request 121 (response 126). Note that, after transmitting the response 124, the response executing section 15 creates a transmission log based on the response message thus transmitted, and adds the transmission log to the transmission log storage section 12 (process 127). Further, the content-storage-location information generating section 17 generates content-storage-location information in which the content 1 and address information of the proxy 3a are associated with each other, and causes the content-storage-location information storage section 13 to store the content-storage-location information (process 128).

Next, in the session 130 and the session 140, the client 4b acquires the content 2. Operations of the client 4b, the proxy 3b, and the server 2 in the session 130 and the session 140 are similar to those of the client 4a, the proxy 3a, and the server 2 in the session 110 and the session 120, except that data acquired in the sessions 110 and 120 is different from that acquired in the sessions 130 and 140. Therefore description thereof will be omitted.

When the session 140 is completed, the content 1 is in a state of being cached in the cache storage section 6a of the proxy 3a and the content 2 is in a state of being cached in the cache storage section 6b of the proxy 3b. That is, the content-storage-location information storage section 13 stores (A) the content-storage-location information in which the content 1 and the proxy 3a are associated with each other and (B) content-storage-location information in which the content 2 and the proxy 3b are associated with each other.

In the session 150, the client 4a transmits, to the server 2, a request message to request to transmit the content 2 (request 151). In the server 2 received the request 151, the response executing section 15 transmits, to the relaying device specifying section 16, an instruction to designate a proxy 3 to acquire the content 2. In response to the instruction, the relaying device specifying section 16 confirms whether or not the content-storage-location information is stored in the content-storage-location information storage section 13 (process 152). Here, the content-storage-location information storage section 13 stores the content-storage-location information in which the content 2 and the proxy 3b associated with each other, the relaying device specifying section 16 specifies the proxy 3b to acquire the content 2. The response executing section 15 transmits, to the client 4a, a response message to instruct the client 4a to acquire a requested content from the proxy 3 specified by the relaying device specifying section 16 (response 153). Then, the response executing section 15 creates a transmission log based on the response message thus transmitted, and adds the transmission log to the transmission log storage section 12 (process 154).

Next, in the session 160, in response to the instruction of the server 2, the client 4a received the response 153 transmits, to the proxy 3b, the request message to request to transmit the content 2 (request 161). The proxy 3b received the request 161 confirms whether or not the content 2 is stored in the cache storage section 6b (process 162). The content 2 is already stored in the cache storage section 6b, so that the proxy 3b transmits, to the server 2, the request message, based on the request 121, provided with a conditional request "If-Modified-Since", in order to confirm whether or not the content 2 stored in the cache storage section 6b is the latest data (request 163). Because the proxy 3b is used to transmit the request 163 and the request 163 is a request message contained in the conditional request, the response executing section 15 in the server 2 received the request 163 confirms whether or not the content 2 held by the proxy 3b is the latest data (process 164). The response executing section 15 determines that the content 2 held by the proxy 3b is the latest data, and transmits, to the proxy 3b, a response message "304 NOT Modified" (response 165). The proxy 3b received the response 165 reads out the content 2 stored in the cache storage section 6b, and, in response to the request 161, transmits the read out content 2 to the client 4a (response 166). Note that, after transmitting response 165, the response executing section 15 creates a transmission log based on the response message, and adds the transmission log to the transmission log storage section 12 (process 167). Further, the content-storage-location information generating section 17 generates the content-storage-location information in which the content 2 and address information of the proxy 3b are associated with each other, and causes the content-storage-location information storage section 13 to store the content-storage-location information (process 168).

As described above, in Embodiment 1, in a case where the client 4 requests the content from the server 2 and the server 2 has transmitted the same content to the proxy before, the server 2 determines that the proxy 3 cashes the content, and transmits, to the client 4, an instruction to acquire the content from the proxy 3 which has been determined to possess the requested content.

Embodiment 1 is assumed to be applied to a VOD service in which a moving image content is used with an MP4 file format. Accordingly, in terms of loads to the server 2, the proxy 3, and the network 7, "transmission and reception of content" applies the heaviest loads.

Accordingly, the number of request and response in the sessions 110 and 120 and the sessions 130 and 140 in Example 1 is larger in the present invention than in a conventional method. "Transmission and reception of the content" in the present invention, however, is almost similar to that in the conventional method, except that the content is transmitted and received via the proxy 3 in the present invention. However, because of the sessions 110 and 120 and the sessions 130 and 140, it is possible to carry out "transmission and reception of the content" in the session 160 between the proxy 3b and the client 4a. This particularly decreases (A) a processing load of the server 2 and (B) an amount of transmission information (network load) of a network between the server 2 and the proxy 3.

For the sake of easy explanation, the following is the simplest example, specifically, an example where two proxies 3, two clients 4, and two kinds of contents managed by the server 2 are used. In a case of an actual content distribution service such as VOD, however, various and many contents are transmitted and received in an extremely huge system. Therefore, the present invention is greatly effective in reducing a load of the server 2 and a load of the network between the server 2 and the proxy 3. To put it another way, in the conventional methods, when the number of clients 4 becomes larger, processing loads especially of the server 2 and to a network between the server 2 and the client 4 become greatly higher, depending on the number of the clients 4. However, by using the present invention, the server 2 can efficiently utilize a throughput of the proxy 3 and a cash function. As a result, the load of the server 2 and the load of the network between the server 2 and the proxy 3 can be shared by the proxy 3 or by the network between the proxy 3 and the client 4.

### [HTTP Message in Embodiment 1]

The requests and responses involved in the operation sequence illustrated in Fig. 7 will be described in detail with reference to Figs. 8 through 10. Figs. 8 through 10 are views each illustrating example HTTP messages transmitted/responded as requests or responses. Fig. 8 shows example HTTP messages transmitted/responded in the sessions 110 and 120. Fig. 9 shows example HTTP messages transmitted/responded in the sessions 130 and 140. Fig. 10 shows example HTTP messages transmitted/responded in the sessions 150 and 160.

(a), (b), (c), (d), (e), and (f) of Fig. 8 show HTTP messages of the request 111, the response 113, the request 121, the request 123, the response 124, and the response 126 of Fig. 7, respectively.

(a), (b), (c), (d), (e), and (f) of Fig. 9 show HTTP messages of the request 131, the response 133, the request 141, the request 143, the response 144, and the response 146 of Fig. 7, respectively.

(a), (b), (c), (d), (e), and (f) of Fig. 10 show HTTP messages of the request 151, the response 153, the request 161, the request 163, the response 165, and the response 166 of Fig. 7, respectively.

### [HTTP messages in sessions 110 and 120]

The HTTP messages in the sessions 110 and 120 will be described below with reference to Fig. 8. Note that (a) through (f) of Fig. 9 correspond to (a) through (f) of Fig. 8, respectively, and that Fig. 9 is different from Fig. 8 only in that a content 1, a proxy 3a, and a client 4a in Fig. 8 are changed to a content 2, a proxy 3b, and a client 4b in Fig. 9, respectively. Therefore, description of the HTTP messages in the sessions 130 and 140 with reference to Fig. 9 will be omitted. Note also that, of all the components of the HTTP messages, (i) components specific to the present invention will be primarily described below and (ii) description of well-known components of the HTTP messages will be appropriately omitted.

### (Request 111 to request content)

As illustrated in (a) of Fig. 8, the HTTP message, which serves as the request 111 (i) transmitted from the client 4a to the server 2 and (ii) requesting the content 1, contains a request line and a header which notifies additional information.

The request line illustrated in (a) of Fig. 8 contains "GET" followed by additional information, which "GET" indicates a method for acquiring a content and which information specifies what content to be acquired. Specifically, the information is described in the form of "/content name". This means that the HTTP message illustrated in (a) of Fig. 8 serves as a request for transmission of the content 1 described by "content 1" in the request line.

Headers illustrated in (a) of Fig. 8 include a "Host" header for specifying a server to acquire the content, and the "Host" header shows an address, "example.com", indicative of the address of the server 2.

The headers illustrated in (a) of Fig. 8 also include an "Accept" header indicative of a data format that can be processed by the client 4a, and the "Accept" header shows, "video/mp4", indicative of video data in MP4 format. This allows the client 4a (the sender of the request) to inform the server 2 (the recipient of the request) that the client 4a is capable of receiving video data in MP4 format.

### (Response 113 specifying device from which content is to be acquired)

As illustrated in (b) of Fig. 8, the HTTP message, which serves as the response 113 (i) transmitted from the server 2 to the client 4a and (ii) specifying a device from which the content is to be acquired, contains a response line and a header.

The response line illustrated in (b) of Fig. 8 contains information instructing to use a proxy 3 specified by a "Location" header. Specifically, the instruction is described in the form of "status number (space) message". This means that the HTTP message illustrated in (b) of Fig. 8 serves as a response for instructing the client 4a to request the content 1 from the proxy 3 designated by the "Location" header described below.

The header illustrated in (b) of Fig. 8 includes the "Location" header for specifying a proxy to be used, and the "Location" header contains address information, "http://example-proxy1.com", indicative of an address of the proxy 3 to be used. From this, the client 4a (the recipient of the response) obtains the address information of the proxy 3 (the device that the client 4a requests the content 1).

### (Request 121 requesting content from specified proxy 3)

As illustrated in (c) of Fig. 8, the HTTP, which serves as the request 121 (i) transmitted from the client 4a to the proxy 3a and (ii) requesting the content 1, contains a request line and headers.

The request line illustrated in (c) of Fig. 8 contains "GET" followed by a URL, which "GET" indicates a method for acquiring the content and which URL is of the content to be requested. Specifically, the URL is described in the form of "http://name of a server storing a content/content name." This means that the HTTP message illustrated in (c) of Fig. 8 serves as a request for transmission of a content 1 stored in the server 2.

As in the case of the request 111, the headers illustrated in (c) of Fig. 8 include a "Host" header and an "Accept" header.

### (Request 123 from proxy 3a to server 2 for content)

As illustrated in (d) of Fig. 8, the HTTP message, which serves as the request 123 (i) transmitted from the proxy 3 to the server 2 and (ii) requesting the content 1, contains a request line and headers.

The request line illustrated in (d) of Fig. 8 contains "GET" followed by a URL, which "GET" indicates a method for acquiring a content and which URL is of the content to be requested. Specifically, the URL is described in the form of "/ content name." This means that the HTTP message illustrated in (a) of Fig. 8 serves as a request for transmission of the content 1 described by "content 1" in the request line.

As in the case of the request 111, the headers illustrated in (d) of Fig. 8 include a "Host" header and an "Accept" header. The headers also include a "Via" header indicative of a transmission path of the message, which "Via" header contains an address, "example-proxy1.com", indicative of an address of a device via which the message is transferred. From this, the server 2 which received the request finds out via which device (which is the proxy 3a in the present case) the request was transmitted.

### (Response 124 to transmit content from server 2 to proxy 3a)

As illustrated in (e) of Fig. 8, the HTTP message, which serves as the response 124 to transmit the content 1 from the server 2 to the proxy 3a, contains (i) a response line, (ii) headers, and (iii) a body containing the "content 1."

The response line illustrated in (e) of Fig. 8 contains information indicating that the request has been successfully received, that is, information indicating that the content thus requested is to be transmitted. Specifically, the response line is described in the form of "status number (space) response message".

The headers contain information regarding a content to be transmitted. In the example illustrated in (e) of Fig. 8, the headers include (i) a "Date" header indicative of date and time when the content was transmitted, (ii) a "Cache-Control" header issuing an instruction regarding a cache of the content, and (iii) a "Content-Type" header indicative of a type of the content to be transmitted.

In the example, the "Cache-Control" header contains "must-revalidate" causing the proxy 3a to confirm, before the cache of the content is transmitted to other devices, whether or not the content to be transmitted is the latest data. The "Content-Type" header contains "video/mp4" indicating that the content is video data in MP4 format.

The body illustrated in (e) of Fig. 8 contains "[binary-data: content1]" indicative of the data of the content 1.

### (Response 126 to transmit content from proxy 3a to client 4a)

As illustrated in (f) of Fig. 8, the HTTP message, which serves as the response 126 to transmit the content 1 from the proxy 3a to the client 4a, contains a response line, headers, and a body.

The response line illustrated in (f) of Fig. 8 contains information indicating that the request has been successfully received, that is, information indicating that the content thus requested is being transmitted. Specifically, the response line is described in the form of "status number (space) response message".

The headers contain information regarding a content to be transmitted. In the example illustrated in (f) of Fig. 8, the headers include (i) a "Cache-Control" header issuing an instruction regarding the cache of the content to be transmitted, (ii) a "Content-Type" header indicative of a type of the content, and (iii) a "Via" header indicative of a transmission path of the message.

As in the case of the response 124, the "Cache-Control" header and the "Content-Type" header illustrated in (f) of Fig. 8 contain "must-revalidate" and "video/mp4", respectively. A "Via" header (i) indicates that a request containing the "Via" header has been transmitted via a certain device and (ii) contains address information indicative of an address of the device via which the request has been transmitted. The response 124 contains address information, "example-proxy1.com", indicative of an address of the proxy 3a which is a device via which the response 124 was transmitted.

The body illustrated in (f) of Fig. 8 contains actual data (binary data) of the content 1. The "[binary-data: content1] in (f) of Fig. 8 indicates the data of the content 1.

### [HTTP message in sessions 150 and 160]

The following description will discuss, with reference to Fig. 10, the HTTP messages in the sessions 150 and 160. Note that (a) through (c) and (f) of Fig. 10 correspond to (a) through (c) and (f) of Fig. 8, respectively, and that Fig. 10 is different from Fig. 8 only in that the content 1 and the proxy 3a in Fig. 8 are changed to a content 2 and a proxy 3b in Fig. 10, respectively. Therefore, description of the HTTP messages serving as the request 151, the response 153, the request 161, and the response 166 will be omitted here.

### (Request 163 requesting content from proxy 3b to server 2 with condition)

As illustrated in (d) of Fig. 10, the HTTP message, which serves as the request 163 (i) transmitted from the proxy 3b to the server 2 and (ii) requesting the content 2 with conditions, contains a request line and headers.

The request line illustrated in (d) of Fig. 10 contains "GET" followed by a URL, which GET indicates a method for acquiring a content and which URL is of the content to be requested. Specifically, the URL is described in the form of "/content name."

The headers illustrated in (d) of Fig. 10 include (i) an "If-Modified-Since" header which requests a latest version of the content if the content is updated after date and time recorded in the "If-Modified-Since" header, (ii) an "Accept" header, (iii) a "Host" header, and (iv) a "Via" header. The "If-Modified-Since" header contains date and time "Sun, 31 May 2013 15:03:08 GMT" when the proxy 3b cached the content 2 requested by the request 163. This allows the server 2, which is a device that has received the request 163, to determine, based on the date and time when the proxy 3b cached the content 2, whether or not the content 2 stored in the proxy 3b is the latest data.

### (Response 165 transmitted from server 2 to proxy 3b)

As illustrated in (e) of Fig. 10, the HTTP message, which serves as the response 165 (i) transmitted from the server 2 to the proxy 3b and (ii) indicating that the content 2 stored in the proxy 3b is the latest data, contains a response line and a header.

The response line illustrated in (e) of Fig. 10 contains (i) the response message that the proxy 3b has not updated the content since the date and time when the proxy 3b cached the content and (ii) a status number of the response message. Specifically, the response line is described in the form of "status number (space) response message."

The header illustrated in (e) of Fig. 10 is a "Date" header indicative of date and time when the response 165 was transmitted.

### <Embodiment 2>

Embodiment 2 of the present invention illustrates an example where a client 4 has a function as and acts as a proxy so that it is possible to widely distribute (i) a processing load of a server 2 and (ii) a network load which is used to transmit data from the server 2.

More specifically, in Embodiment 2, the client 4, which includes a storage section, (i) caches an acquired content in the storage section, (ii) specifies, based on response messages previously transmitted from the server 2, a device (proxy 3 or client 4) that (possibly) possesses the content, and then (iii) transmits, to a device (client 4) which has requested the content, an instruction to acquire the content from the device thus specified.

That is, in Embodiment 2, the client 4 (i) is a device that requests a content and then acquires the content and (ii) acts as (a) a relaying device (proxy) that stores the content thus requested and then transfers the content to another device or (b) a playing device that acquires the content thus requested and then plays the content.

Note that (i) the proxy 3 and a client 4 acting as a proxy are hereinafter each referred to as a relaying device and (ii) a client 4 that acquires a requested content and then plays the content is hereinafter referred to as a content playing device.

The following description will discuss Embodiment 2 with reference to Figs. 11 through 19. Embodiment 2 is (i) different from Embodiment 1 only in that the client 4 in Embodiment 2 has a function also as a proxy and (ii) similar to Embodiment 1 in regard to the rest of the points. Therefore, the following description will mainly discuss the point in which Embodiment 2 is different from Embodiment 1.

### [Outline of Content Distribution System 1a]

First, an outline of a content distribution system 1a of Embodiment 2 will be described with reference to Fig. 11. Fig. 11 is a view illustrating a schematic configuration of the content distribution system 1a, and illustrates main configuration of devices constituting the content distribution system 1a. As illustrated in Fig. 11, the content distribution system 1a includes the server 2, the proxy 3, a client 4c, and a client 4d. The content distribution system 1a further includes (i) a content storage section 5 connected to the server 2, (ii) a cache storage section 6 connected to the proxy 3, and (iii) client storage sections 8c and 8d connected to the client 4c and the client 4d, respectively.

Hereinafter, the client storage sections 8c and 8d are generally referred to as a client storage section 8.

Since the proxy 3 of Embodiment 2 is similar to the proxy 3 of Embodiment 1 in terms of a configuration and an operation process, the details of the proxy 3 of Embodiment 3 will be omitted here.

### [Server 2]

The server 2 of Embodiment 2 has a configuration identical to that of the server 2 of Embodiment 1. However, since the client 4 of Embodiment 2 acts as a proxy in some cases, part of operations of a response executing section 15, a relaying device specifying section 16, and a content-storage-location information generating section 17 of Embodiment 2 are different from the operations of the corresponding members of Embodiment 1.

The response executing section 15 (i) receives, via a server communication section 11, a request message requesting transmission of a content, which request message has been transmitted from a relaying device or a content playing device and then (ii) transmits, to the relaying device or the content playing device depending on which one of the devices transmitted the request message, a response message in response to the request message thus received.

Specifically, the response executing section 15, which is ready to receive a request message to request to transmit a content, (i) receives the request message via the server communication section 11 and then (ii) refers to a header of the request message thus received, so as to determine whether or not the request message was transmitted via a relaying device. For example, the response executing section 15 can be configured to receive a request message and then to (i) determine, in a case where the request message contains a "Via" header (transmission path information), that the request message has been transferred from a relaying device that had received the request message from a content playing device or (ii) determine, in a case where the request message does not contain the "Via" header, that the request message was directly transmitted from the content playing device.

In a case where a request message is not one transmitted from a relaying device (i.e. the response executing section 15 receives the request message directly from a content playing device which is the sender of the request message), the response executing section 15 transmits, to the relaying device specifying section 16, an instruction to specify address information (e.g. a URI of the proxy 3 or the client 4 etc.) of a relaying device that (possibly) possesses a content requested by the content playing device. Then, the response executing section 15 receives, from the relaying device specifying section 16, the address information of the relaying device that possesses the content requested by the content playing device, and then transmits, in response to the request message, a response message to instruct the content playing device to acquire the content from the relaying device. For example, by supplying the address information to the "Location" field with use of "305 USE Proxy", the response executing section 15 transmits, to the content playing device, an instruction (as a response message) to resend the request message to the relaying device that (possibly) possesses the content requested by the content playing device.

In a case where the request message thus received is one transmitted via the relaying device (i.e. the response executing section 15 receives the request message from the relaying device), the response executing section 15 proceeds to determine whether or not the request message is a conditional request such as "If-Modified-Since". If the request message is not provided with a conditional request, the response executing section 15 reads out, from the content storage section 5, a content requested by the request message, and then transmits, to the relaying device, the content in response to the request message.

Meanwhile, in a case where the request message is a conditional request, the response executing section 15 proceeds to determine whether or not the data of the content the relaying device possesses is the latest. To put it another way, the response executing section 15 determines whether or not the data of the content the relaying device possesses is identical to that stored in the content storage section 5.

In a case where the data of the content possessed by the relaying device from which the request message was transmitted, is not the latest data of the content, the response executing section 15 reads out the requested content from the content storage section 5, and then transmits the content thus read out, to the relaying device in response to the request message. In a case where the data of content possessed by the relaying device from which the request message was transmitted, is the latest data of the content, the response executing section 15 transmits, to the relaying device, a response message (in response to the request message) indicating that the relaying device possesses the latest data. Examples of such a response message encompass "304 NOT modified".

As in the case of Embodiment 1, the response executing section 15 also creates a transmission log based on the response message thus transmitted, and then stores the transmission log in a transmission log storage section 12.

Note that, as in the case of Embodiment 1, in a case where the response executing section 15 transmits the content to a relaying device from which a request message has been transmitted, "Cache-Control: must-revalidate" or "Cache-Control: proxy-revalidate", for example, may be added to the header of the content. Accordingly, in a case where the relaying device, which has acquired the content, transmits the content in response to another request, it is possible to always cause the relaying device to transmit, to the server 2, an inquiry as to whether or not the content is the latest, before the relaying device transmits the content.

The relaying device specifying section 16 is for determining, in accordance with an instruction from the response executing section 15, a relaying device that (possibly) possesses a content requested by a content playing device.

Specifically, the relaying device specifying section 16 receives an instruction from the response executing section 15, and accordingly reads out, from a content-storage-location information storage section 13, content-storage-location information. By referring to the content-storage-location information, the relaying device specifying section 16 specifies address information of a relaying device associated with the content, as address information of the relaying device from which the content requested by a content playing device is to be acquired. Thereafter, the relaying device specifying section 16 transmits the address information thus specified to the response executing section 15.

In a case where content-storage-location information for a content requested by a content playing device is not stored in the content-storage-location information storage section 13, the relaying device specifying section 16 can (i) specify predetermined (default) address information as address information of a relaying device from which the content is to be acquired, which predetermined address information is specific to each content requested by a content playing device or (ii) randomly select, out of relaying devices connected to the server 2 via a network 7, a relaying device from which the content is to be acquired.

In a case where the content-storage-location information storage section 13 stores a plurality of pieces of content-storage-location information containing address information of relaying devices which are each associated with a content requested by a content playing device, the relaying device specifying section 16 can (i) specify the pieces of address information as address information from which the content is to be acquired and then (ii) create a list of the relaying devices from which the content is to be acquired, which relaying devices are indicated by the respective pieces of address information thus identified. In a case where the relaying device specifying section 16 specifies the plurality of pieces of address information as address information each indicative of a location from which the content is to be acquired, the relaying device specifying section 16 can create a list of content storage location by assigning priorities to the plurality of pieces of address information.

As in the case of Embodiment 1, the relaying device specifying section 16 may (i) select, based on date and time contained in content-storage-location information, a relaying device from which a content is to be acquired or (ii) select, based on physical or network-structural distances between a content playing device and relaying devices, a relaying device from which a content is to be acquired. The relaying device specifying section 16 may also select, in view of the load status of each relaying device, a relaying device which (i) (possibly) possesses a content requested by a content playing device and (ii) has a low load. To be more specific, the relaying device specifying section 16 can select, by referring to a transmission log stored in the transmission log storage section 12, address information of a relaying device from which the content is acquired. In addition, the relaying device specifying section 16 may select, in view of the number of accesses to the server 2 from the relaying devices access, a relaying device that (possibly) possesses a content requested by a content playing device. Note that a process in Embodiment 2 carried out by the relaying device specifying section 16 in order to determine which relaying device (possibly) possesses a content requested by a content playing device is identical to a process in Embodiment 1 carried out by the relaying device specifying section 16 in order to determine which proxy 3 (possibly) possesses a content requested by the client 4. Hence, description of the process in Embodiment 2 will be omitted here.

The content-storage-location information generating section 17 is for (i) generating, from a transmission log stored in the transmission log storage section 12, content-storage-location information for determining address information of a relaying device that (possibly) possesses a content and then (ii) storing the information in the content-storage-location information storage section 13. Unlike the case of Embodiment 1, the content-storage-location information generating section 17 in accordance with Embodiment 2 includes, as a device that (possibly) possesses a content, not only the proxy 3 but also the client 4.

Specifically, the content-storage-location information generating section 17 generates content-storage-location information by associating (A) a content transmitted from the server 2, (B) address information to which the content was transmitted, and (C) the date and time when the content was transmitted from the server 2, wherein the content, the address information, and the date and time are specified by referring to a transmission log (content transmission log), which indicates that the server 2 has transmitted the content to a relaying device. This is because the relaying device, to which the content has been transmitted, is considered to store the content.

The content-storage-location information generating section 17 generates content-storage-location information by associating (A) a content confirmed as a latest version, (B) address information of a device (relaying device) which possesses the content, and (C) the date and time when the server 2 transmitted a response message that indicates that the content possessed by the relaying device is the latest version, wherein the content, the address information, and the date and time are specified by referring to a transmission log (version notification log), which indicates that the server 2 has transmitted the response message. This is because the relaying device, to which the response message has been transmitted, stores the latest version of the content.

The content-storage-location information generating section 17 can generate content-storage-location information by associating (A) a content, (B) address information to which a content acquisition instruction for the content was transmitted, and (C) date and time when the response message was transmitted, wherein the content, the address information, and the date and time are specified by referring to a transmission log (acquisition instructing log), which indicates that the server 2 transmitted to a content playing device the content acquisition instruction to specify a device from which the content is to be acquired. This is because the content playing device, to which the content acquisition instruction has been transmitted, is highly likely to store the content.

There is a possibility that a playing device, to which a content acquisition instruction for a content has been transmitted, fails to acquire the content. Therefore, it is possible to generate content-storage-location information by utilizing both a content transmission log and an acquisition instructing log. That is, in a case where an acquisition instructing log for a content and a content transmission log indicative of transmission of the content from the server 2 to a relaying device are both available, it is possible to generate content-storage-location information by associating together (i) the content, (ii) an address to which the content acquisition instruction has been transmitted, and (iii) date and time contained in the content transmission log. This is because (a) a playing device is considered to request the content from the server 2 in a case where a relaying device that a content acquisition instruction designates as a device from which the content is to be acquired does not store the content and (b), in a case where the server 2 responds to the request for the content, the content is transmitted to the playing device via a relaying device.

The content-storage-location information generating section 17 can generate content-storage-location information with use of an acquisition instructing log and a version notification log. That is, in a case where there exist (i) a content transmission log which indicates transmission of a content acquisition instruction instructing a playing device to acquire a content from a certain relaying device and (ii) a version notification log which indicates that the server 2 notified the relaying device that the content possessed by the relaying device is the latest version of the content, the content-storage-location information generating section 17 can generate content-storage-location information by associating together (i) the content, (ii) an address of the playing device to which the content acquisition instruction was transmitted, and (iii) date and time contained in the version notification log.

The content-storage-location information generating section 17 may generate content-storage-location information (i) whenever a certain transmission log is added to the transmission log storage section 12 or (ii) by reading out a transmission log at the regular intervals.

Examples of a specific operation of the content-storage-location information generating section 17 in accordance with Embodiment 2 will be described below with reference to Figs. 12 and 13. Fig. 12 is a table illustrating an example of a transmission log stored in the transmission log storage section 12. Fig. 13 is a table illustrating an example of content-storage-location information stored in the content-storage-location information storage section 13. An example of the operation of the content-storage-location information generating section 17 for generating the content-storage-location information illustrated in Fig. 13 will be described below with reference to the transmission log illustrated in Fig. 12.

First, the content-storage-location information generating section 17 generates content-storage-location information 45 of Fig. 13 by associating together, with use of a transmission log (content transmission log) 42 in which "200 OK" is contained, (i) "content 1", (ii) http://example-proxy1.com, and (iii) "Sun, 31 May 2013 13:53:38 GMT", each of which is contained the transmission log 42.

Then, the content-storage-location information generating section 17 generates content-storage-location information 46 from (i) a transmission log (acquisition instructing log) 41 in which "305 Use Proxy (proxy 1)" is contained and (ii) the transmission log 42 (a) in which "200 OK" is contained, (b) which has a content ID identical to that of the transmission log 41, and (c) which indicates that "proxy 1" contained in the transmission log 41 has been responded. In other words, the content-storage-location information 46 illustrated in Fig. 13 is generated by associating together "content 1", "http://example-client1.com" which is an address (contained in the transmission log 41) of a designation and "Sun, 31 May 2013 13:53:38 GMT" which is a date and time (contained in the transmission log 42) when the request was transmitted.

Note that, since "http://example-proxy1.com" is also considered to store "content 1", "http://example-proxy1.com" can be added to address information contained in the content-storage-location information 46.

Thereafter, the content-storage-location information generating section 17 generates content-storage-location information 47 illustrated in Fig. 13 by associating together, with use of a transmission log (version notification log) 44 in which "304 Not Modified" is contained, (i) "content 1", (ii) "http://example-client1.com", and (iii) "Mon, 01 Jun 2013 08:05:30 GMT", each of which is contained the transmission log 44.

Finally, the content-storage-location information generating section 17 generates content-storage-location information 46 from (i) a transmission log (acquisition instructing log) 43 in which "305 Use Proxy (client 1)" is contained and (ii) the transmission log 44 (a) in which "304 Not Modified" is contained, (b) which has a content ID identical to that of the transmission log 43, and (c) which indicates that "client 1" contained in the transmission log 43 has been responded. To put it another way, the content-storage-location information 47 is generated by associating together "content 1", "http://example-client2.com" which is an address (contained in the transmission log 43) of a recipient of a request for a content, and "Mon, 01 Jun 2013 08:05:30 GMT" which is a date and time (contained in the transmission log 44) when the request was transmitted. Note that, since "http://example-client1.com" also is expected to store "content 1", "http://example-client1.com" can be added to address information contained in the content-storage-location information 47.

### [Client 4]

The client 4 in accordance with Embodiment 2 functions also as a proxy. Therefore, unlike the case of Embodiment 1, a client control section 32 in accordance with Embodiment 2 includes a response/request executing section 35 instead of a request executing section 33. A client storage section 8 for caching contents is connected to the client 4. Alternatively, the client storage section 8 can be provided inside the client 4.

In a case where the client 4 acts as a content playing device, the response/request executing section 35 executes an operation similar to that of the request executing section 33.

Specifically, the response/request executing section 35 generates a request message requesting transmission of a content, transmits the request message to the server 2 via a client communication section 31, and then receives a response message as a response to the request message. That is, the response/request executing section 35 receives, as the response message from the server 2, (i) information that specifies a relaying device and (ii) an instruction to transmit, to the relaying device, a request message requesting the content. The response/request executing section 35 receives the response message, and then transmits, to the relaying device thus specified by the server 2, the request message requesting transmission of the content. Thereafter, the response/request executing section 35 receives the content from the relaying device, and then stores in the content in the client storage section 8.

In a case where the client 4 acts as a relaying device, the response/request executing section 35 executes an operation similar to that of a request executing section 23 of the proxy 3.

Specifically, the response/request executing section 35 acts as a device for transmitting, to a content playing device, a content specified by a request message requesting the content, which request message was transmitted from the content playing device.

More specifically, the response/request executing section 35, which is ready to receive from a content playing device a request message to request transmission of a content, (i) receives a request message from the content playing device via the client communication section 31 and then (ii) determine whether or not the content thus requested is stored in the client storage section 8.

In a case where the content is not stored in the client storage section 8, the response/request executing section 35 (i) examines a Host field of the request message and then (ii) transmits a request message to a server 2 whose URL is shown in the Host field, which request message requests the content requested by the content playing device. Thereafter, the response/request executing section 35 acquires the content from the server 2, stores the content thus acquired in the client storage section 8, and then transmits the content to the content playing device.

In a case where the content is stored in the client storage section 8, the response/request executing section 35, in order to transmit, to the server 2, an inquiry as to whether or not the content stored in the client storage section 8 is the latest data, (i) creates a request message with a conditional request by adding, to a regular request message, "If-Modified-Since" containing information about time at which the relaying device (client 4) has acquired the content and then (ii) transmits, to the server 2, the request message thus created.

Upon receipt of a "304 NOT Modified" response message from the server 2 in response to the request message, the response/request executing section 35 (i) determines that the content stored in the client storage section 8 is the latest data, (ii) reads out the content from the client storage section 8, and then (iii) transmits the content to the content playing device.

On the other hand, in a case where the content stored in the client storage section 8 is not the latest data, the server 2 transmits, to the response/request executing section 35, the latest version of the content in response to the request message, and then the response/request executing section 35 receives the content thus transmitted. Thereafter, the response/request executing section 35 stores the content thus received in the client storage section 8, and then transmits the content to the content playing device.

Note that the response/request execution section 23 may transmit the content to the content playing device while the content contains, in its header, "Cache-Control: must-revalidate" or "Cache-Control which has been added by the server 2. Accordingly, in a case where the content, which has been acquired by the content playing device serving as a destination of a content, is transmitted in response to another request, it is possible to cause the content playing device to always transmits, to the server 2, an inquiry as to whether or not the content is the latest version before the content playing device transmits the content.

### [Processes carried out by each device]

The following description will discuss, with reference to Figs. 14 through 16, processes carried out by the server 2 and the client 4. Since a process carried out by the proxy 3 in Embodiment 2 is identical to that in Embodiment 1, description of the process will be omitted here.

### [Process carried out by server 2]

The operation carried out by the server 2 will be described first with reference to Fig. 14. Fig. 14 is a flowchart showing an exemplary process which is carried out by the server 2.

The response executing section 15 is ready to receive a request message to request to transmit a content. When the response executing section 15 receives, via the server communication section 11, the request message to request to transmit the content (S501), the response executing section 15 refers to a header of the request message thus received, so as to determine whether or not the request message thus received is transmitted via a relaying device (S502).

In a case where the content playing device has transmitted the received request message (NO in S502), the response executing section 15 transmits, to the relaying device specifying section 16, an instruction to specify a relaying device from which the content playing device acquires the content. In response to the instruction from the response executing section 15, the relaying device specifying section 16 reads out content-storage-location information from the content-storage-location information storage section 13 (S503). With reference to the content-storage-location information thus read out, the relaying device specifying section 16 specifies, as address information of a device from which the content should be acquired, a URI of the relaying device associated with the content that the content playing device requests (S504). The relaying device specifying section 16 transmits such specified address information to the response executing section 15. The response executing section 15 transmits, to the content playing device, from the relaying device indicated by an address contained in the address information which has been specified by the relaying device specifying section 16, a response message to instruct the content playing device to acquire a requested content (S505). The response executing section 15 creates a transmission log based on the response message which has been transmitted to the content playing device, and adds the transmission log thus created to the transmission log storage section 12 (S510).

Meanwhile, in a case where the relaying device transmits the request message thus received (YES in S502), the response executing section 15 then determines whether or not the received request message is a conditional request such as "If-Modified-Since" (S506). In a case where the received request message is not a conditional request (NO in S506), the response executing section 15 reads out, from the content storage section 5, the content requested by the relaying device, and, in response to the request message from the relaying device, transmits the content thus read out to the relaying device (S507). After that, the response executing section 15 creates a transmission log based on the response message which has been transmitted to the relaying device, and adds the transmission log thus created to the transmission log storage section 12 (S510).

In a case where the received request message is provided with a conditional request (YES in S506), the response executing section 15 determines whether or not data of the content held by the relaying device is the latest (S508). In a case where the data of the content kept by the relaying device is not the latest (NO in S508), the response executing section 15 reads out, from the content storage section 5, the content requested by the relaying device, and, in response to the request message from the relaying device, transmits to the relaying device the content thus read out (S507). Meanwhile, in a case where the data of the content held by the relaying device is the latest (YES in S508), the response executing section 15 transmits, to the relaying device, a response message that the data of the content held by the relaying device is the latest, in response to the request message from the relaying device (S509). Then, the response executing section 15 adds, to the transmission log storage section 12, the response message which has been transmitted to the relaying device (S510).

Note that, in a case where the response executing section 15 transmits the content to the relaying device in S507, "Cache-Control: must-revalidate" or "Cache-Control: proxy-revalidate", for example, is added to the header of the content. Accordingly, in a case where the relaying device serving as a destination of a content transmits the content held by the cache storage section 6 in response to another request, it is possible to always cause the relaying device to transmit, to the server, an inquiry as to whether or not the content is the latest, before the relaying device transmits the.

### [Process carried out by client 4]

A process carried out by the client 4 will be described next with reference to Figs. 15 and 16. As described earlier, the client 4 acts as a relaying device or as a content playing device. An operation of the client 4 in a case where the client 4 acts as a content playing device will be described first with reference to Fig. 15.

### (Process carried out by client 4 as content playing device)

Fig. 15 is a flowchart showing an exemplary process which is carried out by the client 4 serving as a content playing device. As shown in Fig. 15, the response/request executing section 35 transmits, to the server 2, a request message to request to transmit a content (S521). In response to the request message, the response/request executing section 35 receives a response message to instruct the response/request executing section 35 to acquire a content from a designated relaying device (S522). In response to such an instruction from the server 2, the response/request executing section 35 transmits the request message to the relaying device designated by the server 2 (S523). Then, in response to the request message, the response/request executing section 35 acquires the content from the relaying device which has received the request message (S524).

### (Process carried out by client 4 as content playing device)

The description will discuss, with reference to Fig. 16, a process of the content 4 in a case where the client 4 acts as a content playing device. Fig. 16 is a flow chart showing an exemplary process which is carried out by a client 4 acting as a content playing device.

As shown in Fig. 16, the response/request executing section 35 is ready to receive, from a content playing device (the client 4 different from the one described in the previous example), a request message requesting transmission of a content. The response/request executing section 35 receives the request message from the content playing device via the client communication section 31 (S541), and then determines whether or not the content requested by the request message is stored in the client storage section 8 (S 542).

In a case where the content is not stored in the client storage section 8 (NO in S542), the response/request executing section 35 examines a Host field of the request message, and then transmits a request message to a server 2 whose URL is shown in the Host field, which request message requests the content requested by the content playing device (S543). The response/request executing section 35 acquires the content from the server 2 (S544), stores the content thus acquired in the client storage section 8 (S545), and then transmits the content to the content playing device (S546).

In a case where the content requested by the content playing device is stored in the content storage section 8 (YES in S542), the response/request executing section 35 (i) creates a request message provided with a conditional request by adding, to a regular request message, "If-Modified-Since" containing information about time at which the client device 4 has acquired the content and then (ii) transmits the request message thus created to the server 2 (S547).

Upon receipt of a "304 NOT Modified" response message from the server 2 (YES in S548), the response/request executing section 35 reads out the content stored in the client storage section 8, and then transmits the content to the content playing device (S426).

On the contrary, in a case where the content stored in the client storage section 8 is not the latest data, the server 2 transmits, to the response/request executing section 35, the latest version of the content as a response to the request message (carrying the conditional request), and then the response/request executing section 35 receives the content thus transmitted (S544). The response/request executing section 35 stores the content thus received in the client storage section 8 (S545), and then transmits the content to the content playing device (S546).

Note that, in S546, the response/request execution section 23 transmits the content to the content playing device while the content contains, in its header, "Cache-Control: must-revalidate" or "Cache-Control which has been added by the server 2. Accordingly, in a case where the content, which has been acquired by the client 4 serving as a destination of a content, is transmitted in response to another request, it is possible to keep such a state that the content playing device should always transmit, to the server 2, as to whether or not the content is the latest version, before the content playing device transmits the content.

### [Example 2]

The following description will further discuss Embodiment 2 in more detail with reference to Fig. 17 illustrating Example 2. Example 2 will illustrate an exemplary operation of a content distributing system 1a which instructs, to a content playing device (which is a client 4d), from which relaying device (client 4c) the content playing device should acquire a content. Fig. 17 is a view illustrating an example operation sequence of the content distribution system 1a in Example 2.

Note that Example 2 is carried out on the following conditions. A content 1 is stored in the content storage section 5, and both the client storage sections 8c and 8d and the cache storage section 6 cashes no content. Further, the server 2 is set so that the content 1 is acquired from the proxy 3 as its default. Furthermore, when the process shown in Fig. 17 is started in Example 2, a transmission log and content-storage-location information are not stored in the transmission log storage section 12 and the content-storage-location information storage section 13, respectively. Still further, the response executing section 15 creates the transmission log of Fig. 12 every time when a response message is transmitted, and the content-storage-location information generating section 17 generates the content-storage-location information of Fig. 13 every time when a content transmission log or a version notification log (transmission log whose "transmitted contents" is "200 OK" or "304 Not Modified") is added to the transmission log storage section 12.

Further, Example 2 is carried out on condition that a sequence starting from a time at which the content playing device transmits a request message and ending at a time at which the content playing device receives a response message in response to the request message is considered as a single session.

As shown in Fig. 17, in a session 210, the client 4c transmits, to the server 2, a request message to request to transmit the content 1 (request 211). In the server 2 which has received the request 211, the response executing section 15 transmits, to the relaying device specifying section 16, an instruction to specify a relaying device to acquire the content 1. In response to the instruction, the relaying device specifying section 16 confirms whether or not the content-storage-location information is stored in the content-storage-location information storage section 13 (process 212). Here, the content-storage-location information storage section 13 does not contain the content-storage-location information indicative of the proxy 3 to acquire the content 1, the relaying device specifying section 16 specifies the default proxy 3a as the proxy 3 to acquire the content 1. The response executing section 15 transmits, to the client 4a, the response message to instruct the client 4c to acquire a requested content from the proxy 3 indicated by address information specified by the relaying device specifying section 16 (response 213). Then, the response executing section 15 creates a transmission log based on the response message thus transmitted, and adds the transmission log to the transmission log storage section 12 (process 214).

Then, in the session 220, the client 4c, which has received the response 213, transmits, to proxy 3, the request message to request to transmit the content 1 (request 221). The proxy 3 received the request 221 confirms whether or not the content 1 is stored in the cache storage section 6 (process 222). Here, the content 1 is not stored in the cache storage section 6, so that the proxy 3 transmits, to the server 2, the request message based on the request 221 (request 223). In the server 2 which has received the request 223 from the proxy 3, the response executing section 15 transmits the content 1 to the proxy 3 (response 124). The proxy 3a received the response 124 stores the acquired content 1 in the cache storage section 6 and caches the content 1 (process 225). After that, the proxy 3a transmits, to the client 4a, the content 1 as a response to the request 221 (response 226). When acquiring the content 1 from the proxy 3, the client 4c stores the content 1 thus acquired in the client storage section 8c and caches the content 1 (process 227). Note that, after transmitting the response 224, the response executing section 15 creates a transmission log based on the response message thus transmitted, and adds the transmission log to the transmission log storage section 12 (process 228). Further, the content-storage-location information generating section 17 generates content-storage-location information by associating the content 1 and address information of the proxy 3 with each other, and causes the content-storage-location information to be stored in the content-storage-location information storage section 13. Furthermore, the content-storage-location information generating section 17 generates content-storage-location information by associating the content 1 and address information of the client 4c with each other, and causes the content-storage-location information to be stored in the content-storage-location information storage section 13(process 229).

When the session 220 is completed, the content 1 is in a state of being cached in the cache storage section 6 of the proxy 3 and in the cache storage sections 8c of the client 4c. That is, the content-storage-location information storage section 13 stores (A) the content-storage-location information in which the content 1 and the proxy 3a are associated with each other and (B) content-storage-location information in which the content 1 and the client 4 are associated with each other. That is, in this state, not only the proxy 3 but also the client 4c potentially serves as a relaying device from which the content 1 is acquired.

Next, in a session 230, the client 4d transmits, to the server 2, a request message to request to transmit the content 1 (request 231). In the server 2 which has received the request 231, the response executing section 15 transmits, to the relaying device specifying section 16, an instruction to specify a relaying device from which the content 1 is to be acquired. The relaying device specifying section 16 receives the instruction, and then checks the content-storage-location information in the content-storage-location information storage section 13 (process 232). At this point, (i) the information stored in the content-storage-location information storage section 13 identifies the proxy 3b and the client 4c both as locations where the content 1 is stored and (ii) the content-storage-location information pointing to the client 4c is later than the content-storage-location information pointing to the proxy 3. Therefore, the relaying device specifying section 16 specifies the client 4c as a relaying device from which the content 1 is to be acquired. The response executing section 15 transmits, to the client 4d, a response message with an instruction to acquire the content 1 from the client 4c thus specified by the relaying device specifying section 16 (response 233). The response executing section 15 creates a transmission log based on the response message, and then adds the transmission log to the transmission log storage section 12 (process 234).

In a session 240, the client 4d (which has received the response 233) transmits, to the client 4c, a request message (request 241) in accordance with the instruction of the server 2, which request message request to transmit the content 1. The client 4c receives the request 241, and then checks whether or not the content 1 is stored in the client storage section 8c (process 242). Since the content 1 is already stored in the client storage section 8c, the client 4c transmits a conditional request message (request 243) to the server 2 in order to examine whether or not the content 1 stored in the client storage section 8c is the latest data, which conditional request message is created by adding "If-Modified-Since" to a request message based on the request 241. The request 243 contains a "Via" header, and is a conditional request. Hence, the response executing section 15 in the server 2 that has received the request 243 verifies whether or not the content 1 stored in the client 4c is the latest data (process 244). The response executing section 15 determines that the content 1 stored in the client 4c is the latest data, and then transmits, to the client 4c, a response message in which "304 NOT Modified" is contained (response 245). Upon receipt of the response 245, the client 4c reads out the content 1 stored in the client storage section 8c, and then transmits, to the client 4d, the content 1 in response to the request 241 (response 246). Subsequent to the transmission of the response 245, the response executing section 15 creates a transmission log based on the response message thus transmitted, and then adds the transmission log to the transmission log storage section 12 (process 247). The content-storage-location information generating section 17 generates content-storage-location information by associating the content 1 with the address information of the client 4c, and then stores the content-storage-location information in the content-storage-location information storage section 13. The content-storage-location information generating section 17 also creates content-storage-location information associating the content 1 with address information of the client 4d, and then stores the content-storage-location information in the content-storage-location information storage section 13 (process 248).

In Embodiment 2, the client 4 acts as a content playing device or as a relaying device. This gives a greater number of candidates that the server 2 can designate as a relaying device. Therefore, a processing load of the server 2 and a network load which is used to transmit data from the server 2 can be diluted by more widely distributing the loads over the network so that the loads are also shared by the clients 4 and networks between a client 4 and another client 4.

### [HTTP Message in Example 2]

The details of the requests and responses illustrated in the operation sequence diagram of Fig. 17 will be illustrated in Figs. 18 and 19. Figs. 18 and 19 are views each illustrating example HTTP messages transmitted/received as requests and responses, Fig. 18 particularly illustrating HTTP messages in the session 210 and 220, and Fig. 19 particularly illustrating HTTP messages in the sessions 230 and 240.

(a), (b), (c), (d), (e), and (f) of Fig. 18 illustrate HTTP messages of the request 211, the response 213, the request 221, the request 223, the response 224, and the response 226 of Fig. 17, respectively.

(a), (b), (c), (d), (e), and (f) of Fig. 19 illustrate HTTP messages of the request 231, the response 233, the request 241, the request 243, the response 245, and the response 246 of Fig. 17, respectively.

(a) through (f) of Fig. 18 correspond to (a) through (f) of Fig. 8, respectively, and Fig. 18 is different from Fig. 8 only in that the client 4a and the proxy 3a in Fig. 8 are changed to the client 4c and the proxy 3 in Fig. 18, respectively. Also, (a) through (f) of Fig. 19 correspond to (a) through (f) of Fig. 10, respectively, and Fig. 19 is different from Fig. 10 only in that the content 2, the client 4a, and the proxy 3b in Fig. 10 are changed to the content 1, the client 4d, and the client 4c in Fig. 19, respectively. Description other than the above difference has been already made.

### <Embodiment 3>

Embodiment 3 of the present invention will discuss an example where (i) a server 2 specifies a plurality of relaying devices from which a content is acquired and (ii) a content playing device acquires a content by selecting a relaying device from the plurality of relaying devices thus specified, in order to more widely distribute a load of a network between the content playing device and the relaying device.

Specifically, in Embodiment 3, a client 4, which is the content playing device, (i) selects one relaying device from the plurality of relaying devices specified by the server 2 and (ii) acquires a content from the relaying device thus selected. In a case where a delay occurs in regard to the acquisition of the content while the content is being acquired, the client 4 reselects another relaying device from the plurality of relaying devices specified by the server 2, so as to change the relaying device from which the content is acquired.

Embodiment 3 will be described below with reference to Figs. 20 through 28. Embodiment 3 differs from Embodiment 2 only in a configuration of the client 4 and a data format of a content which is managed by the server 2, and Embodiment 3 is identical to Embodiment 2 in other points. As such, the difference of Embodiment 3 from Embodiment 2 will be mainly described below.

### [Outline of content distribution system 1b]

First, an outline of a content distribution system 1b of Embodiment 3 will be described with reference to Fig. 20. Fig. 20 is a view illustrating an outline of the content distribution system 1b in accordance with Embodiment 3 and a main configuration of devices constituting the content distribution system 1b. As illustrated in Fig. 20, the content distribution system 1b includes the server 2, proxies 3a, 3b and 3c, and clients 4e and 4f. Further, the content distribution system 1b includes: a content storage section 5 which is connected to the server 2; cache storage sections 6a, 6b, and 6c which are connected to the proxies 3a, 3b, and 3c, respectively; and client storage sections 8e and 8f which are connected to the client 4e and 4f, respectively.

The proxy 3 of Embodiment 3 is identical to the proxy 3 of Embodiment 1 in a configuration and an operation process. As such, details of the proxy 3 will not be discussed here.

### [Server 2]

The server 2 of Embodiment 3 (i) has the same configuration with that of the server 2 of Embodiment 2 and (ii) executes the same operation as that of the server 2 of Embodiment 2. However, in order to allow the content playing device to select a relaying device from which a content is acquired, the server 2 of Embodiment 3 (i) specifies a plurality of relaying devices which (possibly) possess a content that the content playing device requests, (ii) presents, to the content playing device, a content storage location list containing address information of the plurality of relaying devices thus specified, and (iii) instructs the content playing device to acquire a content from one of the relaying devices which exist at an address indicated by the address information contained in the content storage location list thus presented.

Specifically, upon receipt of a request message to request a content directly from the content playing device, a response executing section 15 transmits, to a relaying device specifying section 16, an instruction to specify address information of a relaying device (e.g., URI of the proxy 3 or the client 4, etc.) which (possibly) possesses the content that the content playing device requests. Then, the response executing section 15 receives a content storage location list, from the relaying device specifying section 16, the content storage location list containing a plurality of pieces of address information of the relaying device which possesses the content that the content playing device requests. Then, the response executing section 15 transmits a response message to the content playing device in response to the request message from the content playing device, the response message instructing to acquire the content that the content playing device requests, from one of the relaying devices of the address indicated by the address information contained in the content storage location list which is created by the relaying device specifying section 16.

Note that, since other processes of the response executing section 15 are identical to those of Embodiment 2, those processes will not be discussed here.

In accordance with the instruction from the response executing section 15, the relaying device specifying section 16 (i) specifies a plurality of relaying devices which (possibly) possess a content that the content playing device requests and (ii) creates a content storage location list containing address information of the plurality of relaying devices thus specified.

Specifically, the relaying device specifying section 16 reads out content-storage-location information from the content-storage-location information storage section 13 in accordance with the instruction of the response executing section 15. With reference to the content-storage-location information thus read out, the relaying device specifying section 16 (i) specifies a plurality of pieces of address information of a relaying device associated with the content that the content playing device requests and (ii) creates a content storage location list containing the plurality of pieces of address information thus specified. The relaying device specifying section 16 transmits the content storage location list thus created to the response executing section 15.

In a case where the content-storage-location information storage section 13 stores (i) no content-storage-location information containing the content that the content playing device requests or (ii) only one piece of content-storage-location information containing the content that the content playing device requests, the relaying device specifying section 16 may (a) specify predetermined (default) address information as address information of the device from which the content that the content playing device requests is available, and (b) creates a content storage location list containing a plurality of pieces of address information. Further, in a case where the content-storage-location information storage section 13 stores (i) no content-storage-location information containing the content that the content playing device requests or (ii) only one piece of storage location information containing the content that the content playing device requests, the relaying device specifying section 16 may (a) specify, at random, from relaying devices connected to the server 2 via a network 7, address information of the device from which the content is acquired and (b) create a content storage location list.

Moreover, the relaying device specifying section 16 may create a content storage location list by adding priorities to the pieces of address information thus specified. In this case, as with Embodiment 2, a priority may be determined on a basis of date and time contained in the content-storage-location information, a physical or a network-structural distance between the content playing device and the relaying device, a load status of the relaying device, a transmission log which is stored in a transmission log storage section 12, or the like.

### [Client 4]

The client 4 of Embodiment 3, unlike that of Embodiment 2, when functioning as a content playing device, (i) receives a content storage location list which is transmitted from the server 2 and (ii) acquires a content that the client 4 requests, from one of relaying devices which exist at an address indicated by the address information contained in the content storage location list thus received.

In the client 4 illustrated in Fig. 20, a client control section 32 includes, in addition to a response/request executing section 35, a client status determining section 36 and a relaying device selecting section (relaying device changing means) 37, both of which are not included in Embodiment 2.

The response/request executing section 35 receives, from the server 2, as a response message, (i) a content storage location list and (ii) an instruction to transmit a request message for requesting a content to one of the relaying devices which exist at the address indicated by the address information contained in the content storage location list.

When the response/request executing section 35 receives the content storage location list and the instruction, the relaying device selecting section 37 selects one of pieces of the address information contained in the content storage location list that the response/request executing section 35 receives. The relaying device selecting section 37 transmits, to the response/request executing section 35, an instruction to acquire a content from a relaying device of an address indicated by the address information thus selected.

In a case where priority is not added to the address information contained in the content storage location list (in a case where the server 2 does not instruct an order of selecting a relaying device from which a content is acquired), the relaying device selecting section 37 may select (i) a relaying device, at random, on a basis of the address information contained in the content storage location list, (ii) a relaying device on a basis of a predetermined rule (default), or (iii) a relaying device having a shortest physical or network-structural distance to the client 4.

Meanwhile, in a case where priority is added to the address information contained in the content storage location list, the relaying device selecting section 37 selects address information having a highest priority.

When the relaying device selecting section 37 receives, from the client status determining section 36, delay information indicating that an acquisition speed at which the response/request executing section 35 acquires a content (receiving speed required to acquire a content) is slower than a predetermined receiving speed, the relaying device selecting section 37 (i) changes the relaying device from which the content is acquired, from the relaying device that the relaying device selecting section 37 selects, to another relaying device which exists at the address indicated by the address information contained in the content storage location list and (ii) transmits, to the response/request executing section 35, an instruction to acquire a content from the another relaying device thus changed to.

Here, in a case where priority is not added to the address information contained in the content storage location list, the relaying device selecting section 37 may select (i) a relaying device, at random, on a basis of the address information contained in the content storage location list, (ii) a relaying device on a basis of a predetermined rule (default), or (iii) a relaying device having a second shortest physical or a network-structural distance to the client 4.

Meanwhile, in a case where priority is added to the address information contained in the content storage location list, the relaying device selecting section 37 selects address information having a second highest priority.

The client status determining section 36 detects an occurrence of a predetermined event. Specifically, the client status determining section 36 detects an event that a content is received with delay when the content playing device acquires, from the relaying device, the content that the content playing device requires. The event indicates (i) a network communication status between the content playing device and the relaying device and/or (ii) a size of a load of the relaying device. When detecting the event that the content is received with delay, the client status determining section 36 transmits, to the relaying device selecting section 37, delay information indicating the event thus detected.

### [Format of content]

Next, in Embodiment 3, a format of a content which is stored in the content storage section 5 will be described with reference to (a) of Fig. 21. (a) of Fig. 21 is a view illustrating an example format of the content.

As illustrated in (a) of Fig. 21, a media file, which is data indicating the content, is fragmented by a predetermined unit. The unit is not particularly limited but the media file may be fragmented (i) by a time unit such as one minute or (ii) by a unit of GOP (group of picture) in an image coding.

In the following description, the fragment is referred to as a movie fragment, and an MP4 file is used as a specific example of a media file which is constituted by the movie fragment.

In a case where the MP4 file is used as a media file, a fragment which is constituted by "moof" storing header information which manages an image and a sound in the fragment and "mdat" storing data such as an image and a sound which are played by a client corresponds to the movie fragment.

Here, as to the MP4 file, in addition to "moof" and "mdat," information (e.g., image resolution, profile information, etc.) related to an entire media file, that is, information (play information) required for a formatting of a content playing section 34 in the client 4, is stored in "moov," which is different from the "moof" or the "mdat."

Accordingly, it is necessary to notify, before a play starts, the client 4 of the play information stored in "moov". The play information stored in "moov" may be notified in a procedure different from that for the movie fragment, and it is not always necessary to include "moov" in the movie fragment. However, the following description will discuss an example where a first movie fragment in each of media files includes "moov." That is, "information required for the formatting of the playing device" illustrated in (a) of Fig. 21 is "moov."

As illustrated in Fig. 21, consecutive reference numerals "movie fragment 1", "movie fragment 2" ... are assigned to a movie fragment in each of the media files in the order from the first movie fragment. Note that each of the movie fragments includes image data for one minute.

### [Format for transmission of content]

Next, in the content distribution system 1b of the present invention, a transmission unit of the content will be described. In the content distribution system 1b, among the server 2, the proxy 3, and the client 4, the content is (i) divided by a unit which is referred to as media segment and (ii) transmitted with use of HTTP.

(b) of Fig. 21 is a view illustrating a concept of a media segment which is treated by the content distribution system 1b as a transmission unit of the content and showing an exemplary transmission unit of the content in the content distribution system 1b.

The media segment is constituted to include at least one movie fragment. In other words, a content is constituted by one or more media segments and each of the media segments is constituted by one or more movie fragments. Generally, each of the media segments, in a predetermined content, is configured to include two or more movie fragments each of which has consecutive playing time. However, the media segment may be constituted by (i) one movie fragment or (ii) two or more movie fragments each of which has no consecutive playing time.

Specifically, (b) of Fig. 21 shows an example where a plurality of movie fragments are combined so as to constitute one media segment. This makes it possible to reduce the number of messages which transmit a content as compared with a case where each of the plurality of movie fragments is transmitted separately. As such, it is possible to send a content efficiently.

In an example of (b) of Fig. 21, one media segment "media segment 1" is constituted by combining "movie fragments 1 through 60", and another media segment "media segment 2" is constituted by combining "movie fragments 61 through 120". Note that a media segment should include two or more movie fragments each of which has consecutive playing time in the predetermined content, and the number of movie fragments included in one media segment is not particularly limited. In Embodiment 3, as illustrated in (b) of Fig. 21, one media segment includes 60 movie fragments.

### [Process carried out by each device]

Next, a process which is carried out by the server 2 and the client 4 functioning as a content playing device will be described with reference to Figs. 22 and 23. A process which is carried out by the proxy 3 of Embodiment 3 is identical to that of Embodiment 1, and a process which is carried out by the client 4 functioning as a relaying device of Embodiment 3 is identical to that of Embodiment 2. As such, those processes will not be discussed here.

### [Process carried out by server 2]

First, a process which is carried out by the server 2 will be described with reference to Fig. 22. Fig. 22 is a flowchart showing an exemplary process which is carried out by the server 2.

The response executing section 15 is ready to receive a request message for requesting to transmit a content, and upon receipt of the request message for requesting to transmit the content, via the server communication section 11 (S601), the response executing section 15 determines whether or not the request message thus received is transmitted from a relaying device by referring to a header of the request message thus received (S602).

In a case where a subject which transmits the request message thus received is a content playing device (in a case -where an answer for S602 is No), the content playing device instructs the relaying device specifying section 16 to specify a plurality of relaying devices from which the content playing device acquires the content. The relaying device specifying section 16 reads out content-storage-location information from the content-storage-location information storage section 13 in response to the instruction of the response executing section 15 (S603). With reference to the content-storage-location information thus read out, the relaying device specifying section 16 (i) specifies a plurality of URIs of a relaying device associated with the content that the content playing device requests and (ii) creates a content storage location list containing the plurality of pieces of address information thus specified (S604). The relaying device specifying section 16 transmits the content storage location list thus created to the response executing section 15. The response executing section 15 transmits, to the content playing device, a response message instructing to acquire the content that the content playing device requests from one of the relaying devices which exist at an address indicated by the address information contained in the content storage location list which is created by the relaying device specifying section 16 (S605). The response executing section 15 (i) creates a transmission log on a basis of the response message which is sent to the content playing device and (ii) adds the transmission log thus created to the transmission log storage section 12 (S610).

Processes (S606 through S609) for a case where the sender of the received request message is the relaying device is identical to those (S506 through S509 in Fig. 14) for the server 2 of Embodiment 2. As such, those processes will not be discussed here.

### [Process carried out by client 4 functioning as content playing device]

Next, a process which is carried out by the client 4 functioning as a content playing device will be described with reference to Fig. 23. Fig. 23 is a flowchart showing an exemplary process which is carried out by the client 4 functioning as a content playing device.

The response/request executing section 35 transmits a request message for requesting to transmit a content to the server 2 (S621). In response to the request message, the response/request executing section 35 receives a response message containing (i) a content storage location list and (ii) an instruction to transmit, to one of relaying devices which is of an address indicated by address information contained in the content storage location list, a request message for requesting a content (S622).

When the response/request executing section 35 receives the response message, the relaying device selecting section 37 selects one of pieces of the address information contained in the content storage location list which the response/request executing section 35 receives (S623). The relaying device selecting section 37 instructs the response/request executing section 35 to acquire a content from the relaying device is of the address indicated by the address information thus selected.

The response/request executing section 35 which is instructed from the relaying device selecting section 37 transmits a request message to the relaying device that the relaying device selecting section 37 selects (S624). First, upon receipt of the request message, the relaying device sends, as a response message, a header in response to the request message thus received. As such, the response/request executing section 35 receives the header (S625) and notifies the client status determining section 36 of the receipt of the header.

Upon receipt of the notification, the client status determining section 36 initializes a timer and starts counting in order to evaluate receiving time for a movie fragment. Moreover, the client status determining section 36 initializes a variable (counter) (N₁ = N₂ =0) which is used for the evaluation (S626). For example, an initial value for the timer may be a value calculated by subtracting a predetermined threshold Tₜₕ from a value of a time stamp of a movie fragment which is most recently sent.

The relaying device that received the request message transmits, after the header, as a response message in response to the request message received in S624, a body for which a plurality of movie fragments are multiparted. The response/request executing section 35 receives a movie fragment (S627) and notifies the client status determining section 36 of the receipt of the movie fragment.

Furthermore, the response/request executing section 35 (i) determines, on a basis of a value of "Content-Type" header contained in the header thus received, that the movie fragment is received in a MIME multipart format, (ii) notify the content playing section 34 of the receipt of the movie fragment, and also (iii) transmits the movie fragment thus received to the content playing section 34. Then, the content playing section 34 (a) specifies a time stamp of the movie fragment in reference to an "X-Timestamp" header of the movie fragment thus received and (ii) plays the movie fragment with reference to the time stamp.

Here, the client status determining section 36 evaluates receiving time (S628). Specifically, the client status determining section 36 compares time t indicated by the timer which starts counting in S626 and a time stamp T_{fr} (value of X-Timestamp) of the movie fragment which is received in S627.

In a case where the comparison shows that t < T_{fr} - Tₜₕ, the client status determining section 36 determines that it is sufficiently earlier than predetermined receiving time (an event indicating a good communication status is detected), and a process proceeds to S629. In contrast, in a case where T_{fr} + Tₜₕ > t, the client status determining section 36 determines that a delay occurs (an event indicating a poor communication status is detected), and the process proceeds to S630. Meanwhile, in a case where neither of the above cases applies (|t-T_{fr}| ≤ Tₜₕ), the process proceeds to S631.

That is, after starting a receipt of a first movie fragment contained in the response message, the client status determining section 36 counts time t until starting a receipt of a next fragment. When (i) T_{fr} indicates a difference between a value of a time stamp associated with the first movie fragment and a value of a time stamp associated with the next movie fragment and (ii) Tₜₕ indicates zero or more predetermined threshold, (a) in a case where T_{fr} + Tth > t, the client status determining section 36 determines that the event indicating a poor communication status is detected, and (b) in a case where t < T_{fr} - Tₜₕ, the client status determining section 36 determines that the event indicating a good communication status is detected.

In S629, the client status determining section 36 increments N₁ which is a counter for the number of times that the movie fragment is received sufficiently earlier than the predetermined receiving time. Then, the process proceeds to S631.

In S630, the client status determining section 36 increments N₂ which is a counter for the number of times that the movie fragment is received with delay. Then, the process proceeds to S631.

In S631, the response/request executing section 35 confirms whether or not all of the movie fragments contained in the media segment specified by the request which is transmitted in S624, and in a case where an unreceived movie fragment is found (in a case where an answer for S631 is No), the process returns to S627.

Meanwhile, in a case where the response/request executing section 35 confirms that all of the movie fragments are already received (in a case where an answer for S631 is Yes), the response/request executing section 35 confirms whether or not all of the media segments of the content which is subject to be requested are received (S632), and in a case where it is confirmed that all of the media segments has been received (in a case where an answer for S632 is Yes), the process is completed. Meanwhile, in a case where an unreceived media segment is found (in a case where an answer for S632 is No), the client status determining section 36 determines, whether or not N₂ - N₁ > 0 with use of N₁ and N₂ which are calculated in S629 and S630 (S633).

In a case where N₂ - N₁ > 0 is not true, that is, in a case where N₂ - N₁ ≤ 0, the relaying device is not changed, and a request message in which a media segment number is incremented is transmitted to the relaying device which is selected in S623 (S624). As a response message in response to the request message, the response/request executing section 35 receives a header (S625) and notifies the client status determining section 36 of the receipt of the header. Then, in order to evaluate receiving time for a movie fragment contained in a next media segment, the client status determining section 36 reinitializes the timer, so as to start counting of the time. Moreover, the client status determining section 36 also reinitializes the variable (counter) (N₁ = N₂ = 0) which is used for the evaluation. Then, the response/request executing section 35 receives the movie fragment contained in the next media segment (S627).

Meanwhile, in a case where N₂ - N₁ > 0, the client status determining section 36 transmits, to the relaying device selecting section 37, delay information indicating that an acquisition of the content is delayed. Upon a receipt of the delay information from the client status determining section 36, the relaying device selecting section 37 selects other address information which is (i) contained in the content storage location list and (ii) different from the address information which is currently selected (S634). The relaying device selecting section 37 instructs the response/request executing section 35 to acquire a content from a relaying device which exists at an address indicated by the address information thus selected.

Upon receipt of the instruction from the relaying device selecting section 37, the response/request executing section 35 retransmits, to the relaying device selected by the relaying device selecting section 37, a request message for which the media segment number is incremented (S624).

The description above describes an example where the relaying device from which the content is acquired is reselected per media segment (S634). Note, however, that the relaying device may be reselected per movie fragment. In that case, for example, in accordance with a result of the evaluation of the receiving time in S628, it is possible (i) to change the relaying device, (ii) to transmit a new request message to the relaying device thus changed, and (iii) to cancel a subsequent movie fragment which is transmitted on a basis of a request message which is sent first.

For example, the client status determining section 36 may count, in S629 and S630, (i) the number N₁ of movie fragments which are received sufficiently earlier than the predetermined time and (ii) the number N₂ of movie fragments which are transmitted with delay. After a transmission of one media segment is completed, in a case where N₂ - N₁ > 0, the client status determining section 36 may determine that there is an overall delay (an event indicating a poor communication status is detected) and notify the relaying device selecting section 37 of the determination.

Moreover, in the description above, in S633, the client status determining section 36 determines whether or not N₂ - N₁ > 0, so as to determine whether or not a delay occurs when the content is acquired. However, the process is not limited to this. For example, it is also possible (i) to predetermine an upper limit for N₂, which is a counter for the number of times that the movie fragment is received with delay, and (ii) to cancel a subsequent movie fragment when a value of N₂ exceeds the value thus predetermined, so as to switch the relaying device to another relaying device.

### [Example 3]

The present embodiment is further described below with reference to Example 3 illustrated in Fig. 24. Example 3 shows an operation example of a content distribution system 1b that transmits, to a content playing device serving as a client 4e, an instruction to acquire a content from any one of address information contained in a content-storage-location list. Fig. 24 is a view illustrating an example operation sequence of the content distribution system 1b in Example 3.

Note that Example 3 is carried out on the following conditions. A content 1 in a format illustrated in Fig. 21 is already stored in the content storage section 5, and the client storage sections 6a, 6c, and 8f. Further, the server 2 generates a content-storage-location list by adding priorities to the plurality of pieces of address information. Furthermore, when the process shown in Fig. 25 is started in Example 3, the transmission logs 51 to 53 stores the transmission log storage section 12 and the content-storage-location information storage section 13, respectively. Still further, the response executing section 15 creates the transmission logs 54 to 56 of Fig. 25 every time when a response message is transmitted, and pieces of the content-storage-location information 64 to 67 generating section 17 generates the content-storage-location information of Fig. 26 every time when a content transmission log or a version notification log (transmission log whose "transmitted contents" is "200 OK" or "304 Not Modified") is added to the transmission log storage section 12.

Further, Example 3 is carried out on condition that a sequence starting from a time at which the content playing device transmits a request message and ending at a time at which the content playing device receives a response message in response to the request message is considered as a single session.

As shown in Fig. 24, in a session 310, the client 4e transmits, to the server 2, a request message to request to transmit the content 1 (request 311). In the server 2 which has received the request 311, the response executing section 15 transmits, to a plurality of relaying devices specifying section 16, an instruction to specify a relaying device to acquire the content 1. In response to the instruction, the relaying device specifying section 16 confirms whether or not the content-storage-location information is stored in the content-storage-location information storage section 13 (process 312). At this point, the content-storage-location information storage section 13 contains a proxy 3a, a proxy 3c, and a client 4f serving as a storage location associated with the content 1. Therefore, the relaying device specifying section 16 creates the content storage location list by (i) adding priorities 1 through 3 to the proxy 3a, the client 4f, and the proxy 3c, respectively, on a basis of date and time contained in the content-storage-location information so that the content storage location list added with priority contains the address information of the proxy 3, the client 4f, and the proxy 3c. The response executing section 15 transmits, to the client 4e, the response message to instruct to (i) select, in order of high priority, the address information contained in the content storage location list created by the relaying device specifying section 16 and (ii) acquire the content from a relaying device existing at an address indicated by the address information thus selected (response 313). In other words, the response executing section 15 transmits to the client 4e an instruction to acquire the content first from (i) the proxy 3a and, in a case where the content cannot be acquired from the proxy 3a or a speed to acquire the content is slow, secondarily from (ii) the client 4f, and lastly from (iii) the proxy 3c. Sequentially, the response executing section 15 creates the transmission log on the basis of the response message thus transmitted, and adds the transmission log to the transmission log storage section 12 (process 314).

In the client 4e which received the response 313, a relaying device selecting section 37 selects the proxy 3a having a highest priority, on the basis of the instruction from the server 2, as a relaying device in the address information of a device from which the content is acquired (process 320). Then, the relaying device selecting section 37 transmits to a response/request executing section 35 an instruction to acquire the content 1 from the proxy 3a.

Next, in a session 330, the response/request executing section 35 thus instructed by the relaying device selecting section 37, transmits to the proxy 3a the request message for requesting to transmit the content 1 (a request 331). In response to the response 331, the proxy 3a checks whether the content 1 is stored in the cash storage section 6a or not (process 332). Because the content 1 is already stored in the cash storage section 6a, in order to check with the server 2 if the contents 1 stored in the cash storage section 6a is the latest data, the proxy 3a transmits to the server 2 a conditional request that is the request message being associated with the request 331 added with "If_Modified-Since" according to the request 331. (a request 333). In the server 2 which received the request 333, because the request 333 is the conditional message containing a "Via" header, the response executing section 15 determines whether or not the content 1 kept by the proxy 3 is the latest data (process 334). The response executing section 15 determines that the content 1 kept by the proxy 3a is the latest data, and transmits the response message "304 NOT Modified" to the proxy 3a (a response 335). In response to the response 335, the proxy 3a retrieves the content 1 stored in the cash storage section 6a and, as a response to the request 331, transmits the content 1 thus retrieved to the client 4e (a response 336). The client 4e acquires "movie fragment1 to 60" one by one, in response to the response 336. After transmitting the response 335, the response executing section 15 creates the transmission log on the basis of the response message thus transmitted, and adds the transmission log to the transmission log storage section 12 (process 337). The content-storage-location information generation section 17 generates the content-storage-location information by associating the content 1 with the address information of the proxy 3a, and stores the content-storage-location information in the content-storage-location information storage section 13. In addition, the content-storage-location information generation section 17 generates the content-storage-location information by associating the content 1 and the address information of the client 4e, and stores the content-storage-location information in the content-storage-location information storage section 13 (process 338).

A client status determining section 36 evaluates receiving time at every receipt of movie fragments. If the receiving time is evaluated as N₂ - N₁ > 0 at the time of receipt of one media segment, at this point, the client status determining section 36 determines that a receiving speed required to acquire the content from the proxy 3a is slower than a predetermined receiving speed. Then the client status determining section 36 gives information of such delay to the relaying device selecting section 37 (process 340).

The relaying device selecting section 37, in response to the information of the delay from the client status determining section 36, changes the proxy 3a which is currently selected as the relaying device, from which the content is required, to the client 4f having a second priority to be selected as the relaying device (process 350). In other words, the relaying device selecting section 37 selects the client 4f as the device from which the content is acquired. Continuously, the relaying device selecting section 37 transmits to the response/request executing section 35 an instruction to acquire the content 1 from the client 4f.

Next, in a session 360, the "movie fragments 1 to 60" has been received by the response/request executing section 35 according to the instruction from the relaying device selecting section 37. Thus, the response/request executing section 35 transmits to the client 4f the request message to request to transmit the content 1 from "movie fragment61" onward (request 361). In response to the request 361, the client 4f determines whether or not the content 1 is stored in the client storage section 8f (process 362). The content 1 is already stored in the client 8f. Thus, in order to check with the server 2 whether or not the content 1 stored in the client storage section 8f is the latest data, the client 4f transmits the conditional request, which is the request message associated with the request 361, added with "If_Modified-Since" (request 363). In the server 2 which received the request 363, because the request 363 is the conditional request message containing the "Via" header, the response executing section 15 determines that the content 1 kept by the client 4f is the latest data, and transmits the response message "304 NOT Modified" to the client 4f (response 365). Sequentially, the client 4f, in respond to the response 365, retrieves data of the content 1 "movie fragment61" or later stored in the client storage section 8f. Then the client 4f transmits the retrieved content 1 "movie fragment61" or later to the client 4e one by one (response 366). In response to the response 366, the client 4e acquires "movie fragment61" or later one by one. Further, after transmitting the response 365, the response executing section 15 creates the transmission log on the basis of the response message thus transmitted, and adds the transmission log to the transmission log storage section 12 (process 367). In addition, the content-storage-location information generating section 17 generates the content-storage-location information by associating the content 1 with the address information of the client 4e so as to store the content-storage-location information in the content-storage-location information storage section 13 (process 368).

As mentioned above, in the present embodiment, a content playing device receives from a server 2 a content storage location list containing address information of a plurality of relaying devices, and then acquires a content from any one of the relaying devices indicated by the address information contained in the content-storage-location list. In a case where a receiving speed required to acquire the content is slow, the relaying device, from which the content is acquired, is changed to another relaying device which is indicated by the address information contained in the content storage location list. This makes it possible to distribute a load of network (particularly, a network between the content playing device and the relaying device) efficiently timewise, thus realizing a control in more detail in the content distribution system 1b. Accordingly, it is possible to keep higher quality of service for a larger number of content playing devices.

### [HTTP Messages in Example 3]

Next, the detail of the requests and the responses used in the operation sequence illustrated in Fig. 24 is illustrated in Fig. 27 and Fig. 28. Fig. 27 and Fig. 28 show examples of HTTP messages which are transmitted/received as a request or a response. Fig. 27 shows example HTTP messages in the session 310 and the session 330. Fig. 28 shows examples of HTTP messages in the session 360.

(a), (b), (c), (d), (e), and (f) of Fig. 27 show the HTTP messages of the request 311, the response 313, the request 331, the request 333, the response 335, and the response 336 of Fig. 24, respectively.

(a), (b), (c), and (d) of Fig. 28 show HTTP messages of the request 361, the response 363, the request 365, the request 363, the request 365, and the request 336 of Fig. 24, respectively.

### [HTTP messages in sessions 310 and 330]

HTTP messages in the session 310 and the session 330 will be described with reference to Fig. 27. Since (c), (d), and (e) of Fig. 27 correspond to (c), (d), and (e) of Fig. 10, respectively. A content 2, a client 4a, and a proxy 3b of FIG. 10 are merely changed to a content 1 in MIME multipart format, a client 4e, and a proxy 3a of Fig. 27, respectively. Thus, the description of the HTTP messages of the request 331, the request 333, and the response 336 in the session 330 is not repeated here. In addition, (a), (b), (c), and (d) of Fig. 28 correspond to (c), (d), (e), and (f) of Fig. 27, respectively. Since "media segment1" of the content 1 and a proxy 3a of Fig. 27 are merely changed to a "media segment2" and a proxy 4f in Fig. 28, respectively. Therefore, the description of the HTTP message in the session 360 is not repeated here. Note also that, an element, which is more peculiar to the present invention, contained in an HTTP message is mainly described here. Thus, the description of well-known elements will be appropriately omitted.

### (Request 311 Requesting for Content)

As shown in (a) of Fig. 27, a request line and a header are contained in an HTTP message which corresponds to the request 311 for requesting a "media segment1" of a content 1 from a serer 2 by a client 4e.

In the request line in (a) of Fig. 27, information for specifying the content to be acquired is described after a "GET" indicating a method for acquiring the content. Specifically, the information is described in a form of "/content name/media segment number". In other words, the HTTP message (a) of Fig. 27 is a request for the "0(zero)"th "media segment 1" (first portion) of the "content 1".

Further, a header of (a) of Fig. 27 contains an "Accept" header indicative of a processible data format for the client 4e. The "Accept" header has information "video/mp4" indicative of a moving image data of an MP4 format, and information "multipart/media-segment" indicative of a MIME multipart format. This enables the client 4e, which is a source that has transmitted the request, to inform the server 2, which is a receiver of the request, that the moving image data of the MP4 format is receivable in the MIME multipart format.

Furthermore, the header of (a) of Fig. 27 contains a "Host" header for specifying a server to which a request is transmitted. The "Host" header has a description "example.com" indicative of the address of the server 2.

### (Response 313 for instructing on device from which content is acquired)

As shown in (b) of Fig. 27, a response line and a header are contained in an HTTP message corresponding to the response 313, in which the server 2 transmits to the client 4e an instruction on address information of a device from which the content 1 is acquired.

In the response line of (b) of Fig. 27, information for instructing to use the proxy is described in a form of "status number message".

Further, the header of (b) of Fig. 27 contains a "Location" header for specifying the relaying device to be used. That is, the HTTP message of (b) of Fig. 27 is the response instructing to request for the content 1 with use of the relaying device designated by the "Location" header mentioned below. In the example of (b) of Fig. 27, the "Location" header has the address information "http://example-proxy1.com" indicative of the address of the proxy 3a. This enables the client 4e to be informed of the address information of the relaying device (proxy 3a) from which the content 1 is requested.

Moreover, the header of (b) of Fig. 27 contains an "X-Alternative-Proxy-List" header indicative of the address information of other relaying devices which possesses the content 1. This "X-Alternative-Proxy-List" header describes address information "http://example-client2.com, http://example-proxy3.com" indicative of addresses of the other relaying devices (referring to the client 4f and the proxy 3c here). Thus, to the client 4e, which is a device received this response, the relaying devices (possibly) possessing the content 1 are presented, in addition to the relaying device specified by the "Location" header. Accordingly, the client 4e can select the relaying device, from which the content 1 is acquired, out of the relaying devices of the address information contained in the "Location" header or the "X-Alternative-Proxy-List" header. Note that an "X" in the description of the header indicates that the header was newly defined in the present embodiment.

### (Response 336 for transmitting content from proxy 3a to client 4e)

As shown in (f) of Fig. 27, the HTTP message contains a response line, a header, and a body are contained in the HTTP message corresponding to the response 336 for transmitting the "media segment 1" of the content 1 to the client 4e from the proxy 3a.

The response line of (f) of Fig. 27 describes information that the request has been received, which means the content thus requested is to be transmitted. Specifically, the information is described in the form of "status number response message".

The header has information about a content to be transmitted. In the example shown in the figure, a "Content-Type" header indicative of a type of the content to be transmitted, a "Content-Location" header indicative of a storage location of the content to be transmitted (e.g. URI), a "Cache-Control" indicative of an instruction regarding a cache of the content to be transmitted, a "Via" header indicative of a transmission path via which the message is transferred, and an "X-Media-Segment-Index" header indicative of a location of an entire content of the media segment to be transmitted are contained.

In the example shown in the figure, the "Content-Type" header describes "multipart/ media-segment" indicative of the MIME multipart format. Thus, a device which received this header (the client 4e) can recognize the media segment which was transmitted in MIME multipart format is the next content to receive. In addition, the header contains information "boundary=THIS#STRING#SEPARATES" indicating that a break point of the multipart format is "THIS#STRING#SEPARATES".

The "Content-Location" header describes the URI "http://www.example.com/content1/0". As mentioned earlier, the final number "0" of this URI stands for the "media segment1" which is the initial portion of the content, followed by a URI of the "media segment2" which is "http://www.example.com/content1//1". Thus, a media segment indicated by a serial number enables a device received the response (client 4e) to determine that a URI having an incremented number is the URI of a next media segment to request for.

The "Cache-Control" header describes "must-revalidate", and the "Via" header describes "example-proxy 1.com".

Further, the example in the figure contains the "X-Media-Segment-Index" header. The "X-Media-Segment-Index" header indicates a playing location of the media segment for the entire content. In (f) of Fig. 27, the header contains "1/60". This "1/60" means a first media segment out of 60 media segments in the entire content. According to this information, a full length of the content and a current playing location can be tracked of. It is also possible to access arbitrarily to any media segment in the content with reference to this information.

In the body, a plurality of movie fragments consisting media segments described in the MIME multipart format. Here, one media segment contains 60 movie fragments from 1 through 60.

Moreover, each of parts (each of the movie fragments) can have a header. In the example shown in the figure, a "Content-Type" header indicating a type of the content of a movie fragment and an "X-Timestamp" header indicating a time stamp of the movie fragment are described. It is possible to specify a playing time (timing of starting a play) of the movie fragment without analyzing the movie fragment by referring to the time stamp indicated by the "X-Timestamp" header. Each of the parts contains a data entity (binary data) of the movie fragment of the respective parts.

### [Case where client cannot process MIME multipart format data]

The Embodiment 3 has discussed the case where data in the MIME multipart format could have been processed by the client 4 serving as a content playing device, that is, the case where the "Accept" header of the request message has contained "multipart/media-segment". However, it is also conceivable that the content playing device cannot process the data in the MIME multipart format (that is, the "multipart/media-segment" is not contained in the "Accept" header of the request message).

In this case, it is advisable that a relaying device and a server 2 respond to a request not by the MIME multipart format but by one body which is a combination of all movie fragments in the media segment. This enables a content playing device which is not capable of processing data in the MIME multipart to play a content received.

### <Embodiment 4>

Embodiment 4 of the present invention will discuss an example where (i) a single content is managed by a plurality of servers 2, (ii) a server 2 receives a request for the content, and designates, as a server from which the content thus requested is acquired, at least two servers 2 among the plurality of servers 2, and (iii) a content playing device selects one of the at least two servers 2 thus designated, so as to acquire the content. With the arrangement, it is possible to distribute, more widely, (a) a load of a network between the content playing device and a corresponding one of the plurality of servers 2, and (b) a process load of the corresponding one of the plurality of servers 2.

More specifically, in Embodiment 4, a client 4, which is the content playing device, (i) selects one of a plurality of servers 2 designated by a server 2 to which a request for a content has been transmitted, and (ii) acquires the content from the one of the plurality of servers 2 thus selected. In a case where acquisition of the content is delayed during a time period in which the client 4 acquires the content from the one of the plurality of servers 2 thus selected, the client 4 selects another one of the plurality of servers 2 designated by the server 2 to which the request for the content has been transmitted, and switches, to the another one of the plurality of servers 2, the server 2 from which the content is acquired.

The following description deals with Embodiment 4 with reference to Figs. 29 through 34. Embodiment 4 is identical to Embodiment 3 except that (i) a content distribution system of Embodiment 4 includes a plurality of servers 2, (ii) an arrangement of each of the plurality of servers 2 of Embodiment 4 is different from that of a server 2 of Embodiment 3, and (iii) an arrangement of the client 4 is different from that of a client 4 of Embodiment 3. For this reason, the following description mainly deals with such differences between Embodiment 4 and Embodiment 3.

### Outline of content distribution system 1]

First, the following description explains an outline of a content distribution system 1c of Embodiment 4 with reference to Fig. 29. Fig. 29 is a view illustrating the outline of the content distribution system 1c of Embodiment 4 and an arrangement of a main part of each of devices constituting the content distribution system 1c.

The content distribution system 1c includes servers 2a, 2b, and 2c, proxies 3a, 3b, and 3c, and clients 4g and 4h (see Fig. 29). Further, the content distribution system 1c includes (i) content storage sections 5a, 5b, and 5c, which are connected to the servers 2a, 2b, and 2c, respectively, (ii) cache storage sections 6a, 6b, and 6c, which are connected to the proxies 3a, 3b, and 3c, respectively, and (iii) client storage sections 8g and 8h, which are connected to the clients 4g and 4h, respectively.

The proxies 3a, 3b, and 3c of Embodiment 4 are identical to proxies 3a, 3b, and 3c of Embodiment 3 in arrangement and operational process. For this reason, details of the proxies 3a, 3b, and 3c are omitted here for the sake of simple explanation.

### As to server 2]

Each of the servers 2a, 2b, and 2c of Embodiment 4 is different from the server 2 of Embodiment 3 in that each of the servers 2a, 2b, and 2c includes an acquisition location specifying section 18 in place of a relaying device specifying section 16. Further, a content-storage-location information storage section 13 of each of the servers 2a, 2b, and 2c stores not only content-storage-location information including address information of a replying device which possesses a content but also content-storage-location information including address information of a server 2 which possesses a content. Other than these points described above, each of the servers 2a, 2b, and 2c of Embodiment 4 has the same arrangement as that of the server 2 of Embodiment 3.

In order to cause the content playing device to select a sever 2 from which the content playing device acquires a content, each of the server 2a, 2b, and 2c of Embodiment 4 (i) identifies a plurality of servers 2, each of which (possibly) possesses the content requested by the content playing device, (ii) presents, to the content playing device, a content storage server list including address information of each of the plurality of servers 2 thus identified, and (iii) instructs the content playing device to acquire the content from one of the plurality of servers 2 each of which is located at an address indicated by a corresponding piece of the address information included in the content storage server list thus presented.

Specifically, in a case where a response executing section 15 directly receives, from the content playing device, a request message which requests a content, the response executing section 15 instructs an acquisition location specifying section 18 to specify address information (e.g., an URI of a server 2) of servers 2, each of which (possibly) possesses the content requested by the content playing device. Then, in a case where the response executing section 15 receives, from the acquisition location specifying section 18, a content storage server list including the address information of the servers 2, each of which possesses the content requested by the content playing device, the response executing section 15 transmits, as a response to the request message received from the content playing device, to the content playing device, a response message which is an instruction to acquire such a requested content from one of the servers 2 each of which is located at an address indicated by a corresponding piece of the address information included in the content storage server list created by the acquisition location specifying section 18.

Further, in a case where the response executing section 15 receives, from a response executing section 15 of another server 2, an inquiry as to whether the server 2 possesses a certain content, the response executing section 15 checks whether or not the content is stored in a corresponding content storage section 5 connected to the server 2. Then, the response executing section 15 transmits, to the another server 2, a response indicating whether the server 2 possesses the certain content. For example, in a case where a response executing section 15 of the server 2a receives, from a response executing section 15 of the server 2b, an inquiry as to whether the server 2 possesses a certain content, the response executing section 15 of the server 2a (i) checks contents stored in the content storage section 5a, and (ii) transmits, to the server 2b, a response indicating whether the server 2 possesses the certain content.

Processes of the response executing section 15, other than the aforementioned process, are identical to those of a response executing section 15 of Embodiment 3, and therefore explanations of such processes are omitted here for the sake of simple explanation.

In accordance with the instruction received from the response executing section 15, the acquisition location specifying section 18 (i) identifies a plurality of servers 2, each of which (possibly) possesses the content requested by the content playing device, and (ii) creates a content storage server list including address information of the plurality of servers 2 thus identified.

Specifically, on receipt of the instruction from the response executing section 15, the acquisition location specifying section 18 reads out content-storage-location information from a content-storage-location information storage section 13. The acquisition location specifying section 18 (i) refers to the content-storage-location information thus read out, (ii) identifies a plurality of pieces of address information, which are associated with the content requested by the content playing device, and (iii) creates the content storage server list including the plurality of pieces of address information thus identified. The acquisition location specifying section 18 transmits the content storage server list thus created to the response executing section 15.

There is a case where the acquisition location specifying section 18 checks the content-storage-location information storage section 13 for the content-storage-location information including the address information of the servers 2 but such content-storage-location information is not stored in the content-storage-location information storage section 13, for example. Further, there is also a case where the content-storage-location information stored in the content-storage-location information storage section 13 is old information (a time and date included in the content-storage-location information has been obtained before a predetermined time), In such cases, the acquisition location specifying section 18 updates the content-storage-location information which includes the address information of the servers 2, and is stored in the content-storage-location information storage section 13.

In a case where the acquisition location specifying section 18 determines that it is necessary to update the content-storage-location information, the acquisition location specifying section 18 transmits, to each of other servers 2 via the response executing section 15, an inquiry as to whether or not each of other servers 2 has the content thus requested. On the basis of a response received from each of other servers 2, the acquisition location specifying section 18 (i) identifies address information of a server 2 which made such a response that the server 2 has the content thus requested, (ii) creates a content storage server list including the address information thus identified, and (iii) notifies the response executing section 15 of the content storage server list. Further, on the basis of a response received from each of other servers 2, the acquisition location specifying section 18 creates such content-storage-location information that (i) the content thus requested, (ii) address information of a server 2 which made such a response that the server 2 has the content, and (iii) a time and date at which the response is received, are associated with each other. Then, the acquisition location specifying section 18 stores the content-storage-location information thus created in the content-storage-location information storage section 13.

Note that the acquisition location specifying section 18 can update the content-storage-location information at predetermined intervals.

Furthermore, it is possible that the acquisition location specifying section 18 updates the content-storage-location information in such a manner that the acquisition location specifying section 18 (i) transmits, to each of other servers 2, an inquiry as to whether or not each of other servers 2 has the content, (ii) measures a time period from a time that the inquiry is transmitted to a time that the acquisition location specifying section 18 receives a response, and (iii) ranks other servers 2 on the basis of such time periods. That is, it is possible that the acquisition location specifying section 18 (i) sets a low rank to a server 2 with which the aforementioned time period is long (the server 2 which took a long time to make a response), and (ii) sets a high rank to a server 2 with which the aforementioned time period is short. The acquisition location specifying section 18 can cause address information of a server 2 included in the content storage server list thus created and a rank thus set to be associated with each other.

Moreover, in the same manner as Embodiment 3, it is possible to set a priority of a server 2 on the basis of a physical distance between the content playing device and the server 2, a network-structural distance between the content playing device and the server 2, a load status of the server 2, or the like.

Further, the acquisition location specifying section 18 can create not only the content storage server list which includes the address information of the servers 2 each having the content but also a content storage location list which includes address information of a relaying device which (possibly) possesses the content, in the same manner as Embodiment 3.

The content-storage-location information storage section 13 stores, in addition to the content-storage-location information including the address information of the relaying device, such content-storage-location information that (i) a content, (ii) address information of a server 2 possessing the content, and (iii) a time and date at which a response indicating that updating is executed is received from the server 2, are associated with each other. The content-storage-location information stored in the content-storage-location information storage section 13 can be data shown in Fig. 30, for example. Fig. 30 is a view showing an example of the content-storage-location information stored in the content-storage-location information storage section 13.

As shown in Fig. 30, the content-storage-location information is such that the following (i) through (iii) are associated with each other: (i) "Date" which indicates a time and date at which a content is acquired by a proxy 3 or a client 4, (ii) "Content ID" which indicates the content, and (iii) "Storage Location Address" which indicates address information of the proxy 3 possessing the content, address information of the client 4 possessing the content, or address information of the server 2 possessing the content.

Specifically, Fig. 30 shows, as an example, content-storage-location whether the server 2 possesses information 75 which indicates that a server 2, whose address is "http://srv2.exmaple.com", possesses a content "content 1".

As described above, in short, according to the server 2 of Embodiment 4, the response executing section 15 determines whether or not the source of the request is (i) a relaying device which possesses the content thus requested, and transfers the content thus requested to a content playing device, or (ii) a content playing device which plays the content thus requested. Next, in a case where the response executing section 15 determines that the source of the request is the content playing device, the acquisition location specifying section (content-storage-location information acquisition means) 18 acquires, in response to the request, an address of a server 2 having the content thus request, among predetermined other servers 2. Then, the response executing section (content acquiring location designating means) 15 instructs the content playing device, which is the source of the request, to acquire the content from the server 2 indicated by the address acquired by the acquisition location specifying section.

Here, the predetermined other servers 2 described above are servers 2 which are connected to, via a network 7, a server 2 which has received the request, and are in a range determined in advance in accordance with a predetermined rule. For example, in a case where the server 2 which has received the request is the server 2a, the predetermined other servers 2 can be (i) a server 2b and a server 2c, (ii) a server 2b only, or (iii), in addition to the server 2b and the server 2c, all servers 2 with which the server 2a can communicate via a network.

Further, the acquisition location specifying section 18 (i) transmits, to each of the predetermined other servers 2 described above, an inquiry as to whether or not each of the predetermined other servers 2 has the content thus requested, and then (ii) acquires an address(es) of a server(s) 2 each of which makes such a response that the server 2 has the content thus requested, among the predetermined other servers 2.

Furthermore, the acquisition location specifying section 18 (i) creates such content-storage-location information that such acquired address(es) of the server(s) 2 each having the content, and content identification information indicating the content are associated with each other, and (ii) stores the content-storage-location information in the content-storage-location information storage section (storage section) 13.

Moreover, the acquisition location specifying section 18 reads out the content-storage-location information from the content-storage-location information storage section 13. In a case where the content-storage-location information thus read out includes the content identification information indicating the content thus requested, the acquisition location specifying section 18 acquires, from the content-storage-location information, an address(es) associated with the content identification information. On the other hand, in a case where the content-storage-location information thus read out does not include the content identification information indicating the content thus requested, the acquisition location specifying section 18 transmits the inquiry described above, and acquires the address(es) of the server(s) 2 each having the content thus requested, among the predetermined other servers 2.

Further, the acquisition location specifying section 18 (i) acquires an address of each of a plurality of servers 2 each having the content thus requested, and (ii) creates a content storage server list including the address of each of the plurality of servers 2, and the content identification information indicating the content. Then, the response executing section 15 instructs the content playing device, which is the source of the request, to acquire the content from a server 2 indicated by an address included in the content storage server list created by the acquisition location specifying section 18.

Furthermore, the client 4 serving as a content playing device of Embodiment 4 (i) transmits a request for a content to a server 2, (ii) receives a content storage server list as a response to the request, and (iii) acquires the content thus requested from another server 2 indicated by an address included in the content storage server list thus received.

Specifically, the client 4 includes an acquisition location selecting section (acquisition location changing means) 38. The acquisition location selection section 38 switches the another server 2 (for example, the server 2b) from which the content is acquired to further another server 2 (for example, the server 2c) indicated by an address which is (i) included in the content storage server list and (ii) is different from the address of the another server 2, in a case where a receiving speed at which the content is acquired is slower than a predetermined receiving speed.

### [Client 4]

In a case where the client 4 of Embodiment 4 serves as the content playing device, the client 4 receives a content storage server list from a server 2, and acquires a content thus requested from another server 2 which is located at an address indicated by address information included in the content storage server list thus received.

Each of the clients 4g and 4h, illustrated in Fig. 29, includes an acquisition location selecting section 38 in place of a relaying device selecting section 37 included in the client 4 of Embodiment 3. The acquisition location selecting section 38 has a function of the relaying device selecting section 37 in addition to a function of selecting a server 2 (described later in the present embodiment).

A response/request executing section 35 receives, from the server 2, as a response message, (i) the content storage server list and (ii) an instruction to transmit, to a server 2 located at an address indicated by address information included in the content storage server list, a request message requesting the content.

In a case where the response/request executing section 35 receives the content storage server list and the instruction, the acquisition location selecting section 38 selects one of pieces of the address information included in the content storage server list received by the response/request executing section 35. The acquisition location selecting section 38 instructs the response/request executing section 35 to acquire the content from the server 2 located at the address indicated by the one of pieces of the address information thus selected.

Here, in a case where no priority is added to the pieces of the address information included in the content storage server list (in a case where there the acquisition location selecting section 38 has not received, from the server 2 to which the request for the content has been transmitted, an instruction as to an order in which the server 2 from which the content is acquired is selected from among the servers 2), the acquisition location selecting section 38 can (i) select a server 2 randomly from among the servers 2 indicated by the respective pieces of the address information included in the content storage server list, (ii) select a server 2 in accordance with a predetermined rule (default) from among the servers 2 indicated by the respective pieces of the address information, or (iii) select, from among the servers 2 indicated by the respective pieces of the address information, a server 2 which is closest to the client 4g or 4h in physical distance or network-structural distance.

Meanwhile, in a case where priorities are added to the pieces of the address information included in the content storage server list, the acquisition location selecting section 38 selects one of the pieces of the address information, which one of the pieces of the address information has the highest priority.

Further, in a case where the acquisition location selecting section 38 receives, from the a client status determining section 36, delay information indicating that a speed (receiving speed of the content) at which the response/request executing section 35 acquires the content from the server 2 selected by the acquisition location selecting section 38 is slower than a predetermined receiving speed, the acquisition location selecting section 38 (i) switches the server 2 from which the content is acquired to another server 2 located at an address indicated by another one of the pieces of the address information included in the content storage server list, and (ii) instructs the response/request executing section 35 to acquire the content from the another server 2.

Here, in a case where no priority is added to the address information included in the content storage server list (in a case where the acquisition location selecting section 38 has not received, from the server 2 to which the request for the content has been transmitted, an instruction as to an order in which the server 2 from which the content is acquired is selected from among the servers 2), the acquisition location selecting section 38 can (i) select the another server 2 randomly from among the servers 2 indicated by the respective pieces of the address information included in the content storage server list, (ii) select the another server 2 in accordance with a predetermined rule (default) from among the servers 2 indicated by the respective pieces of the address information, or (iii) select, from among the servers 2 indicated by the respective pieces of the address information, the another server 2 which is second-closest to the client 4g or 4h in physical distance or in network structural distance.

Meanwhile, in a case where priorities are added to the respective pieces of the address information included in the content storage server list, the acquisition location selecting section 38 selects one of the pieces of the address information, which one of the pieces of the address information has the second highest priority.

The client status determining section 36 detects an occurrence of an event described below, in addition to operations described in Embodiment 3. Specifically, in a case where acquisition of the content from a server 2, executed by the content playing device, is delayed, the client status determining section 36 detects such an event that the content has been received behind schedule. This event is regarded as an event indicating (i) how good (or bad) a communication condition of a network between the content playing device and the server 2 is, and/or (ii) how large a load of the server 2 is. In a case where the client status determining section 36 detects an event that the content has been received behind schedule, the client status determining section 36 transmits, to the acquisition location selecting section 38, delay information indicating the event thus detected.

The example described above deals with the case where a response message includes a content storage section sever list for selecting another server 2 having the content thus requested. However, the present invention is not limited to this. It is possible that a response message received from the server 2 includes, in addition to a content storage server list, a content storage location list for selecting a relaying device. In a case where the response message received from the server 2 includes both the content storage server list and the content storage location list, the acquisition location selecting section 38 (i) selects whether the content is acquired via a relaying device or the content is acquired from another server 2, and (ii) selects one of pieces of address information, included in one of the content storage server list and the content storage location list, thus selected.

Here, in a case where no priority is added to the pieces of address information included in one of the content storage location list and the content storage server list, thus selected (in a case where the acquisition location selecting section 38 has not received, from the server 2, an instruction as to an order in which the server 2 from which the content is acquired is selected from among the servers 2), the acquisition location selecting section 38 can (i) select a server 2 randomly from among the servers 2 indicated by the respective pieces of the address information included in the one of the content storage location list and the content storage server list, (ii) select a server 2 in accordance with a predetermined rule (default) from among the servers 2 indicated by the respective pieces of the address information, or (iii) select, from among the servers indicated by the respective pieces of the address information, a server 2 which is closest to the client in physical distance or in network-structural distance.

Meanwhile, in a case where priorities are added to the respective pieces of the address information, the acquisition location selecting section 38 selects one of the pieces of the address information, which one of the pieces of the address information has the highest priority.

Further, in a case where the acquisition location selecting section 38 receives, from the client status determining section 36, delay information indicating that a receiving speed (content receiving speed) at which the response/request executing section 35 acquires the content from the device (a relaying device or a server 2) selected by the acquisition location selecting section 38 is slower than a predetermined receiving speed, the acquisition location selecting section 38 (i) switches the device from which the content is acquired to another relaying device or another server 2, located at an address indicated by one of the pieces of the address information included in the content storage location list or in the content storage server list, and (ii) instructs the response/request executing section 35 to acquire the content from the another relaying device or the another server 2.

### Process carried out by each device]

Next, the following description deals with a process carried out by the server 2 and a process carried out by the client 4 serving as the content playing device, with reference to Figs. 31 and 32. Since a process carried out by the proxy 3 of Embodiment 4 is identical to a process of Embodiment 3, and a process carried out by the client 4 serving as a relaying device of Embodiment 4 is identical to a process of Embodiment 4, explanations of these are omitted here for the sake of simple explanation. Further, Embodiment 4 deals with an example in which one of the server 2 and the relaying device is selected, and a content is acquired from the one of the server 2 and the relaying device.

### Process carried out by server 2]

First, the following description deals with the process carried out by the server 2 with reference to Fig. 31. Fig. 31 is a flowchart showing an example of the process carried out by the server 2. Note that a process identical to a process of Embodiment 3 has the same number as that of the process of Embodiment 3, and details of an explanation of the process are omitted here.

The response executing section 15 is ready to receive a request message which requests transmission of a content. In a case where the request message which requests transmission of the content is received via a server communication section 11 (S601), the response executing section 15 checks a header of the request message thus received, so as to determine whether or not the request message thus received has been transmitted from a relaying device (S602).

In a case where the request message thus received has been transmitted from a content playing device (NO in S602), the response executing section 15 instructs the acquisition location specifying section 18 to specify a plurality of devices as a device from which the content thus requested is to be acquired by the content playing device.

On receipt of the instruction from the response executing section 15, the acquisition location specifying section 18 reads out content-storage-location information from the content-storage-location information storage section 13 (S603). The acquisition location specifying section 18 creates a content storage server list on the basis of the content-storage-location information (S701).

The acquisition location specifying section 18 determines whether or not the content storage server list has been created (S702). In a case where (i) the content-storage-location information could not be read out or the content-storage-location information stored in the content-storage-location information storage section 13 has been determined as being old information, and, as a result, (ii) the content storage server list has not been created (NO in S702), the acquisition location specifying section 18 instructs the response executing section 15 to update the content-storage-location information. The response executing section 15 thus instructed transmits, to each of other servers 2 connected to a network, an inquiry as to whether or not each of the other servers 2 has the content thus requested (S703).

The response executing section 15 notifies the acquisition location specifying section 18 of a result of a response received from each of the other servers 2. On the basis of the result of the response, the acquisition location specifying section 18 requests the content-storage-location information storage section 13 to update the content-storage-location information, so as to update the content-storage-location information (S704). Then, the acquisition location specifying section 13 creates a content storage server list again (S705).

The acquisition location specifying section 18 (i) refers to the content-storage-location information thus read out, (ii) identifies a plurality of URIs of devices (each being a relaying device or a server (a relaying device), from which the content is acquired) being associated with the content requested by the content playing device, and then, (iii) creates a content storage location list including a plurality of pieces of address information thus identified (S604).

The acquisition location specifying section 18 transmits the content storage location list thus created to the response executing section 15. The response executing section 15 transmits, to the content playing device, a response message which instructs the content playing device to acquire the content thus requested from a relaying device or a server 2, located at an address of one of pieces of address information included in the content storage location list and/or in the content storage server list, created by the acquisition location specifying section 18 (S706).

The response executing section 15 creates a transmission log on the basis of the response message transmitted to the content playing device, and adds the transmission log thus created to a transmission log storage section 12 (S610).

Since a process (S606 through S609) carried out under a condition that the request message thus received is transmitted from a relaying device is identical to a process (S506 through S509 in Fig. 14) of a server 2 of Embodiment 2, explanations of the process are omitted here for the sake of simple explanation.

### Process carried out by client 4 serving as content playing device]

Next, the following description deals with a process carried out by the client 4 serving as the content playing device, with reference to Fig. 32. Fig. 32 is a flowchart showing an example of the process carried out by the client 4 serving as the content playing device. Note that a process identical to a process of Embodiment 3 has the same number as that of the process of Embodiment 3, and details of an explanation of the process are omitted here for the sake of simple explanation. Further, a process for receiving a content is identical to a process (S625 through S631 in Fig. 23) of Embodiment 3, and therefore is shown as "S724" in Fig. 32.

The response/request executing section 35 transmits, to a server 2, a request message which requests transmission of a content (S621). The response/request executing section 35 receives, as a response to the request message, a response message which includes (i) a content storage location list and/or a content storage server list, and (ii) an instruction to transmit the request message, which requests the transmission of the content, to a device (a relaying device or a server 2) located at an address indicated by one of pieces of address information included in the content storage location list and/or the content storage server list (S3721).

In a case where response/request executing section 35 receives the response message, the acquisition location selecting section 38 selects one of the pieces of the address information included in the content storage location list and/or the content storage server list, received by the response/request executing section 35 (S722). The acquisition location selecting section 38 instructs the response/request executing section 35 to acquire the content from the device located at an address indicated by the one of the pieces of the address information thus selected.

On receipt of the instruction from the acquisition location selecting section 38, the response/request executing section 35 transmits the request message to the device selected by the acquisition location selecting section 38 (S723).

The device receives the request message and carries out a process of acquiring the content, which process is explained in Embodiment 3. Then, the response/request executing section 35 and the client status determining section 36 carry out a process of acquiring/playing media segments (S724).

Here, in a case where the response/request executing section 35 receives all movie fragments, the response/request executing section 35 checks whether or not all media segments of the content thus requested are received (S632). In a case where the response/request executing section 35 determines that all the media segments of the content are received (YES in S632), the response/request executing section 35 finishes the process. On the other hand, in a case where the response/request executing section 35 determines that there is any media segment which has not been received (NO in S632), the client status determining section 36 determines whether or not the device from which the content is acquired should be switched to another device, in the same manner as Embodiment 3 (S725).

In a case where it is determined that switching of the device to another device is not to be executed (NO in S725), the device from which the content is acquired is not switched to another device, and the response/request executing section 35 transmits, to the device selected in S722, a request message to which media segment numbers are incremented (S723).

In a case where it is determined that the switching of the device to another device is to be executed (YES in S725), the client status determining section 36 transmits, to the acquisition location selecting section 38, delay information indicating that acquisition of the content is delayed. On receipt of the delay information from the client status determining section 36, the acquisition location selecting section 38 selects another one (which is different from the one of the pieces of the address information selected above) of the pieces of the address information included in the content storage location list or the content storage server list (S726). The acquisition location selecting section 38 instructs the response/request executing section 35 to acquire the content from another device located at an address indicated by the another one of the pieces of the address information thus selected.

On receipt of the instruction from the acquisition location selecting section 38, the response/request executing section 35 transmits again, to the another device selected by the acquisition location selecting section 38, the request message to which the media segment numbers are incremented (S723).

Note that, it is possible to execute, in Embodiment 4, switching with use of not a media segment unit but a movie fragment unit, in the same manner as Embodiment 3. In addition, in this case, it is possible to carry out a switching process in the same manner as Embodiment 3.

### Example 4]

The following description further deals details of Embodiment 4 more specifically with use of Example 4 shown in Fig. 33. Example 4 shows an example of an operation of the content distribution system 1c which instructs a content playing device serving, which is the client 4g, to acquire a content from one of pieces of address information included in a content storage location list or a content storage server list. Fig. 33 is a view showing an example of an operation sequence of the content distribution system 1c of Example 4. Note that a process identical to a process of Embodiment 3 has the same number as that of the process shown in Fig. 24.

Example 4 is made on a premise that a content 1 having a format shown in Fig. 21 is stored in each of content storage sections 5a, 5b, and 5c, and the content storage sections 52, 5b, and 5c are identical to each other in how to divide the content 1 into media segments. Further, the content 1 has been already cached in (i) a cache storage section 6a, (ii) a cache storage section 6c, and (iii) a client storage section 8h.

Further, a server 2a creates a content storage location list in such a manner that priorities are added to a plurality of pieces of address information, on the basis of times and dates, included in content-storage-location information. Furthermore, in Example 4, when a process shown in Fig. 32 is started, (i) transmission logs 51 through 53 shown in Fig. 25 have been already stored in a transmission log storage section 12, and (ii) pieces (61 through 63) of content-storage-location information shown in Fig. 26 have been already stored in a content-storage-location information storage section 13.

Moreover, one session is defined as a sequence starting from a time at which the content playing device transmits a request message and ending a time at which the content playing device receives a response message in response to the request message thus transmitted.

As shown in Fig. 33, in session 810, the client 4g transmits, to the server 2a, a request message which requests transmission of the content 1 (request 811). The server 2a receives the request 811, and the response executing section 15 instructs the acquisition location specifying section 18 to specify a plurality of devices as a device from which the content 1 is acquired. On receipt of the instruction, the acquisition location specifying section 18 checks content-storage-location information stored in the content-storage-location information storage section 13 (process 812). The acquisition location specifying section 18 checks whether or not there is a content storage server list on the basis of the content-storage-location information. In a case where there is no content storage server list, the acquisition location specifying section 18 checks (i) whether or not a server 2b has the content 1 and (ii) whether or not a server 2c has the content 1 (process 813). Here, the acquisition location specifying section 18 can execute such checking by (i) transmitting a request for a header of the content 1 to each of the servers 2, and (ii) checking a response received from each of the servers 2, for example (a request 814 transmitted to the server 2c and a response 816 received from the server 2c, in Fig. 33 and a request 815 transmitted to the server 2c and a response 817 received from the server 2c in Fig. 33).

Here, the content-storage-location information storage section 13 indicates that a proxy 3a, a proxy 3c, and a client 4f are associated with the content 1, i.e., the content 1 is stored in the proxy 3a, the prosy 3c, and the client 4f. Accordingly, on the basis of the times and dates, included in the content-storage-location information, the acquisition location specifying section 18 adds a first priority, a second priority, and a third priority to the proxy 3a, the client 4f, and the proxy 3c, respectively, so as to create a content storage location list which includes address information of the proxy 3a, the client 4f, and the proxy 3c, and to which the priorities are added.

In addition, on the basis of responses in process 813 (the responses 815 and 817), the acquisition location specifying section 18 creates a content storage server list. According to the present example, a response from the server 2b has been received earlier than a response from the server 2c, so that the server 2b has a first priority and the server 2c has a second priority. The acquisition location specifying section 18 creates the content storage server list which includes address information of the servers 2b and 2c, and also address information of the server 2a itself, and to which the priorities are added (process 818).

Here, how to set a priority of the server 2a can be determined arbitrarily. For example, it is possible to cause the server 2a to have the highest priority for all cases (a higher priority than those of the other servers 2). Further, it is possible to have such a setting that (i) in a case where a response speed of the server 2b or a response speed of the server 2c is faster than a certain threshold, the server 2a has a lower priority than that of the server 2b or 2c, and (ii) the response speed of the server 2b or the response speed of the server 2c is slower than the certain threshold, the server 2a has a higher priority than that of the server 2b or 2c. Furthermore, it is possible to have such a setting that, in a case where a process load of the server 2a is larger than a predetermined threshold, the server 2a has a lower priority than those of the other servers 2.

The response executing section 15 selects one (having the highest priority) of the pieces of the address information included in the content storage location list or the content storage server list, created by the acquisition location specifying section 18, in accordance with the priorities thus set. Then, the response executing section 15 transmits, to the client 4g, a response message for acquiring the content thus requested from a relaying device or a server 2 located at an address indicated by the one of the pieces of the address information thus selected (response 819).

Here, the response executing section 15 determines which one of the content storage location list and the content storage server list is preferentially used to selecting one of the pieces of the address information. That is, the response executing section 15 determines whether the client 4g acquires the content from a relaying device or from a server 2.

How to select preferentially one of the content storage location list and the content storage server list can be arbitrarily determined. For example, the response executing section 15 can select the content storage location list (or the content storage server list) preferentially on the basis of a setting of a default. Then, in a case where the content storage location list (or the content storage server list) thus selected cannot be used, the response executing section 15 selects the content storage server list (or the content storage location list), for example.

Further, the response executing section 15 can execute the selection in such a manner that (i) in a case where a time and date of the content-storage-location information including one (having the highest priority) of the pieces of the address information, included in the content storage location list, is a recent time and date (within a predetermined time period), the content storage location list is selected preferentially, and (ii) in a case where the time and date is an old time and date (before the predetermined time period), the content storage server list is selected preferentially. Furthermore, the response executing section 15 can execute the selection in such a manner that, in a case where, under a condition that there is no content-storage-location information, one of the pieces of the address information included in the content storage location list is determined (i) in accordance with a default or (ii) randomly, the content storage server list is selected preferentially.

In the present example, in a case where there is the content storage location list, the response executing section 15 selects the content storage location list preferentially.

Note that, in the present example, acquisition of the content from the server 2a is basically the same as acquisition of the content with use of a relaying device (that is, if the content is acquired with use of the relaying device the content, an address of the device from which the content is acquired is identical to an address of the server 2a). In other words, substantially the same process (the same process as a process of Embodiment 3) is carried out for both (i) a case where the response executing section 15 selects the content storage location list, and (ii) a case where the response executing section 15 selects the content storage server list, and then selects the server 2a from the content storage server list. Moreover, in a case where (i) the response executing section 15 selects the content storage server list, and then selects the server 2b or the server c from the content storage server list, and (ii) the server b or the server c thus selected receives the request for the content from the client 4g, the server b or the server c identifies a predetermined relaying device and instructs the client 4g to acquire the content from the relaying device thus identified, in the same manner as Embodiment 3.

That is, in a case where the relaying device is used ((i) in a case where the content storage location list is selected, and (ii) in a case where the content storage server list is selected and then the server 2a is selected from the content storage server list), the response executing section 15 first instructs the client 4g to acquire the content from the proxy 3a. If it is impossible to acquire the content from the proxy 3a, or a speed at which the content is acquired from the proxy 3a speed is slow, then, the response executing section 15 instructs the client 4g to execute acquisition of the content from the client 4f (if impossible, then acquisition of the content from the proxy 3c). On the other hand, in a case where another server 2 is used, the response executing section 15 instructs the client 4g to execute the acquisition of the content from the server 2b (if impossible, then acquisition of the content from the server 2c).

Then, the response executing section 15 creates a transmission log on the basis of the response message thus transmitted, and adds the transmission log thus created to the transmission log storage section 12 (process 820).

On receipt of the response 819, the acquisition location selecting section 38 of the client 4g selects the proxy 3a having the highest priority, as a candidate for the device from which the content is acquired, on the basis of the instruction received from the server 2a (process 830). Then, the acquisition location selecting section 38 instructs the response/request executing section 35 to acquire the content 1 from the proxy 3a.

In a case where the proxy 3a or another client (client 4f) is selected as the device from which the content is acquired, a process (session 840, process 850, process 860, and session 870) is the same as a process (session 330, process 340, process 350, and session 360 shown in Fig. 24) of Embodiment 3, and therefore explanations of these are omitted here for the sake of simple explanation.

Note that, in a case where a server 2 is selected, the content is acquired from the server 2 in the same manner as a general acquisition process with use of HTTP.

Further, in Example 3, the client status determining section 36 notifies the relaying device specifying section 16 of the delay information per movie fragment, whereas, in Example 4, the client status determining section 36 notifies the acquisition location specifying section 18 of the delay information. On receipt of such a notification, the acquisition location specifying section 18 executes again selection of the device from which the content is acquired, in the same manner as the relaying device specifying section 16.

As described above, in Embodiment 4, a content playing device receives, from a server 2, (i) a content storage location list including address information of a plurality of relaying devices and (ii) a content storage server list including address information of a plurality of servers. Then, the content playing device acquires a content from (i) a relaying device located at an address indicated by one of pieces of the address information included in the content storage location list or (ii) a server 2 located at an address indicated by one of pieces of the address information included in the content storage server list. Then, in a case where there is a delay in acquisition of the content, the content playing device switches the device from which the content is acquired to (i) another relaying device located at an address indicated by another one of the pieces of the address information included in the content storage location list or (ii) another server 2 located at an address indicated by another one of the pieces of the address information included in the content storage server list. Accordingly, it becomes possible to distribute a load of a network (particularly, a network between the content playing device and a relaying device, and a network between the content playing device and a server 2) efficiently even in terms of time. It becomes therefore possible for the content distribution system 1c to execute control more finely. As a result, it becomes possible to maintain higher service quality for a larger number of content playing devices.

Further, Embodiment 4 shows the example in which the content playing device receives, from the server 2a, (i) the content storage location list including the address information of the plurality of relaying devices and (ii) the content storage server list including the address information of the plurality of servers. Note, however, that the content playing device can receive, from the server 2a, only the content storage server list including the address information of the plurality of servers. Similarly, the server 2a can notify the content playing device of only the content storage server list including address information of other servers 2 each having the content thus requested.

### HTTP message in Example 4]

Next, the following description deals with details of the response 819 used in the operation sequence shown in Fig. 33. Note that request 811 and other requests, and responses are the same as those in Example 3, and therefore explanations of these are omitted here for the sake of simple explanation.

### HTTP message in response 819]

The following description deals with an HTTP message in response 819 with reference to Fig. 34.

### (Response R3210 instructing which one of devices content is acquired from)

(a) of Fig. 34 shows an HTTP message corresponding to the response 819, which (i) is transmitted from the server 2a to the client 4g and (ii) instructs the client 4g which one of the devices the client 4g acquires the content from. As shown in (a) of Fig. 34, the HTTP message includes a response line and a header.

The response line shown in (a) of Fig. 34 is such that information instructing the use of a relaying device is described in a format of "a status number and a message".

Further, the header shown in (a) of Fig. 34 includes a "Location" header which designates the relaying device to be used. In other words, the HTTP message shown in Fig. 34 is a response which instructs to request the content 1 with use of the relaying device designated by the following "Location" header. In the example shown in Fig. 34, address information "http://example-proxy1.com", indicating an address of the proxy 3a, is described in the "Location" header. With the arrangement, the client 4g, which has received the response, can obtain the address information of the relaying device (proxy 3a) to which the client 4g transmits the request for the content 1.

Further, the header shown in (a) of Fig. 34 includes an "X-Alternative-Proxy-List" header indicating address information of other relaying devices, each of which possesses the content 1. In the "X-Alternative-Proxy-List" header, the address information "http://example-client2.com, http://example-proxy3.com", indicating addresses of other relaying devices (here, a client 4h and a proxy 3c), are described. With the arrangement, the relaying devices each (possibly) possessing the content 1, other than the relaying device designated by the "Location" header, are presented to the client 4g. As a result, the client 4g can select, as the relaying device from which the content 1 is acquired, one of the relaying devices located at the addresses indicated by (i) the address information included in the "Location" header and (ii) the address information included in the "X-Alternative-Proxy-List" header. Note that, "X" in a title of the header indicates that the header is newly defined in Embodiment 4.

Further, the header shown in (a) of Fig. 34 includes an "X-Alternative-Server-List" header indicating address information of other servers, each of which possesses the content 1. In the "X-Alternative-Server-List" header, address information "http://svr2.example.com, http://srv3.example.com" indicating addresses of other servers (here, the server 2b and the server 2c), each of which (possibly) possesses the content 1, is described. With the arrangement, the client 4g, which has received the response, can not only execute such selection that the content is acquired via the relaying device included in the "Location" header or in the "X-Alternative-Proxy-List" header but also execute such selection that the content 1 is acquired from the server 2 described in the "X-Alternative-Server-List".

Note that, "X" in a title of the header shows that the header is newly defined in Embodiment 4.

The HTTP message shown in (a) of Fig. 34 is such an HTTP message that the server 2a requests the client 4g to access the content with use of the relaying device. Meanwhile, (b) of Fig. 34 shows an example of a message instructing the client 4g to access another server 2 without using any relaying device.

In (b) of Fig. 34, information which instructs the client 4g to make an access with use of another URI is described in a format of "status number (space) message".

Further, the header includes a "Location" header indicating another URI. The message shown in (b) of Fig. 34 instructs the client 4g to request the content 1 with use of the URI.

Furthermore, in the same manner as (a) of Fig. 34, the header includes an "X-Alternative-Server-List" header, in which other servers 2 which can be used are described.

### <Embodiment 5>

Embodiment 4 deals with the example in which the content playing device is notified of, with use of the HTTP message, information on each of the servers 2, from which the content can be acquired.

Embodiment 5 of the present invention deals with an example in which information on servers 2, each of which can supply a content, is notified with use of meta data related to the content.

In Embodiment 5, the meta data of the content is described with use of a markup language MPD (Media Presentation Description) proposed in DASH (Dynamic Adaptive Streaming over HTTP) with which standardization has been currently executed. The MPD is meta data related to a moving image content, and is such that information, such as an address of a media segment and a video bit rate of a media segment, is defined for each of predetermined time periods. In Embodiment 5, meta data of a content is referred to as "MPD data".

An arrangement of Embodiment 5 is identical to that of Embodiment 4 illustrated in Fig. 29, and therefore is explained below with reference to Fig. 29. More specifically, a server 2a illustrated in Fig. 29 prepares MPD data which is meta data of the content. In the MPD data, not only information related to a moving image content, such as an encoding method and a bit rate, but also address information of the servers 2, each of which can supply the content, and address information used to acquire a media segment are described. Before playing the content, a client 4g acquires and analyzes the MPD data, so as to select one of a plurality of servers 2 described in the MPD data.

In addition, the MPD data, which is the meta data of the content, employs a format with which an external resource can be referred to. By taking advantage of the format, even if a condition of a network or a condition of a server changes during a time period from a time that the MPD data is created to a time that the content is actually played with use of the MPD data, it is possible to (i) reflect such a change and therefore (ii) distribute a load. Further, by setting timing at which the external resource is referred to so that the external resource is referred to at short intervals, it becomes possible to (i) reflect changes in condition more finely and therefore to (ii) execute control more finely.

### Outline of content distribution system 1c]

The arrangement of Embodiment 5 is identical to the arrangement of Embodiment 4 of the subject application, illustrated in Fig. 29. Functionally, (i) the server 2a of Embodiment 5 is different from the server 2a of Embodiment 4 in that the server 2a of Embodiment 5 prepares MPD data which is meta data of the content supplied from the server 2a, and (ii) the client 4g of Embodiment 5 is different from the client 4g of Embodiment 4 in that the client 4g of Embodiment 5 acquires, from the MPD data, information of a server to which the client 4g make an access, to play the content.

Specifically, a response executing section (managing means) 15 manages (i) a content and (ii) meta data (MPD data which is meta data of the content) including (a) content-storage-location information in which content identification information for specifying the content and addresses of other content distributing devices, each having the content, are associated with each other, or (b) a storage location address (external resource) indicating a location of the content-storage-location information.

In a case where the content is stored in a content storage section 5, the response executing section 15 basically creates MPD data of the content, and, if necessary, updates the MPD data thus created. Further, the response executing section 15 creates an external resource on receipt of a request for creation of the external resource.

Moreover, the response executing section (request determining means) 15 determines whether the request described above is a request for the content or a request for the meta data.

Further, in a case where the response executing section 15 determines that the request is the request for the content, the response executing section 15 transmits the content thus requested to a device which is a source of the request. On the other hand, in a case where the response executing section 15 determines that the request is the request for the meta data, the response executing section 15 transmits the meta data thus requested to the device which is the source of the request.

The response executing section 15 can determine which one of the request for the content, the request for the meta data, and a request for the content-storage-location information with use of a storage location address, the request described above is.

In a case where the response executing section 15 determines that the request is the request for the content-storage-location information with use of the storage location address (external resource), the response executing section 15 transmits, to the device which is the source of the request, the content-storage-location information whose location is indicated by the storage location address.

Further, the acquisition location specifying section 18 (i) transmits, to each of the predetermined other content distributing devices, an inquiry as to whether or not each of the predetermined other content distributing devices has a predetermined content, and (ii) acquires addresses of other content distributing devices, each making, in response to the inquiry, a response that the content distributing device has the predetermined content, among the predetermined other content distributing devices.

Furthermore, the acquisition location specifying section 18 (i) creates content-storage-location information by causing the addresses of other content distributing devices each having the predetermined content and content identification information for specifying the predetermined content to be associated with each other, and (ii) stores the content-storage-location information thus created in a content-storage-location information storage section (storage section) 13.

Moreover, the acquisition location specifying section (update determining means) 18 determines whether to update the content-storage-location information stored in the content-storage-location information storage section 13.

Further, in a case where (i) the response executing section 15 determines that the request is the request for the content-storage-location information with use of the storage location address, and (ii) the acquisition location specifying section 18 determines that it is necessary to update the content-storage-location information whose location is indicated by the storage location address, the acquisition location specifying section 18 (i) makes the inquiry described above, (ii) acquires the addresses described above, and (iii) creates the content-storage-location information on the basis of the addresses thus acquired. Then, the response executing section 15 transmits the content-storage-location information to the device which is the source of the request.

Furthermore, in a case where (i) the response executing section 15 determines that the request is the request for the content-storage-location information with use of the storage location address, and (ii) the acquisition location specifying section 18 determines that it is unnecessary to update the content-storage-location information whose location is indicated by the storage location address, the response executing section 15 transmits, to the device which is the source of the request, the content-storage-location information whose location is indicated by the storage location address.

Moreover, the meta data can include a plurality of storage location addresses each indicative of a location of content-storage-location information which is set for each of units into which the content is divided at predetermined time intervals.

Further, the content can include a plurality of media segments, and each of the units of the content, into which the content is divided at the predetermined time intervals, can include at least one media segment.

Furthermore, the meta data can include (i) a content storage server list including a plurality of pieces of the content-storage-location information or (ii) a storage location address indicating a location of the content storage server list.

Moreover, the client 4 serving as the content playing device (i) transmits the request for the meta data to the server 2, (ii) receives the meta data as a response to the request for the meta data, and (iii) acquires the content in accordance with the meta data thus received.

Further, in a case where (i) a response/request executing section (content acquiring means) 35 receives the content storage server list included in the meta data thus received, or (ii) the response/request executing section (content acquiring means) 35 transmits the request for the content-storage-location information with use of the storage location address which is included in the meta data thus received, and, as a response to the request, receives the content storage server list, the response/request executing section 35 acquires the content from another content distributing device located at an address indicated by one of the pieces of the content-storage-location information included in the content storage server list thus received.

Moreover, in a case where a receiving speed at which the response/request executing section 35 receives the content is slower than a predetermined receiving speed, the acquisition location selecting section (acquisition location changing means) 38 switches the server 2 (e.g., the server 2b) from which the content is acquired to another server 2 (e.g., the server 2c) located at another address included in the content storage server list.

### Content meta data: MPD data]

Each of Figs. 35, 36, and 38 shows an example of how the MPD data, which is the meta data of the content used in Embodiment 5, is described. Fig. 35 is an example in which an external resource is not referred to. The content is fragmented by a predetermined unit, and is, for transmission, media-segmented, in the same manner as Embodiment 3. In (a) of Fig. 35, "content1/0.mp4", "content1/1.mp4", and the like indicate media segments of the content 1, for example. In the example shown in (a) of Fig. 35, the content 1 is divided into 12 media segments.

The MPD data is data of a markup language format, and employs "MPD" as a route element. A value of an attribute "minBufferTime" of an MPD start tag indicates an initial buffering time period which is necessary to play a video smoothly. A value of an attribute "type" indicates a default value of an attribute "type" of a "Representation" tag (described later). That is, a value of the attribute "type" indicates whether a representation whose attribute "type" is not designated in the "Representation" tag is on-demand streaming delivery or live streaming delivery. Further, an attribute "mediaPresentationDuration" indicates a playing time period of the content. In the present example, the playing time period of the content is described as being 120 seconds.

"Period", which is a sub-element of "MPD", indicates that information related to a video to be played within a certain time period (period) is described in a range between a corresponding Period start tag and a corresponding Period end tag. An attribute "id" of the Period start tag is information for specifying each Period included in the content provided with use of the MPD, and a unique value is set to each Period.

"Group", which is a sub-element of "Period", indicates that at least one sub-element "Representation" described in the range between a Group start tag and a Group end tag belongs to the same representation group.

That is, "Group" indicates that only one representation is selected, and media segments (target data to be played) of the only one representation are played in a corresponding time period. Note that, representations belonging to the same group might be different from each other in play quality such as an image size, a frame rate, and a bit rate, but are identical to each other in the content to be played. For example, in the example shown in (b) of Fig. 35, two representations (the content 1 and the content 2) are described. In this case, it is possible to play the content by selecting either one of the two representations.

Further, in (a) of Fig. 35, an attribute "mimeType" of the Group start tag indicates, for example, a sort of codec used in media segments constituting the representation. Furthermore, an attribute "lang" indicates a language of the representation belonging to the Group.

Moreover, in the range between the Group start tag and the Group end tag, a sub-element "SegmentInfoDefault" is described. The "SegmentInfoDefault" is such that common information, which is shared by all the representations in the range between the Group start tag and the Group end tag, is described. In the present example, the "SegmentInfoDefault" element further includes, as a sub-element, a "BaseURL" element. In a range between a Base URL start tag and a Base URL end tag, a common URL is described. With use of such a URL and the following URL information of the representations, it is possible to determine a device to be referred. As shown in (a) of Fig. 35, it is possible to describe a plurality of Base URLs.

The representations constituting the Group are described with use of "Representation" tag. An attribute "bandwidth" of a Representation start tag, shown in (a) of Fig. 35, indicates a bit rate of the representation.

In a range between a Representation start tag and a Representation end tag, a sub-element "Segment" is used to indicate that there is media segment information. An URL from which a media segment belonging to the representation is acquired is described with use of an attribute "sourceURL" of a start tag of a sub-element "Url" of the Segment tag. These Urls are described for corresponding media segments. Note that, in a case where there is a common part between these Urls, it is possible to describe the Urls with use of the BaseURL tag described above.

In the example shown in Fig. 35, the BaseURL tag is used, and a Url of each media segment has no description indicating a host. Accordingly, a Url of a media segment is created by using information indicated by the BaseURL tag. That is, an access to a first media segment is made with use of a Url created as "http://srv2.example.com/content1/0.mp4" which is obtained with use of (i) the BaseURL tag "http://srv2.example.com/" and (ii) the Ur1 tag "content1/0.mp4".

As described above, in a case where a client acquires each media segment, a Url of each media segment is created and acquired, on the basis of an analysis result of MPD data.

Next, the following description deals with how to refer to an external resource with use of the MPD data, with reference to Figs. 36 through 38.

Details of the present example are explained with use of the example shown in (a) of Fig. 35, which example employs one representation.

As described above, in the MPD data shown in (a) of Fig. 35, address information of a server in which a corresponding media segment is stored is described with use of the BaseURL tag. Here, there are a plurality of BasURL tags. That is, the client can select one of the plurality of Base URL tags depending on a condition, so as to acquire the media segment under an optimum condition.

However, generally, the MPD data is created when the content is stored in the server 2. For this reason, even if information on an optimum server is collected and described at a time that the MPD data is created, it is highly possible that a network status or information on such an optimum server might have been changed at a time that the content is actually accessed with use of the MPD data. Further, even if, for example, a server which works at a higher speed than the above server is added to deliver the content after the MPD data is created, it is impossible to use such a high-speed server unless the MPD data thus created is recreated.

In view of this, a function of a link to an external resource of the MPD is used. Fig. 36 shows an example of such an MPD data. In Fig. 36, a description of "xlink" is used as the attribute of the Group start tag, in place of the server information (information described with use of the BaseURL tag) described with use of the Group tag in (a) of Fig. 35, the description of each representation, the description of each of the media segments (information described with use of the Representation tag) constituting the representation, and the like. The xlink is a function of referring to an external resource. In a case where data including the description of the xlink is analyzed, it is possible to execute the analysis by acquiring and taking in the external resource linked by the xlink. As shown in Fig. 36, a URL of an external resource linked by an attribute "xlink:href" is described. The attribute "xlink:actuate" is such that at what stage the external resource indicated by "xlink:href" is acquired is described. The "xlink:actuate" is classified into "onRequest", with which the external resource is acquired if necessary, and "onLoad" with which the external resource is acquired at the same time as acquisition of the MPD data. In the present example, the "onRequest", with which the external resource is acquired if necessary, is used.

Fig. 37 is a view showing an example of data of an external resource (http://example.com/content1/resource 1.xml). The MPD data shown in Fig. 36 takes in the external resource shown in Fig. 37 with use of the xlink, and becomes MPD data which is identical to the MPD data shown in (a) of Fig. 35.

Further, in the present example, in order to execute control more finely, the MPD data is divided into short Periods with use of the Period tag described above, and each of the Periods takes in the external resource with use of the xlink. The MPD data shown in (a) of Fig. 35 and the external resource shown in Fig. 37 are such that the content is described with use of one Period. Accordingly, even if the external resource is taken in, it is merely possible to reflect a condition obtained at a time that the content is started to be played. That is, in a case where the content is a long-time content, there might be a case where, even if a certain server is selected as the optimum server at the time that the content is started to be played, the certain server thus selected might not be the optimum server anymore during a time period in which the content is played, due to a change in a condition of the network or a change in a condition of the certain server or conditions of other servers. Moreover, in a case where a server which is the most appropriate server at a final phase of acquisition of the content (i) has not been selected at a time that the content is started to be played and (ii) has not been described as the external resource, it is impossible to select the server.

In view of this, (a) of Fig. 38 shows an example in which the MPD data is divided into a plurality of Periods, and an external resource is taken in with use of the xlink in each of the plurality of Periods. (b) through (d) of Fig. 38 show examples of the external resource thus taken in.

Each of the external resources shown in (b) through (d) of Fig. 38 has four media segments. In the present example, one media segment equals 10 seconds. That is, one Period in the MPD data shown in (a) of Fig. 38 equals 40 seconds, and an external resource is taken in per acquisition of 40-second data.

With the arrangement in which the server information included in the MPD data is provided as an external resource, it is possible to create and provide an external resource in response to a request received from the client, which external resource (i) has not been created in advance and (ii) reflects a condition of a distribution system or a network at a time that the client makes a request.

Further, in the present example, by setting a Period to be short, it becomes possible to reflect the condition of the network or the conditions of the servers finely. With the arrangement, it is possible to provide information in accordance with a condition at a time that MPD data is used, even if timing that the MPD data, which is meta data of a content, is created, and timing that the MPD data is used, are different from each other.

### Process carried out by each device]

Next, the following description deals with processes carried out by the server 2 and the client 4, with reference to Figs. 39 and 40. A process carried out by proxies 3a, 3b, and 3c of Embodiment 5 is identical to a process of Embodiment 3, and therefore an explanation of the process is omitted here for the sake of simple explanation.

### Process carried out by server 2]

First, the following description deals with a process carried out by the server 2a in accordance with Embodiment 5, with reference to Fig. 39. Fig. 39 is a flowchart showing an example of the process carried out by the server 2a. A process which is identical to a process of Embodiment 4 of the present invention has the same sign as that of the process of Embodiment 4.

The response executing section 15 is ready to receive a request message from the client 4. The response executing section 15 receives the request message from the client 4 via the server communication section 11 (S901).

On receipt of the request message, the server 2 determines which one of a request for a content, a request for xlink data, and a request for MPD data (which is meta data of the content) the request message thus received is (S902, S903, S904). In a case where it is determined that the request message is the request for the meta data of the content (YES in S904), the server 2 reads out designated MPD data from the content storage section 5 (S905), and transmits the MPD data to a device which is a source of the request (S906).

In a case where it is determined that the request message is the request for acquisition of external resource data with use of the xlink (YES in S903), the response executing section 15 instructs the acquisition location specifying section 18 to specify a plurality of servers as a server from which the content is acquired by the content playing device. On receipt of such an instruction from the response executing section 15, the acquisition location specifying section 18 reads out content-storage-location information from the content-storage-location information storage section 13 (S603).

The acquisition location specifying section 18 creates a content storage server list on the basis of the content-storage-location information (S701). The acquisition location specifying section 18 determines whether or not the content storage server list could be created (S702). In a case where (i) the content-storage-location information could not be read out or it was determined that the content-storage-location information stored in the content-storage-location information storage section 13 was old information, for example, and, as a result, (ii) the content storage server list could not be created, the acquisition location specifying section 18 instructs the response executing section 15 to update the content-storage-location information. On receipt of the instruction to update the content-storage-location information, the response executing section 15 transmits, to each of other servers 2 connected to the network, an inquiry as to whether or not each of the other servers 2 has the content thus requested (S703).

The response executing section 15 notifies the acquisition location specifying section 18 of a result of a response received from each of the other servers 2. On the basis of the result of the response thus notified, the acquisition location specifying section 18 requests the content-storage-location information storage section 13 to update the content-storage-location information, so that the content-storage-location information storage section 13 updates the content-storage-location information (S704). Then, the acquisition location specifying section 18 creates the content storage server list again (S705).

The response executing section 15 creates external resource data which instructs the client 4 to acquire the content thus requested from one of the servers 2 each being located at an address indicated by a corresponding one of pieces of address information included in the content storage server list created by the acquisition location specifying section 18 (S907). Then, the response executing section 15 transmits the external resource data to the content playing device (S908).

Meanwhile, in a case where it is determined that the request is the request for the content (YES in S902), the server 2 transmits the content to the source of the request. A process carried out here is identical to a process of a server 2 in accordance with Embodiment 3 (S606 through S610 shown in Fig. 22), and therefore an explanation of the process is omitted here for the sake of simple explanation.

In a case where the request is not the request for the content, the request for the xlink data, or the request for the MPD data (NO in S904), the server 2 carries out a process corresponding to the request thus received. For example, in a case where the server 2 receives a GET request for data of a web page including a link to the content, or a HEAD request for a file size of the content, a time stamp of a file, or the like, the server 2 carries out a process corresponding to such a request.

### Process carried out by client 4 serving as content playing device]

Next, the following description deals with a process carried out by the client 4 serving as the content playing device, with reference to Fig. 40. Fig. 40 is a flowchart showing an example of the process carried out by the client 4 serving as the content playing device.

The response/request executing section 35 transmits, to the server 2, a request message which requests transmission of MPD data corresponding to a content (S921). The response/request executing section 35 receives, as a response to the request message, a response message including the MPD data (S922). The meta data thus received is analyzed by the response/request executing section 35 so that a content to be played is determined (S923).

Next, the response/request executing section 35 acquires an address of the content (media segment) to be played, on the basis of a result of the analysis of the MPD data. Here, In order to acquire the address from the MPD meta data, the response/request executing section 35 determines whether or not data of an external resource indicated by an xlink of the MPD data is necessary (S924). In a case where it is determined that the data of the external resource is unnecessary to acquire the address (NO in S924), the response/request executing section 35 analyzes the MPD data, and extracts a content storage server list. On the basis of the content storage location list thus extracted, the acquisition location selecting section 38 selects one of pieces of address information of servers, in the same manner as a process of a client 4 in accordance with Embodiment 4 (S623 through S634 in Fig. 23) (S928). On the other hand, in a case where it is determined that the data of the external resource is necessary to acquire the address (YES in S924), the response/request executing section 35 requests the external resource data with use of the address of the external resource indicated by the xlink (S925).

On receipt of the external resource data thus requested from a server 2 indicated by the xlink (S926), the response/request executing section 35 replaces, with the external resource data thus received, a part of the MPD data thus received, which part is indicated by the xlink with which the external resource is acquired (S927). That is, the response/request executing section 35 updates the MPD data. Then, the response/request executing section 35 analyzes the MPD data, so as to extract the content storage server list. On the basis of the content storage location list thus extracted, the acquisition location selecting section 38 selects one of the pieces of the address information of the servers, in the same manner as the process of the client 4 in accordance with Embodiment 4 (S623 through S634 in Fig. 23) (S928). The response/request executing section 35 creates a request for a media segment on the basis of (i) address information of the server thus selected and (ii) address information of a media segment to be acquired. Then, the response/request executing section 35 transmits the request thus created to the server thus selected (S929). Then, the response/request executing section 35 receives media segments sequentially, in the same manner as Embodiment 4 (S724). Note that, a process for receiving media segments is identical to a process of Embodiment 4, and therefore is shown as "S724" in Fig. 40.

Here, in a case where the response/request executing section 35 receives all movie fragments, the response/request executing section 35 checks whether or not all the movie fragments of the content thus requested have been received (S632). In a case where the response/request executing section 35 confirms that all the movie fragments have been received (YES in S632), the process is finished.

On the other hand, in a case where the response/request executing section 35 determines that there is any movie fragment which has not been received (NO in S632), the response/request executing section 35 determines whether or not a next media segment can be acquired, by determining whether or not all media segments included in a corresponding Period, which is a target to be played in the MPD data, have been received (S930). In a case where all the media segments in the corresponding Period have been received (YES in S930), the response/request executing section 35 acquires a next Period (S931).

In a case where, in the corresponding Period, there is a media segment which can be received, the response/request executing section 35 starts to carry out a process of receiving such a media segment. Then, the client status determining section 36 determines whether or not a device from which such a media segment is received should be changed, in the same manner as Embodiment 3 (S725). A determination method here is identical to a determination method of Embodiment 4. Then, acquisition of media segments is continued.

### Example 5]

The following description deals with details of Embodiment 5 more specifically, with use of Example 5 shown in Fig. 41. Example 5 is a view showing an example operation sequence of a content distribution system 1 which instructs a client 4, which serves as a content playing device, to acquire a content from one of pieces of address information included in a content storage server list.

Note that, in Example 5, as a premise, a content 1 having a format shown in Fig. 21, MPD data which (i) is meta data of the content 1 and (ii) has a structure shown in Fig. 38, and external resource data are stored in a content storage section 5 of each of servers 2a, 2b, and 2c. Further, a media segment of the content 1, stored in each of the servers 2a, 2b, and 2c, has been similarly divided into a plurality of media segments.

Furthermore, as in Example 4, one session is defined as a process from a time that the content playing device transmits a request message to a time that the content playing device receives a response message in response to the request message.

As shown in Fig. 41, in a session 1010, a client 4g transmits, to the server 2a, a request message which requests transmission of MPD data of the content 1 (request 1011). In a case where the server 2a receives the request 1011, a response executing section 15 reads out the MPD data thus requested from the content storage section 5a (process 1012), and transmits a response message to the client 4g (response 1013).

In a case where the client 4g receives the response 1013, a response/request executing section 35 analyzes the MPD data thus received, so as to acquire a media segment (process 1020). Then, in a case where it is determined that the MPD data includes an instruction to refer to an external resource which is necessary to acquire, for example, location information of the media segment, the response/request executing section 35 acquires the external resource from the server 2.

Next, in a session 1030, the client 4g transmits a request message which requests external resource data (request 1031).

In a case where the server 2a receives the request 1031, a response executing section 15 instructs an acquisition location specifying section 18 to specify a plurality of servers 2. On receipt of such an instruction, the acquisition location specifying section 18 creates a storage location server list on the basis of content-storage-location information stored in a content-storage-location information storage section 13 (process 812). Here, in the content-storage-location information storage section 13, there is no server information related to a content 1 (process 813). Accordingly, in order to create the content storage server list, the acquisition location specifying section 18 transmits, to the servers 2b and 2c via the response executing section 15, an inquiry as to storage information of the content 1 (requests 814 and 815). Then, the acquisition location specifying section 18 obtains (i) responses (responses 816 and 817) to the inquiry and (ii) response times of such responses. Then, the acquisition location specifying section 18 creates the content storage server list on the basis of such results of the responses (process 818). Next, the response executing section 15 (i) acquires external resource data thus requested from a content storage section 5a, (ii) updates the external resource data with use of information of the content storage location list thus created, and (iii) creates external resource data thus requested (process 1032). Then, the response executing section 15 transmits, to the client 4g via a server communication section 11, a response message including the external resource data thus created (response 1033).

In a case where the client 4g receives the response 1033, the client 4g updates, with use of the external resource data, the MPD data which has been already received. The acquisition location selecting section 38 selects, with use of the MPD data thus updated, a server 2 as a device from which the content is acquired (process 1040). A selection method here can be such that a server 2 described at a top of the list is selected, or, if information (such as priorities) is added, a server 2 is selected on the basis of such information. Further, in a case where delay information is received from a client status determining section 36, it is possible to select, in consideration of such delay information, a server 2 as the device from which the content is acquired.

In a case where the server 2 (here, the server 2b) is selected, the response/request executing section 35 creates, on the basis of the MPD, a Url to acquire a media segment, and start acquiring media segments sequentially (session 1050). Details of a process of acquiring media segments are identical to those of a process of Example 3 (Example 4), and therefore are omitted here for the sake of simple explanation.

In a case where acquisition of all media segments in a Period of the MPD data is completed, the client 4g start acquiring media segments included in a next Period. In a case where acquisition of external resource data with use of an xlink is necessary to acquire media segment information, the client 4g transmits a request for an external resource to an address described in a corresponding xlink, in the same manner as the session 1030.

Then, both the client 4 and the server 2 repeat operations of sessions 1010 through 1050, so as to acquire all the media segments. Playing is thus completed.

### [Solution to Problem]

In order to achieve aforementioned object, a content distributing device for transmitting, in response to a request, a content to a source which has transmitted the request, in accordance with the present invention, includes: determining means for determining whether the source is (A) a relaying device for receiving the content thus requested and possessing and transferring the content to a content playing device or (B) the content playing device for playing the content thus requested; content transmitting means for transmitting, in response to the request, the content thus requested to the relaying device in a case where the determining means determines that the source is the relaying device; content-storage-location information generating means for generating content-storage-location information by associating (A) the content transmitted by the content transmitting means with (B) an address of the relaying device, which is a destination to which the content is transmitted, or an address of the content playing device, to which the content is transferred from the relaying device; and content-acquiring-location instructing means for transmitting, in response to the request, an instruction to the content playing device which is the source in a case where the determining means determines that the source is the content playing device, which instruction is to acquire the content from (i) a relaying device indicated by an address associated, in the content-storage-location information, with the content thus requested or (ii) a content playing device indicated by an address associated, in the content-storage-location information, with the content thus requested.

In order to achieve aforementioned object, a method for controlling content distributing device for transmitting, in response to a request, a content to a source which has transmitted the request, the method in accordance with the present invention includes: a determining step of determining whether the source is (A) a relaying device for receiving the content thus requested and possessing and transferring the content to a content playing device or (B) the content playing device for playing the content thus requested; a content transmitting step of transmitting, in response to the request, the content thus requested to the relaying device in a case where it is determined that, in the determining step, the source is the relaying device; a content-storage-location information generating step of generating content-storage-location information by associating (A) the content transmitted in the content transmitting step with (B) an address of the relaying device, which is a destination to which the content is transmitted, or an address of the content playing device, to which the content is transferred from the relaying device; and a content-acquiring-location instructing step of transmitting, in response to the request, an instruction to the content playing device which is the source in a case where it is determined that, in the content-storage-location information generating step, the source is the content playing device, which instruction is to acquire the content from (i) a relaying device indicated by an address associated, in the content-storage-location information, with the content thus requested or (ii) a content playing device indicated by an address associated, in the content-storage-location information, with the content thus requested.

According to the arrangement, upon receipt of the request from the relaying device, the content transmitting means transmits the content thus requested to the relaying device which is the source, and the content-storage-location information generating means generates the content-storage-location information by associating (A) the content transmitted from the content transmitting means with (B) the address of the relaying device, which is the destination of the content, or the address of the content playing device, to which the content is transferred from the relaying device. Further, upon receipt of the request from the content playing device, the content-acquiring-location instructing means transmits, to the content playing device which is the source, the instruction to acquire the content from (I) the relaying device indicated by an address associated, in the content-storage-location information, with the content thus requested or (II) the content playing device indicated by an address associated, in the content-storage-location information, with the content thus requested. Here, the relaying device and the content playing device possesses the content thus acquired, and the content-storage-location information is information indicative of which relaying device or content playing device possesses a content.

That is, the content distributing device associates (A) a content which has been transmitted before with (B) a relaying device or a content playing device which possesses the content, and, upon receipt of a request from a certain content playing device, the content distributing device does not directly transmit the content to the content playing device which is the source, but transmits, to the content playing device which is the source, an instruction to acquire the content from a relaying device or a content playing device which possesses the content thus requested. The content playing device, which is the source, acquires the content thus requested from a designated relaying device or a designated content playing device. Therefore, if the designated relaying device or the designated content playing device possesses the content, it is possible to complete transmission and reception of the content with use of only (A) the content playing device which is the source and (B) the designated relaying device or the designated content playing device. That is, the content playing device, which is the source, can acquire content, without carrying out a process for transmitting the content.

This makes it possible to reduce (A) a load of a network, which is used to transmit data from the content distributing device, and (B) a load of the content distributing device. Among processes carried out by the content distributing device, the relaying device, and the content playing device, a process for transmitting and receiving the content is a process which applies the heaviest load, and the process applies the heaviest load of the network among the content distributing device, the relaying device, and the content playing device. However, even if, for example, the number of content playing devices is increased and the number of requests to the content distributing devices is therefore increased, it is possible to reduce (A) an increase in load of the network which is used to transmit data from the content distributing device and (B) an increase in load of the content distributing device. Therefore, a large number of content playing devices can acquire contents, without increasing throughput of the content distributing device or capacity of the network.

It is preferable that the content distributing device in accordance with the present invention determine that, in a case where the request contains transmission path information indicative of a transmission path via which the request is transferred, the source is a relaying device and, in a case where the request does not contain the transmission path information, the source is a content playing device.

According to the arrangement, the determining means determines that, in a case where the request contains transmission path information indicative of a transmission path via which the request is transferred, the source is a relaying device and, in a case where the request does not contain the transmission path information, the source is a content playing device. That is, the determining means determines that the source is the content playing device in a case where the request is directly transmitted from the content playing device, whereas the content acquiring device is the relaying device in a case where the request is transmitted from a device other than the content playing device.

As described above, a content distributing device transmits a requested content to a relaying device in a case where the relaying device is a source which has transmitted a request, whereas, in a case where a content playing device is the source, the content distributing device transmits, to the content playing device, an instruction to acquire the requested content from a relaying device or a content playing device which possesses the requested content. The content distributing device can, therefore, always transmit the content to the content playing device via a designated relaying device or a designated content playing device. Accordingly, in a case where the designated relaying device or the designated content playing device possesses the content requested by the content playing device which is the source, the content distributing device does not need to transmit the content to the content playing device. This makes it possible to reduce (A) the load of the network which is used to transmit data from the content distributing device and (B) the load of the content distributing device.

Further, it is preferable that, in the content distributing device in accordance with the present invention, in a case where there are a plurality of pieces of the content-storage-location information which contain a plurality of addresses, respectively, each of the plurality of addresses being associated with the content thus requested, the content-acquiring-location instructing means (A) create a content-storage-location list containing the plurality of addresses included in the plurality of pieces of content-storage-location information and (B) transmit, to the content playing device which is the source, an instruction to acquire the content from (I) a relaying device indicated by an address contained in the content-storage-location list thus created or (II) a content playing device indicated by an address contained in the content-storage-location list thus created.

According to the arrangement, in a case where there are a plurality of pieces of the content-storage-location information which includes a plurality of addresses, respectively, each of the plurality of addresses being associated with the content thus requested, the content-acquiring-location instructing means (A) creates a content-storage-location list including the plurality of addresses included in the plurality of pieces of content-storage-location information and (B) transmit, to the content playing device which is the source, an instruction to acquire the content from (I) a relaying device indicated by an address included in the content-storage-location list thus created or (II) a content playing device indicated by an address included in the content-storage-location list thus created.

Accordingly, the content playing device, which is the source, selects (A) the relaying device indicated by the address included in the content-storage-location list or (B) the content playing device indicated by the address included in the content-storage-location list, and acquires the content from the relaying device or the content playing device thus selected. The content playing device, which is the source, can therefore acquire the content from an optimum device depending on a status of the content playing device and a status of the relaying device or the content playing device which possesses the content.

Further, it is preferable that, the content distributing device in the present invention, the content-storage-location information generating means generate the content-storage-location information by associating (A) the content which has been transmitted by the content transmitting means with (B) date and time when the content transmitting means has transmitted the content; and the content-acquiring-location instructing means create the content-storage-location list by (I) arranging the plurality of addresses, which are contained in the plurality of pieces of content-storage-location information, on the basis of the date and time associated with the content and (II) adding priorities to the plurality of addresses so that an address having later date and time gets a higher priority.

According to the arrangement, in the content-storage-location information, (A) a content, (B) a relaying device or a content playing device which possess the content, and (C) date and time when the content has been transmitted to the relaying device or the content playing device, i.e., date and time when the relaying device or the content playing device has held the content are associated with one another. Then the content-acquiring-location instructing means creates the content-storage-location list by (I) arranging the plurality of addresses, which are contained in the plurality of pieces of content-storage-location information, on the basis of date and time associated with the content identification information and (II) adding priorities to the plurality of addresses so that an address having later date and time gets a higher priority.

That is, the content-storage-location list includes the plurality of relaying devices or the plurality of content playing devices which possess the content requested by the content playing device which is the source, so that the plurality of relaying devices or the plurality of content playing devices are arranged in order of time, specifically, in order of time when each of the plurality of relaying devices or the plurality of content playing devices has possessed the content. The content playing device, which is the source, can therefore select, as, e.g., a device from which the content is acquired, a relaying device or a content playing device which has stored the content recently.

There may occur, for example, a case where a content transmitted by the content distributing device is updated to obtain a new data or a case where a relaying device or a content playing device which possesses content discards the content thus held or modifies the content. Even in such a case, the content playing device which is the source can surely acquire the content same as a content transmitted by the content distributing device by acquiring the content from a relaying device or a content playing device which contains the latest date and time when the relaying device or the content playing device has stored the content. This makes it possible to surely acquire the content same as a content transmitted by the content distributing device.

Further, it is preferable that a content distributing device in accordance with the present invention further include: distance calculating means for calculating, on the basis of an address contained in any one of the plurality of pieces of content-storage-location information, a physical or network-structural distance between (A) a relaying device or a content playing device which is indicated by the address and (B) the content playing device that the content-acquiring-location instructing means instructs on a device from which the content is acquired, wherein: the content-acquiring-location instructing means creates the content-storage-location list by (I) arranging the plurality of addresses, which are contained in the respective plurality of pieces of content-storage-location information, on the basis of distances calculated by the distance calculating means, and (II) adding priorities to the plurality of addresses so that an address having a shorter distance gets a higher priority.

According to the arrangement, the distance calculating means calculates, on the basis of an address contained in any one of the plurality of pieces of content-storage-location information, a physical or network-structural distance between (A) a relaying device or a content playing device which is indicated by the address and (B) the content playing device that the content-acquiring-location instructing means instructs on a device from which the content is acquired. Further, the content-acquiring-location instructing means creates the content-storage-location list by (I) arranging the plurality of addresses, which are contained in the respective plurality of pieces of content-storage-location information, on the basis of distances calculated by the distance calculating means, and (II) adding priorities to the plurality of addresses so that an address having a shorter distance gets a higher priority.

That is, the content-storage-location list includes a plurality of relaying devices and a plurality of content playing devices, each of which possesses the content requested by the content playing device which (i) is the source and (ii) the content-acquiring-location instructing means instructs on a device from which the content is acquired. The plurality of relaying devices and the plurality of content playing devices are listed so that a device having a shorter physical or network-structural distance gets a higher priority. Accordingly, with reference to the content-storage-location list, the content playing device which is the source can, for example, select, as a device from which the content is acquired, a relaying device or a content playing device which is the nearest from the content playing device itself. This makes it possible to reduce a load of the network in a case where the content playing device which is the source acquires the content.

Further, it is preferable that the content distributing device in accordance with the present invention further include transmission record creating means for creating a response transmission record by associating (A) a destination to which a response is transmitted in response to the request with (B) date and time when the response has been transmitted, wherein, with reference to response transmission record created by the transmission record creating means, the content-acquiring-location instructing means transmits, to the content playing device which is the source, an instruction to acquire the content from a relaying device or a content playing device which (i) is indicated by an address that the content-storage-location information associates with the content thus requested and (ii) is not included in the response transmission record within a predetermined time period

According to the arrangement, transmission record creating means makes a response transmission record by associating (A) a destination to which a response is transmitted in response to the request with (B) date and time when the response has been transmitted. Then, with reference to response transmission record created by the transmission record creating means, the content-acquiring-location instructing means transmits, to the content playing device which is the source, an instruction to acquire the content from a relaying device or a content playing device which (i) is indicated by an address that the content-storage-location information associates with the content thus requested and (ii) is not included in the response transmission record within a predetermined time period.

By referring the response transmission record, the content-acquiring-location instructing means can predict date and time when the relaying device or the content playing device, which has been the destination to which the response is transmitted, has received the response. To put it another way, the content-acquiring-location instructing means can predict date and time when the relaying device or the content playing device has carried out transmission of the request, reception of the response, or a process regarding the transmission of the request and the reception of the response. Accordingly, "a destination which is not included in the response transmission record within a predetermined time period" means a relaying device or a content playing device which is considered not to have carried out a process regarding the transmission and the reception of the response within the predetermined time period.

That is, the content-acquiring-location instructing means transmits, to the content playing device which is the source, an instruction to acquire the content thus requested from a relaying device or a content playing device which (i) possesses the content thus requested and (ii) is considered not to have carried out a process regarding transmission and reception of the content within a predetermined time period. Accordingly, when the content playing device, which is the source, acquires content from a relaying device or a content playing device designated by the content-acquiring-location instructing means, it is possible to reduce a delay caused by an increase in throughput of the relaying device or the content playing device from which the content is acquired.

Further, a content playing device in accordance with the present invention (A) transmits a request to the content distributing device, (B) receives a content-storage-location list in response to the request, and (C) acquires the content thus requested from a relaying device or a content playing device which is indicated by an address included in the content-storage-location list thus received, wherein, in a case where a receiving speed required to acquire the content is slower than a predetermined receiving speed, the relaying device or the content playing device, from which the content is acquired, is changed to a relaying device or a content playing device which is indicated by another address included in the content-storage-location list.

According to the arrangement, the content playing device selects one of a relaying device and a content playing device which is indicated by an address included in the content-storage-location list thus received. In a case where a receiving speed required to acquire the content is slower than a predetermined receiving speed when the content playing device acquires the content thus requested from the relaying device or the content playing device thus selected, the content playing device changes the relaying device or the content playing device thus selected to a relaying device or a content playing device which is indicated by another address included in the content-storage-location list.

The content playing device can, therefore, keep a receiving speed required to acquire content faster than a predetermined receiving speed, and can stably acquire the content without causing a huge delay.

The delay in acquiring of content may be caused by, for example, the following reasons: an increase in throughput of a relaying device or a content playing device from which the content is acquired; or a deterioration in communication status of a network between (i) the content playing device and (ii) the relaying device or the content playing device from which the content is acquired. The content playing device changes, due to the delay, the relaying device or the content playing device, from which the content is acquired, to another relaying device or another content playing device, so that it is possible to effectively use resources for (i) the relaying device or the content playing device from which the content is acquired and (ii) a network between a content playing device for acquiring the content and the relaying device or the content playing device from which the content is acquired.

A content playing device in accordance with the present invention (A) transmits a request to the content distributing device, (B) receives the content-storage-location list in response to the request, and (C) acquires a requested content from a relaying device or a content playing device indicated by an address which is the highest on the content-storage-location list thus received, and, in a case where a receiving speed required to acquire the content is slower than a predetermined receiving speed, the content playing device changes a relaying device or a content playing device, from which the requested content is to be acquired, to a relaying device or a content playing device indicated by an address which is the second highest on the content-storage-location list.

According to the arrangement, the content playing device selects a relaying device or a content playing device which is indicated by an address which is the highest on the content-storage-location list thus received. In a case where a receiving speed required to acquire the content is slower than a predetermined receiving speed when the content playing device acquires the content thus requested from the relaying device or the content playing device thus selected, the content playing device changes the relaying device or the content playing device thus selected, from which the requested content is to be acquired, to a relaying device or a content playing device indicated by another address which is the second highest on the content-storage-location list.

The content playing device can, therefore, keep a receiving speed required to acquire content faster than a predetermined receiving speed, and can stably acquire the content without causing a huge delay.

Further, in a case where priorities are assign to each of relaying devices and content playing devices on the basis of date and time when each relaying device or content playing device has stored the content, the content playing device for acquiring the content can acquire the content from a relaying device or a content playing device which has the highest possibility to possess the content same as that transmitted by the content distributing device. It is therefore possible to quickly and surely acquire the content same as that transmitted by the content distributing device. Meanwhile, in a case where priorities are assigned to each of relaying devices and content playing devices on the basis of a distance between each relaying device or content playing device, from which the content is acquired, and the content playing device for acquiring the content, the content playing device acquires the content from a relaying device or a content playing device having a shortest distance with respect to the content playing device for acquiring the content. It is therefore possible to stably acquire the content while reducing a load of a network.

Further, a content distributing system in accordance with the present invention includes: the content distributing device; a relaying device for requesting the content distributing device to transmit a content, possessing the content thus requested, and transferring the content thus requested to a content playing device; and a content playing device for requesting the content distributing device to transmit a content and acquiring the content thus requested from a device designated by the content distributing device.

According to the arrangement, the content distributing system has an effect same as that of the content distributing device.

Further, a content distributing device for transmitting, in response to a request, a content to a source which has transmitted the request, in accordance with the present invention, includes: determining means for determining whether the source is (A) a relaying device for receiving the content thus requested and possessing and transferring the content to a content playing device or (B) the content playing device for playing the content thus requested; content-storage-location information acquiring means for acquiring, in response to the request, an address of another content distributing device possessing the content thus requested, among predetermined other content distributing devices, in a case where the determining means determines that the source is a content playing device; and content-acquiring-location instructing means for transmitting, to the content playing device which is the source, an instruction to acquire the content from the another content distributing device which is indicated by the address acquired by the content-storage-location information acquiring means.

Further, a method for controlling a content distributing device for transmitting, in response to a request, a content to a source which has transmitted the request, the method in accordance with the present invention, includes: a determining step of determining whether the source is (A) a relaying device for receiving the content thus requested and possessing and transferring the content to a content playing device or (B) the content playing device for playing the content thus requested; a content-storage-location information acquiring step of acquiring, in response to the request, an address of another content distributing device including the content thus requested, among content distributing devices connected to the content distributing device, in a case where it is determined that, in the determining step, the source is the content playing device; and a content-acquiring-location instructing step of transmitting, to the content playing device which is the source, an instruction to acquire the content from the another content distributing device which is indicated by the address acquired in the content-storage-location information acquiring step.

According to the arrangement, the determining means determines whether a source which has transmitted a request is a relaying device or a content playing device, and, in a case where the determining means determines that the source is a content playing device, the content-storage-location information acquiring means acquires, in response to the request, an address of another content distributing device including the content thus requested, among predetermined content distributing devices. Then, the content-acquiring-location instructing means transmits, to the content playing device which is the source, an instruction to acquire the content from the another content distributing device which is indicated by the address acquired by the content-storage-location information acquiring means.

That is, in a case where the content distributing device receives a request from a content playing device, the content distributing device does not directly transmit a content to the content playing device which is a source which has transmitted the request, but transmits, to the content playing device which is the source, an instruction to acquire the content from another content distributing device which possesses the content thus requested. The content playing device, which is the source, acquires the content thus requested from the designated another content distributing device. That is, the content distributing device, has received the request from the content playing device, can acquire content, without carrying out a process for transmitting the content.

In a case where a load of a network which is used to transmit data from the content distributing device received the request from the content playing device and a load of the content distributing device are relatively large, the content distributing device causes another content distributing device to acquire the content. This makes it possible to distribute the load of the network which is used to transmit data from the content distributing device and the load of the content distributing device.

Further, it is preferable that, in a content distributing device in accordance with the present invention, the content-storage-location information acquiring means transmits, to the predetermined other content distributing devices, an inquiry as to whether or not the predetermined other content distributing devices include the content thus requested, so as to acquire the address of the another content distributing device that has responded, to the inquiry, that the content distributing device possesses the content thus requested.

According to the arrangement, the content-storage-location information acquiring means transmits, to the predetermined other content distributing devices, an inquiry as to whether or not the predetermined other content distributing devices include the content thus requested, so as to acquire the address of the another content distributing device that has responded, to the inquiry, that the content distributing device possesses the content thus requested.

The content-acquiring-location instructing means transmits, to the content playing device, an instruction to acquire the content on the basis of the address acquired by the content-storage-location information acquiring means having carrying out the inquiry. This makes it possible to transmits, to the content playing device, the instruction to acquire the content on the basis of highly accurate (correct) information. The content playing device can therefore surely acquire the content thus requested.

Further, it is preferable that the content distributing device in accordance with the present invention further include content-storage-location information generating means for (A) generating content-storage-location information by associating (i) the address of the another content distributing device including the content, which address has been acquired by the content-storage-location information acquiring means, with (ii) the content identification information indicative of the content and (B) causing a storage section to store the content-storage-location information, wherein the content-storage-location information acquiring means (I) reads out the content-storage-location information from the storage section, and (II) acquires the address, associated with the content identification information, from the content-storage-location information in a case where the content-storage-location information thus read out contains the content identification information indicative of the content thus requested, or transmits the inquiry to thereby acquire the address of the another content distributing device possessing the content thus requested in a case where the content-storage-location information thus read out does not contain the content identification information indicative of the content thus requested.

According to the arrangement, content-storage-location information generating means (A) generates content-storage-location information by associating (i) the address of the another content distributing device including the content, which address has been acquired by the content-storage-location information acquiring means, with (ii) the content identification information indicative of the content and (B) causing a storage section to store the content-storage-location information. Then, the content-storage-location information acquiring means (I) reads out the content-storage-location information from the storage section, and (II) acquires the address associated with the content identification information in a case where the content-storage-location information thus read out contains the content identification information indicative of the content thus requested, or transmits the inquiry to thereby acquire the address of the another content distributing device possessing the content thus requested in a case where the content-storage-location information thus read out does not contain the content identification information indicative of the content thus requested.

That is, in a case where the content-storage-location information acquiring means acquires the address of the another content distributing device including the content thus requested, the content-storage-location information acquiring means refers the content-storage-location information stored in the storage section. In a case where the storage section stores the content-storage-location information including the content identification information indicative of the content thus requested, i.e., in a case where the content-storage-location information acquiring means has acquired before an address of another content distributing device including the content, the content-storage-location information acquiring means acquires the address from the content-storage-location information stored in the storage section.

Meanwhile, in a case where the content-storage-location information acquiring means refers the content-storage-location information stored in the storage section and the storage section does not store the content-storage-location information including the content identification information indicative of the content thus requested, i.e., in a case where the content-storage-location information acquiring means has never acquired an address of another content distributing device including the content, the content-storage-location information acquiring means transmits the inquiry, so as to acquire an address of another content distributing device including the content thus requested.

It is predicted that another content distributing device, indicated by an address included in the content-storage-location information stored in the storage section, would include the content indicated by the content identification information corresponding to the address.

It is therefore possible to acquire the address of the another content distributing device including the content thus requested by carrying out a simple process, i.e., by using the address which has been acquired before. This makes it possible to reduce a process load of the content distributing device.

Further, it is preferable that, in the content distributing device in accordance with the present invention, the content-storage-location information acquiring means (i) acquire a plurality of addresses included in a plurality of content distributing devices, respectively, each of the plurality of content distributing devices including the content thus requested, and (ii) create a content storage server list including the plurality of addresses thus acquired and content identification information indicative of the content; and the content-acquiring-location instructing means transmits, to the content playing device which is the source, an instruction to acquire the content from the content distributing device indicated by the address included in the content storage server list created by the content-storage-location information acquiring means.

According to the arrangement, the content-storage-location information acquiring means (i) acquires a plurality of addresses included in a plurality of content distributing devices, respectively, each of the plurality of content distributing devices including the content thus requested, and (ii) creates a content storage server list including the plurality of addresses thus acquired and content identification information indicative of the content; and the content-acquiring-location instructing means transmits, to the content playing device which is the source, an instruction to acquire the content from the content distributing device indicated by the address included in the content storage server list created by the content-storage-location information acquiring means.

That is, the content playing device can acquire the content thus requested from one of the other content distributing devices. This makes it possible to distribute the load of the network which is used to transmit data from the content distributing device and the load of the content distributing device.

Further, a content playing device for (A) transmitting a request to the content distributing device, (B) receiving the content storage server list in response to the request, and (C) acquiring a requested content from another content distributing device indicated by one of a plurality of addresses included in the content storage server list thus received, the content playing device in accordance with the present invention, includes acquiring location changing means for, in a case where a receiving speed required to acquire the content is slower than a predetermined receiving speed, changing the another content distributing device, from which the requested content is to be acquired, to another content distributing device indicated by another address, which is different from the one of the plurality of addresses, included in the content storage server list.

According to the arrangement, the content playing device selects another content distributing device indicated by one of the plurality of addresses included in the content storage server list thus received. In a case where a receiving speed required to acquire the content is slower than a predetermined receiving speed when the content playing device acquires the content thus requested from the another content distributing device thus selected, the content playing device changes the another content distributing device, from which the requested content is to be acquired, to a still another content distributing device indicated by another address, which is different from the one of the plurality of addresses, included in the content storage server list.

The content playing device can, therefore, keep a receiving speed required to acquire content faster than a predetermined receiving speed, and can stably acquire the content without causing a huge delay.

The delay in acquiring of content may be caused by, for example, the following reasons: an increase in throughput of a content distributing device from which the content is acquired; or a deterioration in communication status of a network between the content playing device and the content distributing device from which the content is acquired. The content playing device changes, due to the delay, the content distributing device, from which the content is acquired, to another content distributing device which is different from the content distributing device, so that it is possible to effectively use resources for (i) the content distributing device from which the content is acquired and (ii) a network between a content playing device for acquiring the content and the content distributing device from which the content is acquired.

Further, a content distributing system in accordance with the present invention includes the content distributing device, a relaying device for requesting the content distributing device to transmit a content, possessing the content thus requested, and transferring the content thus requested to a content playing device; and the content playing device for requesting the content distributing device to transmit the content, and acquiring the content thus requested from a device designated by the content distributing device.

According to the arrangement, the content distributing system has an effect same as that of the content distributing device.

Further, the content distributing device for transmitting, in response to a request, data to a source which has transmitted the request, the content distributing device in accordance with the present invention includes: managing means for managing (A) content and (B) meta data of the content, the meta data containing (i) content-storage-location information in which content identification information for specifying the content and an address of another content distributing device including the content are associated with each other or (ii) a storage-location address indicative of a location of the content-storage-location information; request determining means for determining whether the request is a content request or a meta data request; and transmitting means for transmitting the content thus requested to the source in a case where the request determining means determines that the request is the content request, and for transmitting the meta data thus requested to the source in a case where the request determining means determines that the request is the meta data request.

Further, a method for controlling a content distributing device for transmitting, in response to a request, data to a source which has transmitted the request, the method managing (A) content and (B) meta data of the content, the meta data containing (i) content-storage-location information in which content identification information for specifying the content and an address of another content distributing device including the content are associated with each other or (ii) a storage-location address indicative of a location of the content-storage-location information, the method in accordance with the present invention includes a request determining step of determining whether the request is a content request or a meta data request; and a transmitting step of transmitting the content thus requested to the source in a case where it is determined that, in the request determining step, the request is the content request, and of transmitting the meta data thus requested to the source in a case where it is determined that, in the request determining step, the request is the meta data request.

According to the arrangement, the managing means manages (A) content and (B) meta data of the content, the meta data containing (i) content-storage-location information in which content identification information for specifying the content and an address of another content distributing device including the content are associated with each other or (ii) a storage-location address indicative of a location of the content-storage-location information, and the request determining means determines whether the request is a content request or a meta data request, and the transmitting means transmits the content thus requested to the source in a case where the request determining means determines that the request is the content request, and for transmitting the meta data thus requested to the source in a case where the request determining means determines that the request is the meta data request.

That is, upon receipt of a content request from the content playing device, the content distributing device directly transmits the content to the content playing device which is the source. Meanwhile, upon receipt of a meta data request from the content playing device, the content distributing device does not directly transmit the content to the content playing device which is the source, but transmits, to the content playing device which is the source, an instruction to acquire the content from another content distributing device including the content thus requested. The content playing device which is the source acquires the content thus requested from a designated content distributing device. That is, in a case where the content playing device requests to acquire the content with use of meta data of the content, not the content distributing device which has received the meta data request, but the another content distributing carries out a process for transmitting the content. The content playing device, which is the source, can therefore acquire the content.

Therefore, in a case where (i) the content playing device requests to acquire a content with use of meta data of the content and (ii) a load of a network which is used to transmit data from the content distributing device which has received the request from the content playing device and a load of the content distributing device are relatively large, the content playing device acquires the content from another content distributing device. This makes it possible to distribute the load of the network which is used to transmit the data from the content distributing device and the load of the content distributing device.

It is preferable that, in the content distributing device in accordance with the present invention, the request determining means determine whether the request is the content request, the meta data request, or a content-storage-location information request including the storage-location address; and, in a case where the request determining means determines that the request is the content-storage-location information including the storage-location address, the transmitting means transmit, to a device which is the source, the content-storage-location information whose location is indicated by the storage-location address.

According to the arrangement, the request determining means determines whether the request is the content request, the meta data request, or a content-storage-location information request including the storage-location address; and, in a case where the request determining means determines that the request is the content-storage-location information including the storage-location address, the transmitting means transmits, to a device which is the source, the content-storage-location information whose location is indicated by the storage-location address.

Therefore, upon receipt of the meta data request from the content playing device, the content distributing device can send the content playing device with not only content-storage-location information indicative of a device from which the content corresponding to the meta data is acquired, but also content-storage-location information which indicates, when the content distributing device receives the content storage-location information request from the playing device, a device from which the content corresponding to the meta data is acquired. By, for example, transmitting the content-storage-location information request when the content is played, it is possible to know the another content playing device including the content can, therefore, know the another content distributing device including the content when the content is played.

Accordingly, the content distributing device can send the content playing device with highly accurate (correct) information, and the content playing device can reduce such an error that the content playing device cannot acquire a requested content from a device from which the content is acquired. This makes it possible to stably acquire the content.

Further, it is preferable that a content distributing device in accordance with the present invention further include: content-storage-location information acquiring means for transmitting, to predetermined other content distributing devices, an inquiry as to whether or not the predetermined other content distributing devices contain a predetermined content, and acquiring an address of a content distributing device that has responded, to the inquiry, that the content distributing device includes the predetermined content; content-storage-location information generating means for (A) generating content-storage-location information by associating (i) the address of the content distributing device including the predetermined content, which address has been acquired by the content-storage-location information acquiring means, with (ii) the content identification information for specifying the predetermined content and (B) causing a storage section to store the content-storage-location information; and update determining means for determining whether to update the content-storage-location information stored in the storage section, wherein, in a case where the request determining means determines that the request is the content-storage-location information request including the storage-location address and the update determining means determines to update the content-storage-location information whose location is indicated by the storage-location address, the content-storage-location information acquiring means transmits the inquiry to acquire the address, the content-storage-location information generating means generates the content-storage-location information based on the address, and the transmitting means transmits the content-storage-location information to a device which is the source, or, in a case where the request determining means determines that the request is the content-storage-location information request including the storage-location address and the update determining means determines not to update the content-storage-location information whose location is indicated by the storage-location address, the transmitting means transmits, to the device which is the source, the content-storage-location information whose location is indicated by the storage-location address.

According to the arrangement, the request determining means determines that the request is the content-storage-location information request including the storage-location address and the update determining means determines to update the content-storage-location information whose location is indicated by the storage-location address, the content-storage-location information acquiring means transmits the inquiry to acquire the address, the content-storage-location information generating means generates the content-storage-location information based on the address, and the transmitting means transmits the content-storage-location information to a device which is the source. Meanwhile, the request determining means determines that the request is the content-storage-location information request including the storage-location address and the update determining means determines not to update the content-storage-location information whose location is indicated by the storage-location address, the transmitting means transmits, to the device which is the source, the content-storage-location information whose location is indicated by the storage-location address.

That is, in a case where the update determining means determines not to update the content-storage-location information stored in the storage section when the content-storage-location information acquiring means acquires the address of the content distributing device including the requested content, the content-storage-location information acquiring means acquires the address from the content-storage-location information stored in the storage section. Meanwhile, in a case where the update determining means determines to update the content-storage-location information stored in the storage section, the content-storage-location information acquiring means transmits the inquiry to thereby acquire the address of the content distributing device including the content thus requested.

Here, "a case where the update determining means determines to update the content-storage-location information whose location is indicated by the storage-location address" means, for example, a case where the content-storage-location information stored in the storage section is old, or a case where the content-storage-location information including content identification information indicative of the requested content is not stored in the storage section, i.e., a case where the content-storage-location information acquiring means has never acquired before an address of a content distributing device including the content.

Therefore, in a case where the update determining means determines not to update the content-storage-location information stored in the storage section, the content-storage-location information acquiring means can acquire the address of the content distributing device including the required content by carrying out a simple process, i.e. by using the address which has been acquired before. This makes it possible to reduce the process load of the content distributing device.

Further, by updating content-storage-location information stored in the storage section, the content distributing device can send the content playing device with highly accurate (correct) information, and the content playing device can reduce such an error that the content playing device cannot acquire a requested content from a device from which the content is acquired. This makes it possible to stably acquire the content.

Further, it is preferable that, in the content distributing device in accordance with the present invention, the meta data can include a plurality of storage location addresses each indicative of a location of content-storage-location information which is set per unit into which the content is divided at a predetermined time interval.

According to the arrangement, the meta data can include a plurality of storage location addresses each indicative of a location of content-storage-location information which is set per unit into which the content is divided at a predetermined time interval. Therefore, the content distributing device can send, to the content playing device, pieces of content-storage-location information, each of which is sent per unit obtained by dividing the content by a predetermined time interval.

The content distributing device can therefore improve a degree of freedom of a device from which a content is acquired more than that of the content playing device. This makes it possible to distribute the load of the network which is used to transmit data from the content distributing device and the load of the content distributing device.

Further, it is preferable that, in the content distributing device in accordance with the present invention, the content include a plurality of media segments; and the content divided by the predetermined time interval include at least one media segment.

According to the arrangement, the content divided by the predetermined time interval includes at least one media segment. It is therefore possible to manage, per unit of a media segment, the degree of freedom of the device from which the content is acquired.

Further, it is preferable that, in the content distributing device in accordance with the present invention, the meta data include a content storage server list containing the plurality of pieces of content-storage-location information or a storage location address indicative of a location of the content storage server list.

According to the arrangement, the meta data includes a content storage server list including the plurality of pieces of content-storage-location information or a storage-location address indicative of the content storage server list. The content distributing device can therefore cause the content playing device to acquire one of the other content distributing devices which correspond to the meta data. This makes it possible to distribute the load of the network which is used to transmit data from the content distributing device and the load of the content distributing device.

Further, a content playing device for transmitting a meta data request to the content distributing device, receiving the meta data in response to the request, and acquiring the content in accordance with the meta data thus received, the content playing device in the present invention includes content acquiring means for acquiring the content from another content distributing device indicated by an address included in any one of the plurality of pieces of content-storage-location information contained in the content storage server list, when said content playing device receives the content storage server list included in the meta data thus received, or when said content playing device transmits a content-storage-location information request with use of a storage-location address included in the meta data thus received and receives, in response to the request, the content storage server list; and acquiring location changing means for, in a case where a receiving speed required to acquire the content of the content acquiring means is slower than a predetermined receiving speed, changing the another content distributing device, from which the content is to be acquired, to a still another content distributing device indicated by another address, which is different from the address, included in the content storage server list.

According to the arrangement, when the content playing device receives the content storage server list, the content acquiring means acquires, on the basis of the meta data thus received, the content from another content distributing device indicated by an address included in one of pieces of content-storage-location information included in the content storage server list thus received. In a case where a receiving speed required for the content acquiring means to acquire the content is slower than the predetermined receiving speed, the acquiring location changing means changes the another content distributing device, from which the content is to be acquired, to a still another content distributing device indicated by another address, which is different from the address, included in the content storage server list.

The content playing device can, therefore, keep a receiving speed required to acquire content faster than a predetermined receiving speed, and can stably acquire the content without causing a huge delay.

The delay in acquiring of content may be caused by, for example, the following reason: an increase in throughput of a content distributing device from which the content is acquired; or a deterioration in communication status of a network between the content playing device and the content distributing device from which the content is acquired. The content playing device changes, due to the delay, the content distributing device, from which the content is acquired, to another content distributing device which is different from the content distributing device, so that it is possible to effectively use resources for (i) the content distributing device from which the content is acquired and (ii) a network between a content playing device for acquiring the content and the content distributing device from which the content is acquired.

Further, a content distributing system in accordance with the present invention includes the content distributing device, a relaying device for requesting the content distributing device to transmit a content, possessing the content thus requested, and transferring the content thus requested to a content playing device, the content playing device for transmitting, to the content distributing device, a content request to request the content so as to acquire the content from the content distributing device, and for transmitting, to the content distributing device, a meta data request to request meta data of the content, receiving the meta data from the content distributing device, and acquiring, on the basis of the meta data thus received, the content corresponding to the meta data.

According to the arrangement, the content distributing system has an effect same as that of the content distributing device.

Note that the content distributing device may be achieved by a computer. In this case, the present invention encompasses a controlling program for realizing the content distributing device with use of computer by operating the computer as each means of the content distributing device and a computer readable recording medium in which the controlling program is stored.

### [Supplementary description]

The present invention is not limited to the description of the embodiments above, and can be modified in numerous ways by a skilled person as long as such modification falls within the scope of the claims. An embodiment derived from a proper combination of technical means disclosed in different embodiments is also encompassed in the technical scope of the present invention.

Each block of the server 2, the proxy 3, and the client 4, especially, the server controlling section 14, the proxy controlling section 22, and the client control section 32 can be configured by means of hardware logic or can alternatively be realized by software with use of a CPU (Central Processing Unit) as follows.

Specifically, the server 2, the proxy 3, and the client 4 each include: a CPU, such as an MPU, for executing commands of a program to realize each function; a ROM (Read Only Memory) which stores the program; a RAM (Random Access Memory) in which the program is developed in an executable format; and a storage device (recording medium), such as a memory, which stores the program and various kinds of data. Further, the object of the present invention can be also realized in such a manner that: recording media are provided to the server 2, the proxy 3, and the client 4, respectively, which recording media have stored program codes (execution mode program, intermediate code program, and source program) (serving as software for realizing the aforementioned functions) of control programs of the server 2, the proxy 3, and the client 4 so as to be readable by a computer; and the program codes stored in the recording medium are read out and carried out by the computer (or CPU or MPU).

Examples of the recording medium encompass: tapes such as a magnetic tape and a cassette tape; disks such as magnetic disks (e.g., a floppy (registered trademark) disk and a hard disk) and optical disks (e.g., a CD-ROM, an MO, an MD, a DVD, and a CD-R); cards such as an IC card (including a memory card) and an optical card; and semiconductor memories (e.g., a mask ROM, an EPROM, an EEPROM, and a flash ROM).

Further, the server 2, the proxy 3, and the client 4 may be configured to be connected to a communication network, and the program code may be supplied via the communication network. The communication network is not particularly limited, and examples of the communication network encompass the Internet, an intranet, an extranet, a LAN, an ISDN, a VAN, a CATV communication network, a virtual private network, a telephone network, a mobile communication network, and a satellite communication network. In addition, a transmission medium constituting the communication network is not particularly limited, and examples of the transmission medium encompass: wired transmission media such as IEEE1394, a USB, a power-line carrier, a cable TV line, a telephone line, and an ADSL; and wireless transmission media such as infrared rays (e.g., IrDA and a remote controller), Bluetooth (registered trademark), 802.11 wireless, an HDR, a cell-phone network, and a satellite line, and a digital terrestrial network. Note that the present invention may be also realized by a computer data signal which has the program codes specified with electronic transmission and is embedded in a carrier wave.

### Industrial Applicability

The present invention can be applied to a content distributing system for distributing a content to a client from a server in response to a request transmitted from the client for playing the content, and a content distributing device, a relaying device, and a content playing device for configuring the content distributing system.

### Reference Signs List

1, 1a, 1b, 1c content distributing system
2 server (content distributing device)
3 proxy (relaying device)
4 client (content playing device, relaying device) 15 response executing section (determining section, content transmitting means, content-acquiring-location instructing means, transmission record creating means, request determining section, transmitting means)
16 relaying device specifying section (content-acquiring-location instructing means, distance calculating means)
17 content-storage-location information generating section (content-storage-location information generating means)
18 acquiring location specifying section (content-storage-location information acquiring means, content-storage-location information generating means, update determining means)
35 response/ request executing section (content acquiring means)
37 relaying device selecting section (relaying device changing means)
38 acquiring location specifying section (acquiring location changing means)

## Claims

1. A content distributing device for transmitting, in response to a request, a content to a source which is a sender of the request,
the content distributing device comprising:
determining means for determining whether the source is (A) a relaying device for receiving the content thus requested and possessing and transferring the content to a content playing device or (B) the content playing device for playing the content thus requested;
content transmitting means for transmitting, in response to the request, the content thus requested to the relaying device in a case where the determining means determines that the source is a relaying device;
content-storage-location information generating means for generating content-storage-location information by associating (A) content identification information for specifying the content transmitted by the content transmitting means with (B) an address of the relaying device, which is a destination to which the content is to be transmitted, or an address of the content playing device, to which the content is to be transferred from the relaying device; and
content-acquiring-location instructing means for transmitting, in response to the request, an instruction to the content playing device which is the source in a case where the determining means determines that the source is a content playing device, which instruction is to acquire the content from (i) a relaying device indicated by an address that the content-storage-location information associates with the content identification information indicative of the content thus requested or (ii) a content playing device indicated by an address that the content-storage-location information associates with the content identification information indicative of the content thus requested.

2. The content distributing device as set forth in claim 1, wherein
the determining means determines that, in a case where the request contains transmission path information indicative of a transmission path via which the request is transferred, the source is a relaying device and, in a case where the request does not contain the transmission path information, the source is a content playing device.

3. The content distributing device as set forth in claim 1 or 2, wherein
in a case where there are a plurality of pieces of the content-storage-location information which include a plurality of addresses, respectively, each of the plurality of addresses being associated with the content identification information indicative of the content thus requested, the content-acquiring-location instructing means (A) creates a content-storage-location list including the plurality of addresses included in the plurality of pieces of content-storage-location information and (B) transmit, to the content playing device which is the source, an instruction to acquire the content from (I) a relaying device indicated by an address included in the content-storage-location list thus created or (II) a content playing device indicated by an address included in the content-storage-location list thus created.

4. The content distributing device as set forth in claim 3, wherein:
the content-storage-location information generating means generates the content-storage-location information by associating (A) the content identification information indicative of the content which has been transmitted by the content transmitting means with (B) date and time when the content transmitting means has transmitted the content; and
the content-acquiring-location instructing means creates the content-storage-location list by (I) arranging the plurality of addresses, which are contained in the plurality of pieces of content-storage-location information, on the basis of date and time associated with the content identification information and (II) adding priorities to the plurality of addresses so that an address having later date and time gets a higher priority.

5. A content distributing device as set forth in claim 3, further comprising:
distance calculating means for calculating, on the basis of an address included in any one of the plurality of pieces of content-storage-location information, a physical or network-structural distance between (A) a relaying device or a content playing device which is indicated by the address and (B) the content playing device that the content-acquiring-location instructing means instructs on a device from which the content is acquired, wherein:
the content-acquiring-location instructing means creates the content-storage-location list by (I) arranging the plurality of addresses, which are included in the respective plurality of pieces of content-storage-location information, on the basis of distances calculated by the distance calculating means, and (II) adding priorities to the plurality of addresses so that an address having a shorter distance gets a higher priority.

6. A content distributing device as set forth in any one of claims 1 through 5, further comprising:
transmission record creating means for creating a response transmission record by associating (A) a destination to which a response is transmitted in response to the request with (B) date and time when the response has been transmitted,
wherein, with reference to response transmission record created by the transmission record creating means, the content-acquiring-location instructing means transmits, to the content playing device which is the source, an instruction to acquire the content from a relaying device or a content playing device which (i) is indicated by an address that the content-storage-location information associates with the content thus requested and (ii) is not included in the response transmission record within a predetermined time period.

7. A content playing device for (A) transmitting a request to a content distributing device recited in claim 3, (B) receiving the content-storage-location list in response to the request, and (C) acquiring the content thus requested from a relaying device or a content playing device which is indicated by an address included in the content-storage-location list thus received,
wherein, in a case where a receiving speed required to acquire the content is slower than a predetermined receiving speed, the relaying device or the content playing device, from which the content is acquired, is changed to a relaying device or a content playing device which is indicated by another address included in the content-storage-location list.

8. A content playing device for (A) transmitting a request to a content distributing device recited in claim 4 or 5, (B) receiving the content-storage-location list in response to the request, and (C) acquiring a requested content from a relaying device or a content playing device indicated by an address which is the highest on the content-storage-location list thus received,
the content playing device comprising
relaying device changing means for, in a case where a receiving speed required to acquire the content is slower than a predetermined receiving speed, changing a relaying device or a content playing device, from which the requested content is to be acquired, to a relaying device or a content playing device indicated by an address which is the second highest on the content-storage-location list.

9. A content distributing system, comprising:
a content distributing device recited in any one of claims 1 through 6;
a relaying device for requesting the content distributing device to transmit a content, possessing the content thus requested, and transferring the content thus requested to a content playing device; and
a content playing device for requesting the content distributing device to transmit a content and acquiring the content thus requested from a device designated by the content distributing device.

10. A method for controlling content distributing device for transmitting, in response to a request, a content to a source which is a sender of the request,
the method comprising:
a determining step of determining whether the source is (A) a relaying device for receiving the content thus requested and possessing and transferring the content to a content playing device or (B) the content playing device for playing the content thus requested;
a content transmitting step of transmitting, in response to the request, the content thus requested to the relaying device in a case where it is determined that, in the determining step, the source is a relaying device;
a content-storage-location information generating step of generating content-storage-location information by associating (A) content identification information for indicating the content transmitted in the content transmitting step with (B) an address of the relaying device, which is a destination to which the content is to be transmitted, or an address of the content playing device, to which the content is to be transferred from the relaying device; and
a content-acquiring-location instructing step of transmitting, in response to the request, an instruction to the content playing device which is the source in a case where it is determined that, in the content-storage-location information generating step, the source is the content playing device, which instruction is to acquire the content from (i) a relaying device indicated by an address associated, in the content-storage-location information, with the content identification information indicative of the content thus requested or (ii) a content playing device indicated by an address associated, in the content-storage-location information, with the content identification information indicative of the content thus requested.

11. A content distributing device for transmitting, in response to a request, a content to a source which is a sender of the request,
the content distributing device comprising:
determining means for determining whether the source is (A) a relaying device for receiving the content thus requested and possessing and transferring the content to a content playing device or (B) the content playing device for playing the content thus requested;
content-storage-location information acquiring means for acquiring, in response to the request, an address of another content distributing device possessing the content thus requested, among predetermined other content distributing devices, in a case where the determining means determines that the source is a content playing device; and
content-acquiring-location instructing means for transmitting, to the content playing device which is the source, an instruction to acquire the content from the another content distributing device which is indicated by the address acquired by the content-storage-location information acquiring means.

12. The content distributing device as set forth in claim 11, wherein
the content-storage-location information acquiring means transmits, to the predetermined other content distributing devices, an inquiry as to whether or not the predetermined other content distributing devices include the content thus requested, so as to acquire the address of the another content distributing device that has responded, to the inquiry, that the content distributing device possesses the content thus requested.

13. A content distributing device as set forth in claim 12, further comprising
content-storage-location information generating means for (A) generating content-storage-location information by associating (i) the address of the another content distributing device including the content, which address has been acquired by the content-storage-location information acquiring means, with (ii) the content identification information indicative of the content and (B) causing a storage section to store the content-storage-location information, wherein
the content-storage-location information acquiring means (I) reads out the content-storage-location information from the storage section, and (II) acquires the address, associated with the content identification information, from the content-storage-location information in a case where the content-storage-location information thus read out contains the content identification information indicative of the content thus requested, or transmits the inquiry to thereby acquire the address of the another content distributing device possessing the content thus requested in a case where the content-storage-location information thus read out does not contain the content identification information indicative of the content thus requested.

14. The content distributing device as set forth in any one of claims 11 through 13, wherein:
the content-storage-location information acquiring means (i) acquires a plurality of addresses included in a plurality of content distributing devices, respectively, each of the plurality of content distributing devices including the content thus requested, and (ii) creates a content storage server list including the plurality of addresses thus acquired and content identification information indicative of the content; and
the content-acquiring-location instructing means transmits, to the content playing device which is the source, an instruction to acquire the content from the another content distributing device indicated by the address included in the content storage server list created by the content-storage-location information acquiring means.

15. A content playing device for (A) transmitting a request to a content distributing device recited in claim 14, (B) receiving the content storage server list in response to the request, and (C) acquiring a requested content from another content distributing device indicated by one of a plurality of addresses included in the content storage server list thus received,
the content playing device comprising
acquiring location changing means for, in a case where a receiving speed required to acquire the content is slower than a predetermined receiving speed, changing the another content distributing device, from which the requested content is to be acquired, to another content distributing device indicated by another address, which is different from the one of the plurality of addresses, included in the content storage server list.

16. A content distributing system, comprising:
a content distributing device recited in any one of claims 11 through 14,
a relaying device for requesting the content distributing device to transmit a content, possessing the content thus requested, and transferring the content thus requested to a content playing device; and
the content playing device for requesting the content distributing device to transmit the content, and acquiring the content thus requested from a device designated by the content distributing device.

17. A method for controlling a content distributing device for transmitting, in response to a request, a content to a source which is a sender of the request,
the method comprising:
a determining step of determining whether the source is (A) a relaying device for receiving the content thus requested and possessing and transferring the content to a content playing device or (B) the content playing device for playing the content thus requested;
a content-storage-location information acquiring step of acquiring, in response to the request, an address of another content distributing device including the content thus requested, among other content distributing devices connected to the content distributing device, in a case where it is determined that, in the determining step, the source is the content playing device; and
a content-acquiring-location instructing step of transmitting, to the content playing device which is the source, an instruction to acquire the content from the another content distributing device which is indicated by the address acquired in the content-storage-location information acquiring step.

18. A content distributing device for transmitting, in response to a request, data to a source which has transmitted the request,
the content distributing device comprising:
managing means for managing (A) content and (B) meta data of the content, the meta data containing (i) content-storage-location information in which content identification information for specifying the content and an address of another content distributing device including the content are associated with each other or (ii) a storage-location address indicative of a location of the content-storage-location information;
request determining means for determining whether the request is a content request or a meta data request; and
transmitting means for transmitting the content thus requested to the source in a case where the request determining means determines that the request is the content request, and for transmitting the meta data thus requested to the source in a case where the request determining means determines that the request is the meta data request.

19. The content distributing device as set forth in claim 18, wherein:
the request determining means determines whether the request is the content request, the meta data request, or a content-storage-location information request including the storage-location address; and
in a case where the request determining means determines that the request is the content-storage-location information including the storage-location address, the transmitting means transmits, to a device which is the source, the content-storage-location information whose location is indicated by the storage-location address.

20. A content distributing device as set forth in claim 19, further comprising:
content-storage-location information acquiring means for transmitting, to predetermined other content distributing devices, an inquiry as to whether or not the predetermined other content distributing devices includes a predetermined content, and acquiring an address of another content distributing device that has responded, to the inquiry, that the another content distributing device includes the predetermined content;
content-storage-location information generating means for (A) generating content-storage-location information by associating (i) the address of the another content distributing device including the predetermined content, which address has been acquired by the content-storage-location information acquiring means, with (ii) the content identification information for specifying the predetermined content and (B) causing a storage section to store the content-storage-location information; and
update determining means for determining whether to update the content-storage-location information stored in the storage section, wherein
in a case where the request determining means determines that the request is the content-storage-location information request including the storage-location address and the update determining means determines to update the content-storage-location information whose location is indicated by the storage-location address, the content-storage-location information acquiring means transmits the inquiry to acquire the address, the content-storage-location information generating means generates the content-storage-location information based on the address, and the transmitting means transmits the content-storage-location information to a device which is the source, or, in a case where the request determining means determines that the request is the content-storage-location information request including the storage-location address and the update determining means determines not to update the content-storage-location information whose location is indicated by the storage-location address, the transmitting means transmits, to the device which is the source, the content-storage-location information whose location is indicated by the storage-location address.

21. The content distributing device as set forth in claim 20, wherein
the meta data can include a plurality of storage location addresses each indicative of a location of content-storage-location information which is set per unit into which the content is divided at a predetermined time interval.

22. The content distributing device as set forth in claim 21, wherein:
the content includes a plurality of media segments; and
the content divided at a predetermined time interval includes at least one media segment.

23. The content distributing device as set forth in any one of claims 20 to 22, wherein
the meta data includes a content storage server list containing the plurality of pieces of content-storage-location information or a storage location address indicative of a location of the content storage server list.

24. A content playing device for transmitting a meta data request to a content distributing device recited in claim 23, receiving the meta data in response to the request, and acquiring the content in accordance with the meta data thus received,
the content playing device comprising
content acquiring means for acquiring the content from another content distributing device indicated by an address included in any one of the plurality of pieces of content-storage-location information contained in the content storage server list, when said content playing device receives the content storage server list included in the meta data thus received, or when said content playing device transmits a content-storage-location information request with use of a storage-location address included in the meta data thus received and receives, in response to the request, the content storage server list; and
acquiring location changing means for, in a case where a receiving speed required to acquire the content of the content acquiring means is slower than a predetermined receiving speed, changing the another content distributing device, from which the content is to be acquired, to a still another content distributing device indicated by another address, which is different from the address, included in the content storage server list.

25. A content distributing system, comprising:
a content distributing device recited in any one of claims 18 to 23,
a relaying device for requesting the content distributing device to transmit a content, possessing the content thus requested, and transferring the content thus requested to a content playing device,
the content playing device for transmitting, to the content distributing device, a content request to request the content so as to acquire the content from the content distributing device, and for transmitting, to the content distributing device, a meta data request to request meta data of the content, receiving the meta data from the content distributing device, and acquiring, on the basis of the meta data thus received, the content corresponding to the meta data.

26. A method for controlling a content distributing device for transmitting, in response to a request, data to a source which has transmitted the request, the method managing (A) content and (B) meta data of the content, the meta data containing (i) content-storage-location information in which content identification information for specifying the content and an address of another content distributing device including the content are associated with each other or (ii) a storage-location address indicative of a location of the content-storage-location information,
the method comprising
a request determining step of determining whether the request is a content request or a meta data request; and
a transmitting step of transmitting the content thus requested to the source in a case where it is determined that, in the request determining step, the request is the content request, and of transmitting the meta data thus requested to the source in a case where it is determined that, in the request determining step, the request is the meta data request.

27. A controlling program for causing a content distributing device recited in any one of claims 1 through 6, 11 through 14, and 18 through 23 to operate, the controlling program causing a computer to function as each means.

28. A computer readable recording medium in which a controlling program recited in claim 27 is recorded.
